# EUROPEAN PATENT SPECIFICATION

(11) **EP 3 985 576 B1**
(45) Date of publication and mention of the grant of the patent: **13.09.2023**
(21) Application number: 21208409.9
(22) Date of filing: 04.05.2016
(51) Int. Cl.: G06N 5/02, G06N 20/00, G06F 21/50, G06F 21/51, G06F 21/53, G06F 21/54, G06F 21/55, G06F 21/56, G06F 21/57, G06F 16/33, G06F 8/30, H04L 9/40

(54) **METHOD AND DEVICE FOR MANAGING SECURITY IN A COMPUTER NETWORK**
VERFAHREN UND VORRICHTUNG ZUR VERWALTUNG DER SICHERHEIT IN EINEM COMPUTERNETZWERK
PROCÉDÉ ET DISPOSITIF DE GESTION DE SÉCURITÉ DANS UN RÉSEAU INFORMATIQUE

(30) Priority: 04.05.2015 US 201562156884 P; 28.07.2015 US 201562198091 P; 18.08.2015 US 201562206675 P; 27.08.2015 US 201562210546 P; 18.09.2015 US 201562220914 P; 24.01.2016 US 201662286437 P; 11.02.2016 US 201662294258 P; 13.03.2016 US 201662307558 P; 16.04.2016 US 201662323657 P
(43) Date of publication of application: 20.04.2022
(62) Divisional of application: 16828168.1
(73) Proprietor: Hasan, Syed Kamran, Great Falls, VA 22066 (US)
(72) Inventor: Hasan, Syed Kamran, Great Falls, VA 22066 (US)
(74) Representative: Zacco Sweden AB

(56) References cited:
- US-B1- 7 424 742
- US-B1- 8 220 054

## Description

### CROSS REFERENCE TO RELATED APPLICATIONS

The present application claims priority on Provisional Application No. 62/156,884 filed on 04-MAY-2015, entitled Method and Device for Managing Security in a Computer Network; Provisional Application No. 62/198,091 filed on 28-JUL-2015, entitled Cyber Security Algorithm; Provisional Application No. 62/206,675 filed on 18-AUG-2015, entitled CYBER SECURITY SUB-ALGORITHMS; Provisional Application No. 62/210,546 fied on 27-AUG-2015, entitled CIPO based on Iterative Intelligence Growth and Iterative Evolution; Provisional Application No. 62/220,914 filed on 18-SEP-2015, entitled Cyber Security Suite Provisional Application No. 62/286,437 filed on 24-JAN-2016, entitled Clandestine Machine Intelligence Retribution through Covert Operations in Cyberspace; Provisional Application No. 62/294,258 filed on 11-FEB-2016, entitled Logically Inferred Zero-database A-priori Realtime Defense; Provisional Application No. 62/307,558 filed on 13-MAR-2016, entitled Critical Infrastructure Protection & Retribution (CIPR) through Cloud & Tiered Information Security (CTIS); Provisional Application No. 62/323,657 filed on 16-APR-2016, entitled Critical Thinking Memory & Perception (CTMP).

### FIELD OF THE INVENTION

The present invention is related to a framework for automating the manual process of cyber security alert or event verification and processing. More specifically, the present invention is related to a system to examine events/data methodically by separating into parts and studying their interrelations in order to perform corrective action.

### BACKGROUND OF THE INVENTION

According to Fire Eye, Inc.'s report, The Numbers Game: How Many Alerts is too Many to Handle, due to rapidly increasing number of security alerts, organizations have difficulty to manage and act on security alerts in a timely and effective manner. Even when alerts are caught and categorized correctly, the sheer volume is overwhelming. And when they're not responded to quickly, the consequences can be disastrous. The high volume of alerts requires a level of management that exceeds what most companies are realistically able to maintain. Security personnel at all levels face wading through data, false alarms and duplicate alerts. While security teams filter noisy data and cull alerts, too many still need to be addressed at the upper levels. Within the US, 37% of organizations face more than 50k alerts per month. The IT security specialists who respond are typically tasked with multiple security responsibilities, though, which makes missed alerts more likely. When analysts either don't have ample time to thoroughly review alerts due to overtasking, or are not specialists in alert investigation, costly mistakes result. Noise is a significant issue, with more than half of alerts being false positives. This number is likely even higher if the alerts have not been correlated and deduplicated, since more than one-third of them are redundant. All this adds up to a scenario where platforms are generating too much data that is simply ineffective. Worse, it's wasting precious hours to review it all. That review process is costly. Less than 60% of companies have a process to automatically ignore redundant alerts, which means they are manually responding to alerts that contain an actual malicious event less than half the time. Reviews of critical alerts are only the first step. Analysts then need to identify whether an alert is an actual attack, remediate any compromised systems and complete forensic investigations to mitigate damages. Any delay in the initial review time slows the entire process. Alerts must be accurately categorized for ultimate success. If a critical alert is labeled as low-priority and doesn't receive a quick response, it could prove disastrous. Too often, companies are simply trying to keep up rather than determining how to improve the process. If resources were reallocated, alert management could become nimble and efficient. Organizations need to consider alternatives including proactive testing, policy review, and new initiatives to better manage the alert process.

US 8776241 B2 to Zaitsev discloses an automatic analysis system of security related incidents in computer networks, which includes an event collection module, an event analysis module and a solution module. The event collection module obtains incident-related information from a plurality of client computers. The event analysis module reconstructs a chain of events causally related to the first incident and indicative of a root cause of the first incident based on the incident-related information. The solution module formulates a recommendation for use by the client computer. The recommendation is based on the chain of events, and includes corrective/preventive action particularized for responding to the first incident.

US 20060191007 A1 by Thielamay discloses An automated security monitoring and management framework which includes a central management center, a security posture module that gathers hardware and software information into a centralized database, an auditing module that polls an environment for known security weaknesses, a threat analysis module that obtains and processes security advisories, an executive dashboard module for viewing overall network security health, a risk analysis module that provides predefined metrics to analyze system risks, a trouble ticketing module for the storage and tracking of current and historic security problems, a resolution module that analyzes and resolves problems in the infrastructure, a correlation engine module that compares data and ensures uniformity in the environment; and an incident discovery module that identifies techniques used by unauthorized persons in attempting to compromise a system.

US 8457996 B2 to Winkler et al. discloses a Model-based business continuity management framework. A business process model handler determines a business process model including tasks arranged according to a directed graph. Some of the tasks are associated with requirements for executing the tasks. An information technology topology model handler determines an information technology topology model with connected resources used to perform at least some of the tasks. A behavior model generator determines behaviors of the resources from a behavior information library, and generates a behavior model in which the tasks and their respective requirements are connected to the resources and to their respective behaviors. A continuity analyzer provides a continuity analysis, based on the behavior model.

US 7921459 B2 to Houston et al. discloses a System and method for managing security events on a network. The system employs an event managing software module that collects security event data from security devices located in the monitored computing network. In processing the security event data, the event manager module can format the data and create manageable summaries of the data. The event manager also supports storage of the security event data and the results of any processing performed on the data. Security event data can be identified by the event manager for use in responding to a security event. US 8209759 B2 to Newton et al. discloses a Security incident manager, which includes events and network flows in the analysis of an attack. The raw events are reported by monitored devices and the incident manager may request network flows from various devices corresponding to a raw event. The manager then assigns a variable score to the severity, the relevance and the credibility of the event to determine its next processing steps. Those events that appear to be a likely and effective attack are classified as offenses.

US patent US8220054 is further prior art.

### BRIEF SUMMARY OF THE INVENTION

The invention is defined by the appended claims.

An objective of the present invention is to provide a network security framework that performs analyzing googol or googolplex of events & alerts per second in order to determine true incidents and subsequently performing triage on the true incidents based on varying incident type or threshold criteria in order to forward it to relevant/ authorized/assigned party for final handling and/or automated handling/performing of corrective action.

A security screening program is installed on each of the computing devices. The security screening program screens network traffic through the computing device to find a potential incident. When the security screening program finds a potential incident under given screening rules, the security screening program generates an alert. The second level module makes a feedback solution for modifying the screening rules if the potential incident is decided not to be an incident; and generates and sends a screening rules feedback report to the computing devices. The screening rules feedback report comprises the feedback solution for modifying the screening rules.

The first filtering criteria is false positive. The first tier module generates and sends a false positive report to the security screening programs of the computing devices, if the potential incident is decided a false positive. The false positive report comprises a solution for modifying the screening rules.

The first level module fills a predetermined incident evaluation form that describes the potential incident; and verifies the filled-in incident evaluation form under predetermined form verification rules. The predetermined incident evaluation form and the predetermined form verification rules are related to a category that is different per each of the assigned departments.

The security server of the present invention analyzes a security alert or event and performs triage (categorize, correlate, prioritize, assign events to someone (legal, HR, Privacy, Disclosure, Cyber Security, Policy, Operations, CSIRC, SOC, Inspector General, Security, etc.) for further investigation & response) based on the needs and requirements of various business or functional operating divisions of an enterprise/organization or performs corrective action based on the requirements of the aforementioned business or functional operating divisions of an enterprise/organization in order to remediate the security threat and provide/utilize available forensic information in order to mitigate damages.

The system of the present invention can be run on a device (i.e., server or another machine for smaller deployments) or it can be performed in a virtual (for many clients) or dedicated (for each individual client) cloud based environments in order to process hundreds of googol or googolplex of events & alerts per second.

KEY ATTRIBUTES OF THE INVENTION ARE AS FOLLOWS:
1) The system discovers what transpired in order to allow for immediate containment through analysis of the events & alerts.
2) The system reduces the time for forensic process to milliseconds, seconds & or minutes in order to understand the human element of the incident through automation in order to determine:
   a. What was done
   b. Why it was done
   c. Where did it happen
   d. When did it happen
   e. How did it happen
   f. Who did it
   g. Attribution related to the cyber security incident/attack
      i. Is it critical for the enterprise/organization/entity
      ii. Or just an individual or group of computer hackers having amusement (data is not of confidential nature, etc)
      iii. Other
3) The system decides How to contain any impact immediately & to address the vulnerabilities in order to prevent it from happening it again.

A security event is a change in the everyday operations of a network or information technology service, indicating that a security policy may have been violated or a security safeguard may have failed.

The first indication of an event may come from a software-defined alert or by end users notifying a help desk that network services have slowed down.

Computing devices include any Security Event Generator or Device: Router, Computer (laptop, PC, tablet, etc), Mobile device, etc.

Human incident verification analysis in the second tier module can be performed by human being or by the Security Event Analyzer hence automating the entire Security Event Analysis lifecycle from Event generation to Corrective Action in order to ensure accuracy, efficiency and effectiveness.

Key points of the present invention are as follows: (1) tiered approach to information analysis, (2) level of granularity within each tier, (3) department specific granularity, (4) automated analysis of the entire security event life cycle from event generation to corrective Action based on organization & each individual department (within the organization e.g., Inspector General, Legal, Finance, Privacy, Network Security, etc.) specific requirements & policies.

In order to achieve the objective, the present invention provides a computer security system processing a security event comprising a behavior module that comprises a plurality of sub-algorithms, wherein each sub-algorithm corresponds to a predetermined category, which is related to a predetermined security issue; and a combination module that provides a security analysis based on the output of the behavior module.

The the sub-algorithms are executed in parallel, and each of the sub-algorithms processes input and stores output. An information processing request is sent to at least one sub-algorithm, wherein each sub-algorithm processes data of the security event, wherein the result of each of sub-algorithms is stored in a database for the sub-algorithm.

The system further comprises a high confidence filter that filters results from the sub-algorithms that are above a pre-determined confidence level. A combination request is sent to the combination algorithm, wherein the combination algorithm combines two or more sub algorithms depending on the type of the combination request, wherein the combination algorithm selects result based on a predetermined criterion.

The system further comprises a categorization module that determines the category of the security event based on combination of policy and behavior, and a pattern matching module that filters out the security event based on behavior pattern of the security event, and wherein the categorization module that determines the category of the filtered event from the pattern matching module.

The behavior module is connected to a behavior database, wherein the behavior database stores metadata that comprise the plurality of categories. Each of the categories comprises a reference id, a first concept, a second concept, and an algorithm determined association index. The system further comprises a sanitation module that filters an incoming event based on a sanitation policy.

The present invention further provides a cyber security system comprising a conspiracy detection sub-algorithm, which checks background for multiple security events, and determines patterns and correlations between the security events; and an information type identifier sub-algorithm, which determines type of unknown data, and declares its confidence in the data type that it has chosen, and returns a failure flag if the confidence is lower than a predetermined level.

In the conspiracy detection sub-algorithm, the security event is parsed by the information type identifier sub-algorithm, which derives relevant attributes of the security event, wherein the attributes are checked by external policy and behavior interpretation to see whether the event passes the threshold for being processed.

The derived event attributes for the security event are stored in a specific DB, wherein all combinations for the derived event attributes are made, wherein the combinations are selected by pre-determined allowance rule, wherein the selected combinations are queried against the specific DB for predetermined similarity factors.

The predetermined similarity factors include having the same SSN and time of day of occurrence, including the same IP LAN subnet range and personal phone number and personal address, including the same domain name in different email addresses, and including a domain name and the IP address it is supposed to point to, to fight against ghost domain names. The results checked by the conspiracy detection sub-algorithm are notified to a management console.

The system further comprises a foreign entities management sub-algorithm, which upgrades or downgrades the severity of foreign threats based off of requests the foreign threats make to an isolated network of an enterprise, and receives third party information to augment its perception of foreign threats, and a user risk management sub-algorithm, which determines overall risk assessment for a user record based on predetermined risk factors.

In the foreign entities management sub-algorithm, a security event is parsed by the information type identifier sub-algorithm to derive network origin and user involved for the security event, wherein the network origin of the security event is checked against a security watch list, wherein if user info has been found in the security watch list, then the user is checked by the user risk assessment sub-algorithm. The check results are considered and aggregated based off of predetermined thresholds which are influenced by external policy and behavior, wherein the aggregated results are stored in a specific database.

In the information type identifier sub-algorithm, for the provided unknown data, bulk input is offered for parallelization purposes. The information type identifier sub-algorithm extracts attributes of the unknown data, including length, number, letter ratio and special characters. The extracted attributes are compared to DB data points, which are selected for comparison. Cache is checked first for comparisons. The information type identifier sub-algorithm processes the compared results for confidence levels. If the confidence level of the results is lower than a predetermined threshold, the results are cutoff, wherein the predetermined threshold can be dynamic. Pattern detection is performed to correlate type affinity with attribute makeup, wherein high confidence patterns are stored in the cache, wherein the DB does not contain calculated patterns but contains static correlations between type and attribute. The processed results are compiled to conform to API and the compiled results are output.

The system further comprises a media scanner sub-algorithm, which scans given media, and checks for illegal information transfer and inconsistent/suspicious behavior for the expected composition of such media. In the media scanner sub-algorithm, a media parse is performed to highlight suspected points of information in the given media, wherein the suspected points may be hidden in metadata, or in the raw format of the media, wherein the data and metadata of the media are scanned.

The suspected points of information are processed by the Information Type Identifier sub-algorithm, wherein user identities thus processes are passed to the User Risk Management sub-algorithm, wherein all other information is passed to a generic parser. The generic parser interacts with a Risk Objects DB to find risky associations that are in the file. If a risky association is found, the media is blocked from being transferred, a risk object is created, and the User Risk Management sub-algorithm is been notified of a relevant user's involvement with the security event. Processed results are combined and parsed to produce a decision of whether to block or allow the media.

The system further comprises a privilege isolation analysis sub-algorithm, which determines if a user or process is within their permitted privilege allocation, which is constantly invoked, and reports any confirmed privilege violations to a master process and a secondary process which double checks that the master process took action for the violations. In the privilege isolation analysis sub-algorithm, a user permission event is sent, a user ID token and requested location of access/modification is extracted by the information type identifier sub-algorithm and pushed to a thread manager. The thread manager comprises a location thread manager, which receives location information and invokes a location database for who is permitted to access/modify.

A location permission bank receives the location's permission requirements by Specific DB 2, and is queried by a thread that decides if certain locations should be blocked as a precaution due to a user security risk, wherein the threshold for the precaution level is determined via external policy and behavior. The thread manager comprises a user thread manager, which receives user information and invokes a user database for what locations are permitted to access/modify, and invokes the User Risk Management sub-algorithm to get risky locations that should be blocked for the user within a precautionary policy.

A user permission bank receives the user's permission attributes by Specific DB 1, and is queried by the location thread manager to see if the user is permitted to perform the requested action in this location. A permissions aggregator logically combines results by the location thread manager and the user thread manager, and outputs the combined result.

In the user risk management sub-algorithm, the predetermined risk factors include prior policy violations, excessive usage, and suspicious operations enacted. A user identification token is input, and an overall risk assessment percentage with a plurality of linked objects that are of risk interest is output, wherein the objects can be accessed independently via other sub-algorithms for further analysis. A risk object that is related to the user is input, wherein the user's association with the risk object is recorded. A user ID token is provided to generate a risk assessment report or to deposit a risk object reference, wherein a user's risk history is built with the deposited risk object references.

If a risk object reference is provided, then deposit is made in the database for future reference. If no risk object reference deposit is made, and the thread manager requests a report to be made, wherein a relevant user ID is looked up in a specific database to assess the user's risk history. Risk rates are retrieved from a specific DB, which gives a risk rating for risk objects, wherein using the risk rates and the retrieved risk objects, a final aggregate report is produced and pushed to output, wherein a comprehensive principal risk index is also pushed to output, for identifying a user's immediate risk factor.

The invention further provides a method for iterative intelligence growth comprising steps of receiving input of an initial ruleset; receiving input of a plurality of personality trait, wherein the personal trait defines reactionary characteristics that should be exercised upon security events; choosing a personal trait and assigning the personal trait to an evolution pathway; repeating the previous for other evolution pathways for all of the personality traits; and executing the evolution pathways, wherein each of the evolution pathways evolves a plurality of generations according to its given personality trait. The operation of each of the evolution pathways is virtually isolated from the operation of the other evolution pathways.

The personal traits comprise i) a realist trait that uses CPU time based on degree of correlation; ii) a unforgiving trait that uses CPU time based on whether there was a prior security incident for a given entity, which comprises an individual or a computer system; iii) an opportunistic trait that uses CPU time based on availability of a corrective action; or iv) a strict and precautious trait that uses CPU time based on little forgiveness or tolerance of assumption. The CPU time is measured in CPU cycles/second.

A monitoring and interaction system injects security events from an artificial security threat (AST) system into the evolution pathways, and relays security responses associated with the security events from a security behavior cloud, wherein if any one of the evolution pathways reaches an indefinite state of being unable to solve the given security problem, the execution of the evolution pathway is abandoned, wherein the personality trait of the abandoned evolution pathway is modified, wherein the modified personality trait is assigned to another evolution pathway and the security event of the abandoned evolution pathway is injected to the another evolution pathway, and wherein the another evolution pathway is executed, wherein the monitoring and interaction system outputs the performance of the evolution pathways, and receives input for modifying the personal trait.

A cross reference module analyzes a security system response for a given security event, decides whether a security system response is meaningful, pushes the security system response to a trait tagging module. The trait tagging module classifies the security system response according to personality types provided to the trait tagging module. A trait interaction module analyzes correlation among the personality traits, wherein the analysis result is passed to the security behavior cloud, wherein the security behavior cloud passes the analysis result to the monitoring and interaction system.

The invention further provides a cyber threat intelligence identification, integration and analysis system comprising an intelligent selector that receives two parent forms, wherein the parent forms represent abstract constructs of data, and merges the two parent forms into a hybrid form; a mode module that defines the type of an algorithm in which the system is being used, wherein the intelligent selector decides parts to merge based on the type of the algorithm; and a static criteria module that receives input of customization data for how forms should be merged. The customization data comprises ranking prioritizations, desired ratios of data, and data to direct merging which is dependent on the type of algorithm defined by the mode module.

The intelligent selector comprises a raw comparison module that performs raw comparison on the two parent forms based on the customization data provided by the static criteria module, wherein the raw comparison module outputs regarding changes and non-changes, wherein the intelligent selector ranks importance of the changes based on the customization data, wherein the changes and the non-changes are merged into a hybrid form based on the customization data of the static criteria and the type of the algorithm of the mode, wherein the merging comprises adjusting ratio distribution of data, importance of data, and relationship between data, wherein a ratio mode, a priority mode, and a style mode are preset in the system.

In the ratio mode, the amount of overlapping information is filtered through according to the ratio set by the Static Criteria, wherein if the ratio is set to large then a large amount of form data that has remained consistent will be merged into the hybrid form, wherein if the ratio is set to small then most of hybrid form will be constructed has a very different from its past iterations. In the priority mode, when both data sets compete to define a feature at the same place in the form, a prioritization process occurs to choose which features are made prominent and which are overlapped and hidden, wherein when only one trait can occupy in the hybrid form, a prioritization process occurs. In the style mode, the manner in which overlapping points are merged, wherein the Static Criteria and mode direct this module to prefer a certain merge over another.

A trait makeup and indexed security Points of Interest (POI) are provided to query security events with their responses, wherein the POI's are stored in a security POI pool, and POI's are bridged with the trait index, wherein when a personality trait regarding a security issue is queried, relevant POI's are looked up in the POI pool and the relevant Event and Response storage are retrieved and returned, wherein in a POI interface module, personal traits are associated with POI's.

The system further comprises a response parser, which comprises a cross reference module, in which that data describing a security event and a response to the security event are received; the security behavior module provides known POI, and input for a personality trait tagged to a security event is received; a trait tagging module that associates the security response with personal trait based on prescription of the personal trait and pattern correlation from past security behavior; and a trait interaction module that receives a trait makeup from the trait tagging module, and assesses its internal compatibility. The security event, response, trait are stored in the security behavior cloud.

A security ruleset is tested with an artificial exploit, wherein after the exploit is performed, result feedback module provides the result if the exploit worked and if it should be incorporated into the Exploit DB, wherein the information release module provides details to the creativity module for how the next exploit should look like, wherein information is merged between the information release module and the Exploit DB, wherein the exploit is performed as a batch in which all the evolutionary pathways get tested in parallel and simultaneously with the same exploit, wherein the creativity module produces a hybrid exploit that uses the strengths of prior exploits and avoids known weaknesses in exploits based on result by the information release module.

An oversight management module monitors developments in an exploit storage and usage, wherein exploits are produced/modified/removed by external inputs, wherein the exploits are stored along with known behavioral history that describes how the exploits performed in the past within certain conditions and exploit importance.

The system further comprises a monitoring/interaction system, in which the creativity module produces the next generation for a pathway, wherein two input forms are compiled security behavior from the security behavior cloud, and variables from a security review module, wherein the resultant hybrid form is pushed to an iteration processor, wherein the iteration processor processes the hybrid form pushed from the creativity module, and assembles a new generation, and loads the new generation into the relevant evolutionary pathway, wherein the security review module receives report variables from the evolutionary pathway, and evaluates its security performance against the Artificial Security Threat (AST) system, outputs report for further review, and sends the report to the creativity module to iterate the next generation, wherein the security behavior cloud supplies relevant events and responses to the security review module, wherein the criteria is determined via a trait index query, wherein if a good performance evaluation is received, the security review module attempts to find a better exploit to break the exploit in the security behavior cloud, wherein the trait makeups are provided to the security behavior cloud and the security behavior cloud provides the trait makeups to the creativity module to guide how the generational ruleset should be composed.

An automated growth guidance system intervenes between external control and the monitoring and interaction system, wherein a module type discerns what the desired module behavior is, and wherein forced feedback is a response by a module informing about its current condition every time it is given new instructions, wherein high level master variables are externally input to the static criteria, wherein the creativity module discerns a new desired result after being given the previous desired result and the actual result, wherein the actual result that comprises status and state of the controlled module is stored in the module tracking DB, wherein the module tracking DB is populated by the module and the creativity module, wherein the module tracking DB provides an input form to the creativity module which reflects the internally chosen growth pattern for the controlled module, wherein the creativity module pushes the new controls for the module to the module tracker and the module itself, wherein the modules are controlled in parallel, except that the module tracking operates in a single instance and is partitioned to deal with multiple modules simultaneously, wherein the feedback from the controlled module, which comprises information derived from actual module history, is stored in the realistic DB, wherein the theory DB contains theoretical controls for the module, which are provided by the creativity module, wherein if a control performs as expected then the same growth pattern is kept, and if a control performs odd, then alternate growth pattern is adopted.

The system further comprises a malware predictive tracking algorithm, in which an existing malware is iterated to consider theoretical variances in makeup, wherein as the theoretical time progresses, the malware evolves interacting with the creativity module, wherein CATEGORY A represents confirmed malware threats with proven history of recognition and removal, CATEGORY B represents malware that the system knows exists but is unable to recognize nor remove with absolute confidence and CATEGORY C represents malware that is completely unknown to the system in every way possible, wherein the process starts from category A, wherein known malware is pushed to the creativity module to produce a hybrid form which includes potential variations that represent currently unknown malware, wherein then based on category B, a theoretical process represents the best estimate of what an unknown threat is like, wherein a process based on category C represents the actual threat that the system is unaware of and trying to predict, wherein a pattern is produced to represent the transition of a known and confirmed iteration, wherein the transition pattern is used to predict a currently unknown threat.

The system further comprises a critical infrastructure protection & retribution through cloud & tiered information security (CIPR/CTIS) that comprises trusted platform security information synchronization service, wherein information flows between multiple security algorithms within a managed network & security services provider (MNSP), wherein all enterprise traffic within an enterprise intranet, extranet and internet are relayed to the MNSP cloud via VPN for realtime and retrospective security analysis, wherein in the retrospective security analysis, events and their security responses and traits are stored and indexed for future queries, conspiracy detection provides a routine background check for multiple security events and attempts to determine patterns and correlations, parallel evolutionary pathways are matured and selected, iterative generations adapt to the same AST batch, and the pathway with the best personality traits ends up resisting the security threats the most, wherein in the realtime security analysis, syntax module provides a framework for reading & writing computer code, purpose module uses syntax module to derive a purpose from code, & outputs such a purpose in its own complex purpose format, the enterprise network and database is cloned in a virtual environment, and sensitive data is replaced with mock (fake) data, signal mimicry provides a form of retribution used when the analytical conclusion of virtual obfuscation (protection) has been reached, wherein it checks that all the internal functions of a foreign code make sense, uses the syntax and purpose modules to reduce foreign code to a complex purpose format, detects code covertly embedded in data & transmission packets, wherein a mapped hierarchy of need & purpose is referenced to decide if foreign code fits in the overall objective of the system.

The system further comprises a logically inferred zero-database a-priori realtime defense (LIZARD), in which every digital transfer within the enterprise system is relayed through an instance of LIZARD, wherein all outgoing/incoming information from outside the enterprise system are channeled via the LIZARD VPN and LIZARD cloud, wherein the iteration module (IM) uses the static core (SC) to syntactically modify the code base of dynamic shell (DS), wherein the modified version is stress tested in parallel with multiple and varying security scenarios by the artificial security threat (AST), wherein if LIZARD performs a low confidence decision, it relays relevant data to AST to improve future iterations of LIZARD, wherein AST creates a virtual testing environment with simulated security threats to enable the iteration process, wherein the static core of LIZARD derives logically necessary functions from initially simpler functions, converts arbitrary (generic) code which is understood directly by syntax module, and reduces code logic to simpler forms to produce a map of interconnected functions, wherein iteration expansion adds detail and complexity to evolve a simple goal into a complex purpose by referring to purpose associations, wherein a virtual obfuscation module confuses & restricts code by gradually & partially submerging them into a virtualized fake environment, wherein malware hypothetically bypasses the enterprise security system, LIZARD has a low confidence assessment of the intent/purpose of the incoming block of code, the questionable code is covertly allocated to an environment in which half of the data is intelligently mixed with mock (fake) data, the real data synchronizer intelligently selects data to be given to mixed environments & in what priority, and the mock data generator uses the real data synchronizer as a template for creating counterfeit & useless data.

The system further comprises a clandestine machine intelligence & retribution through covert operations in cyberspace module, in which a sleeper double agent silently captures a copy of a sensitive file and the captured file is pushed outside of an enterprise network to a rogue destination server, wherein standard logs are generated which are delivered for real-time and long-term analysis, wherein real-time analysis performs a near instant recognition of the malicious activity to stop it before execution, and the long-term analysis recognizes the malicious behavior after more time to analyze.

The system further comprises a critical thinking, memory and perception algorithm that produces an emulation of the observer, and tests/compares all potential points of perception with such variations of observer emulations, wherein priority of perceptions chosen are selected according to weight in descending order, wherein the policy dictates the manner of selecting a cut off, wherein perceptions and relevant weight are stored with comparable variable format (CVF) as their index, wherein CVF derived from data enhanced logs is used as criteria in a database lookup of a perception storage, wherein a metric processing module reverse engineers the variables from selected pattern matching algorithm (SPMA) security response, wherein a part of the security response and its corresponding system metadata are used to replicate the original perception of the security response, wherein debugging and algorithm trace are separated into distinct categories using traditional syntax based information categorization, wherein the categories are used to organize and produce distinct security response with a correlation to security risks and subjects.

### BRIEF DESCRIPTION OF THE DRAWINGS

The invention will be more fully understood by reference to the detailed description in conjunction with the following figures, wherein:
Fig. 1 is a flow diagram showing the task flow of a cyber alert analyzer according to the present invention;
Fig. 2 is a schematic diagram showing functions of the cyber alert analyzer with an example of data flow among nodes from outbound traffic to Internet;
Fig. 3 is a schematic diagram showing that the cyber alert analyzer distributes processed data/events to relevant departments of an organization (based on its tier 1 module analysis function);
Fig. 4 is a schematic diagram showing a computer network;
Fig. 5 is a schematic diagram showing a computing device;
Fig. 6 is a flow diagram showing a security managing method according to the present invention;
Fig. 7 is a schematic diagram showing a security server according to the present invention;
Fig. 8 is a schematic diagram showing multiple-tier structure of the cyber alert analyzer;
Fig. 9 the overall process/workflow, which demonstrates how the various concepts are orchestrated in the cyber incident analyzer;
Fig. 10 illustrating how the behavior analysis should be split up into specialized or 'sub' algorithms in the cyber incident analyzer;
Fig. 11 illustrates Policy & Behavior of the cyber incident analyzer;
Fig. 12 is a schematic diagram showing conspiracy detection sub-algorithm;
Fig. 13 is a schematic diagram showing foreign entities management sub-algorithm;
Fig. 14 is a schematic diagram showing information type identifier sub-algorithm;
Fig. 15 is a schematic diagram showing media scanner sub-algorithm;
Fig. 16 is a schematic diagram showing privilege isolation analysis sub-algorithm;
Fig. 17 is a schematic diagram showing user risk management sub-algorithm;
Fig. 18 is a schematic diagram showing a security case scenario using the aforementioned sub-algorithms;
Fig. 19 is a schematic diagram showing iterative intelligence growth algorithm;
Fig. 20 is a schematic diagram showing iterative evolution algorithm;
Fig. 21 is a schematic diagram showing cyber threat intelligence identification integration & analysis algorithm;
Fig. 22 is a schematic diagram showing dormant malware security use case;
Figs. 23 - 26 are schematic diagrams showing creativity algorithm;
Fig. 27 is a schematic diagram showing security behavior cloud;
Fig. 28 is a schematic diagram showing response parser algorithm;
Fig. 29 is a schematic diagram showing cyber nefarious & anomalous behavior detection & analysis algorithm;
Fig. 30 is a schematic diagram showing artificial security threat algorithm;
Fig. 31 is a schematic diagram showing monitoring/interaction system algorithm;
Fig. 32 is a schematic diagram showing security review module algorithm;
Figs. 33 - 36 are schematic diagrams showing automatic growth guidance algorithm;
Figs. 37 - 45 are schematic diagrams showing malware predictive tracking algorithm;
Fig. 46 is a schematic diagram showing the dependency structures for iterative growth and iterative evolution algorithms;
Fig. 47 is a schematic diagram showing the dependency structures for evolution pathways and information type identifier sub-algorithm;
Fig. 48 is a schematic diagram showing the dependency structures for sub-algorithms conspiracy detection, media scanner, and privilege isolation analysis;
Fig. 49 is a schematic diagram showing the dependency structure for user risk management sub-algorithm;
Fig. 50 is a schematic diagram showing the dependency structure for sub-algorithms foreign entities management and response parser;
Fig. 51 is a schematic diagram showing the dependency structure for security behavior cloud;
Fig. 52 is a schematic diagram showing the dependency structure for creativity algorithm;
Fig. 53 is a schematic diagram showing the dependency structure for artificial security threat algorithm;
Fig. 54 is a schematic diagram showing the dependency structure for automated growth guidance;
Fig. 55 is a schematic diagram showing the dependency structure for security review model;
Fig. 56 is a schematic diagram showing the dependency structure for monitoring interaction system;
Figs. 57-58 are an overview of security attack motives and means for understanding them;
Fig. 59 is a schematic diagram showing trusted platform interacting with third parties such as hardware/software vendors and law enforcement;
Figs. 60 - 66 are schematic diagrams showing the overview of the algorithms that make up Managed Network & Security Services Provider (MNSP);
Figs. 67 - 72 are schematic diagrams showing the overview of Logically Inferred Zero-database A-priori Realtime Defense (LIZARD) algorithm;
Fig. 73 is a schematic diagram enumerating the attack vector of a criminal with relation to an analysis on covert operations and appropriate algorithmic solutions;
Figs. 74 - 75 are schematic diagrams showing the functionality overview of the Critical Thinking Memory Perception (CTMP) algorithm;
Figs. 76 - 78 are schematic diagrams showing the dependency structure of the Critical Thinking Memory Perception (CTMP) algorithm;
Fig. 79 is a schematic diagram showing a computer security system processing a security event;
Fig. 80 is a schematic diagram showing a cyber security system with its sub-algorithms; and
Fig. 81 is a flow diagram showing a method for iterative intelligence growth.

### DETAILED DESCRIPTION OF THE INVENTION

A false positive is any normal or expected behavior that is identified as anomalous or malicious. False positives may happen because (1) some legitimate applications do not strictly follow IETF RFCs, and signatures written to the RFC may trigger when such applications run; (2)an application not seen in the training stage of an anomaly detection system will likely trigger an alert when the application attempts to run; (3) a signature can be written too broadly and thus include both legitimate and illegitimate traffic; (4) anomalous behavior in one area of an organization may be acceptable while highly suspect in another. As an example, NBT traffic is normal in a Windows LAN environment but not generally expected on the Internet. This is not an exhaustive list but the most common places that IDS, Firewalls, DLP and other cybersecurity applications/systems can have false positives. False positives are one of the largest problems facing someone implementing a cybersecurity system. The major problem that false positives create is that they can easily drown out legitimate alerts. A single rule causing false positives can easily create thousands of alerts in a short period of time. If the assumption is made that an analyst can review one alert every five minutes, the analyst can review around 100 alerts per day. Reviewing one alert every five minutes is too fast for thorough analysis but we can assume that some alerts will not require thorough analysis lowering the average time for analysis. Looking at these numbers it is obvious that only a small number of false positives can drown out legitimate alerts. The alerts for rules that causing repeated false positives are often ignored or disabled. From this point forward the organization is effectively blind to the attack the problematic rule was looking for. Almost any rule can create a false positive. The art of cybersecurity system management is learning how to minimize false positives without blinding the organization to relevant attacks.

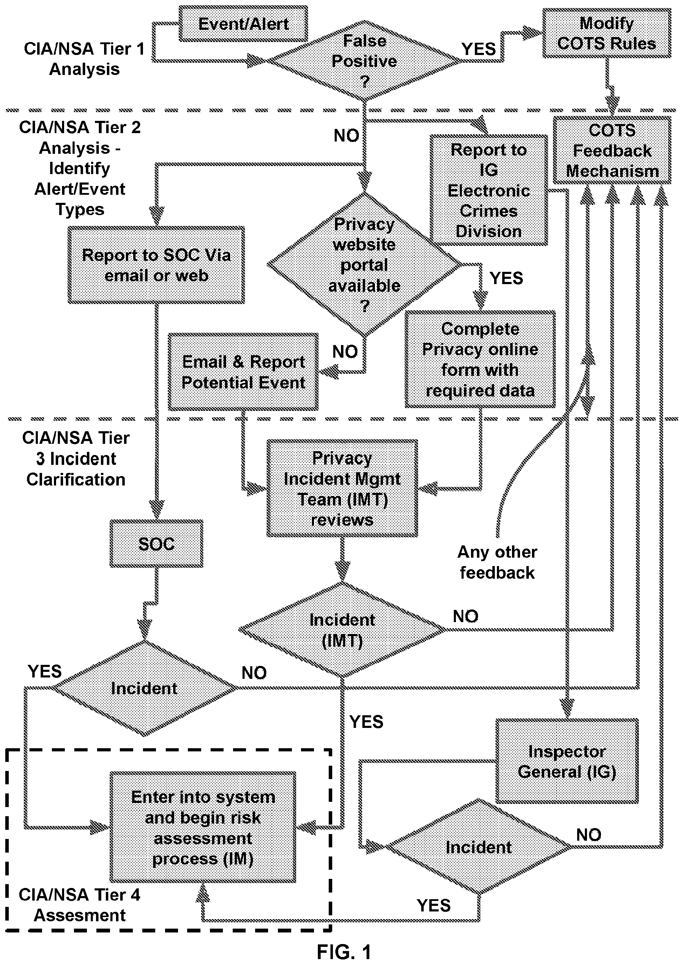

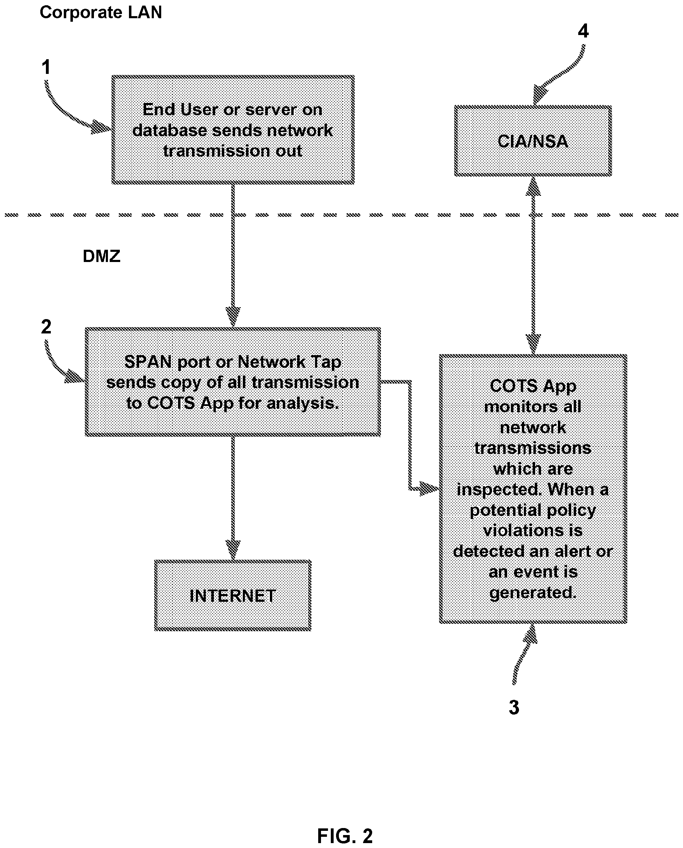

Referring Figs. 1-3, the present invention provides a system to examine events/data methodically by separating into parts and studying their interrelations.

Data events generated from ICT systems such as computers, devices, etc. with COTS or other software generates data/events based on specific criteria including Name, Address, social security number, employer identification number, Specific Word, Image, File Type, File Size, Date, Day, Month, Year, Time, etc.

Such Data/Events are verified with variety of criteria, which includes False Positives, True Positive, Noise, etc.

Workflow of the system includes processes of separation of data/events; processing of data/events; and forwarding notification.

Separation of data/events is based, for example, on criteria including Functional Organization (HCO/HR, IG, Privacy, Disclosure, Policy, Security, Union, etc.); Severity (High, Medium, Low, etc.); Data Amount (File size, number of items, etc.); and Intelligence categories, Etc.

Processing of data/events is based, for example, on Given criteria (e.g., if False negative, Privacy related, etc). Processing includes Populating an action report/form for staff in specific functional organization for approval, etc. Forms created based on organization specific requirements, criteria, etc. (e.g., Privacy Form, Disclosure Form, HR Form, etc.)

After processing of data, according to given criteria (e.g. False Negative, Privacy related, etc.), notification is sent to respective organization/person for approval of FORM by forwarding e-mail or by other method. For more serious/ additional criteria (e.g., 5 or more incidents from same individual in a day, week, month, etc. notification to Inspector General, etc.), Notification is sent to manager, upper management, specific organization based on action initiated.

Reports (and/or alarms) are instantaneously given on Real Time or Near Real-time; Static or Dynamic. Contents of report for example can include number of incidents and specific information Per Organization and Per Type, etc.

Upon reviewing a security event from Cyber Security system, this system (Cyber Event Analyzer) will verify if it's a True Positive vs a False positive (Other criteria besides False Positives can be handled) If the security event is verified as not a false positive, then the system determines whether the security event is (1) Suspected Intentional or Unauthorized Disclosure, (2) Suspected un-intentional Disclosure, or (3) Suspected Internal Policy violation, etc. Common to all three cases, the system performs the tasks of (a) Population of Specific Form/Reportto classify as a potential incident, (b) Verification of the form contents to classify as incident, (c) Notification to respective organization for further action through displaying the completed form on a GUI/dashboard and (d) Feedback to Incident Collection system for policy modification in case of Negative Incident, and or (e) corrective action based on organization specific criteria.

Referring Fig. 1, the tiered structure of the present invention is briefly explained again. Tier 1 module performs false positive verification for a given network event. Tier 1 module may verify alerts provided by an external network security system, or may monitor data communications in a computer network by itself. Tier 2 module performs department specific segregation upon criteria including IG, privacy, security, etc. Tier 3 module performs incident clarification. That is, Tier 3 module analyzes and decides whether a data communication associated with an alert generated in the computer network is really a threat to the network. Tier 4 module performs assessment including corrective action, security threat remediation, forensic information report, and damage mitigation.

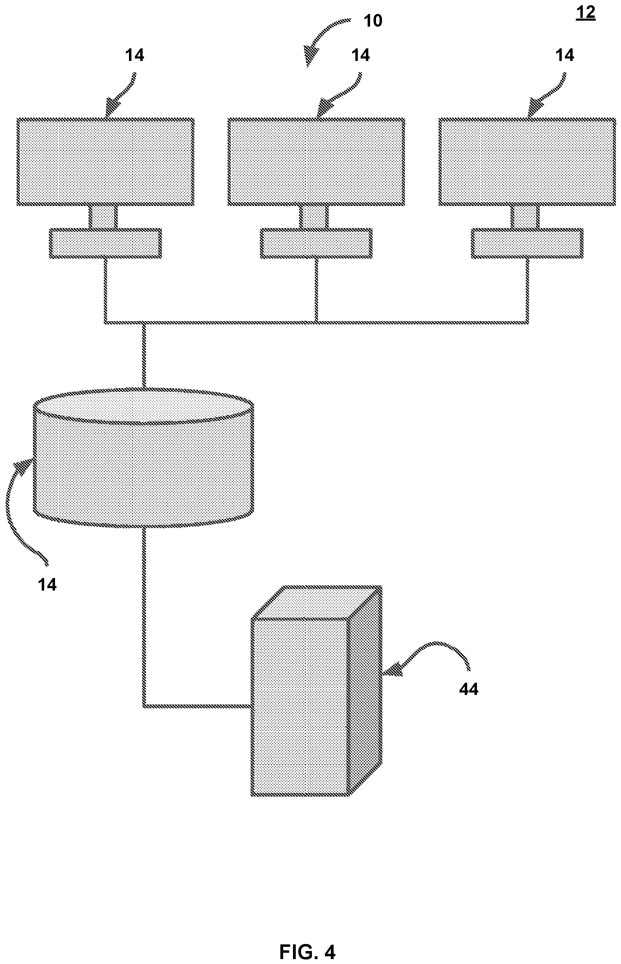

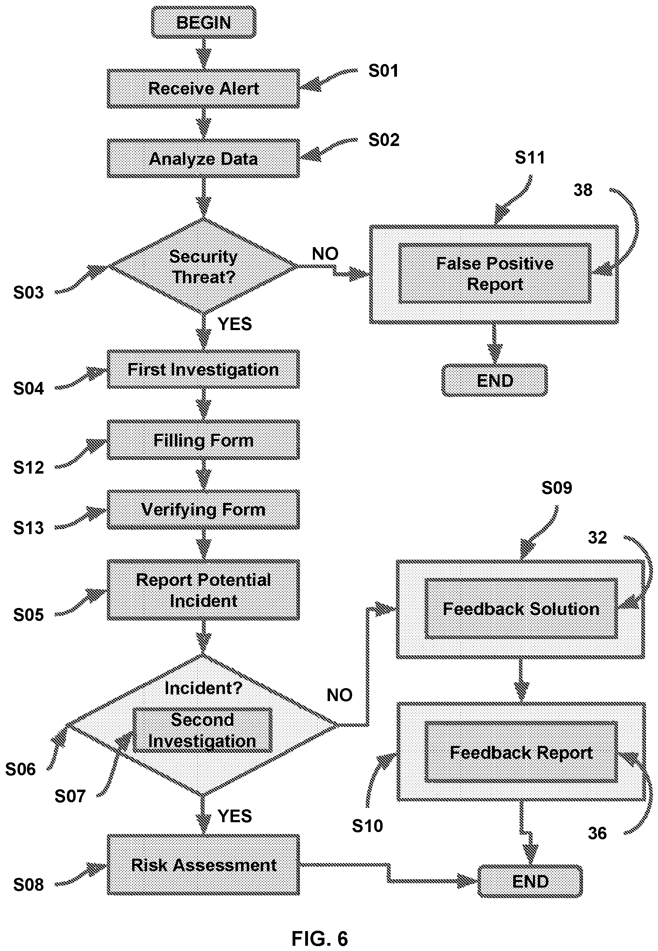

Referring to Figs. 4 and 6, a method of managing security in a computer network **10** for an organization **12** is explained. The network **10** comprises a plurality of computing devices **14.** The method comprises receiving an alert generated from one or more computing devices, and data for a potential incident associated with the alert **S01;** analyzing the data for the potential incident **S02;** deciding whether the potential incident is a security threat under a first filtering criteria **S03;** and first investigating the potential incident under first investigation rules, if the potential incident is decided not a security threat **S04.**

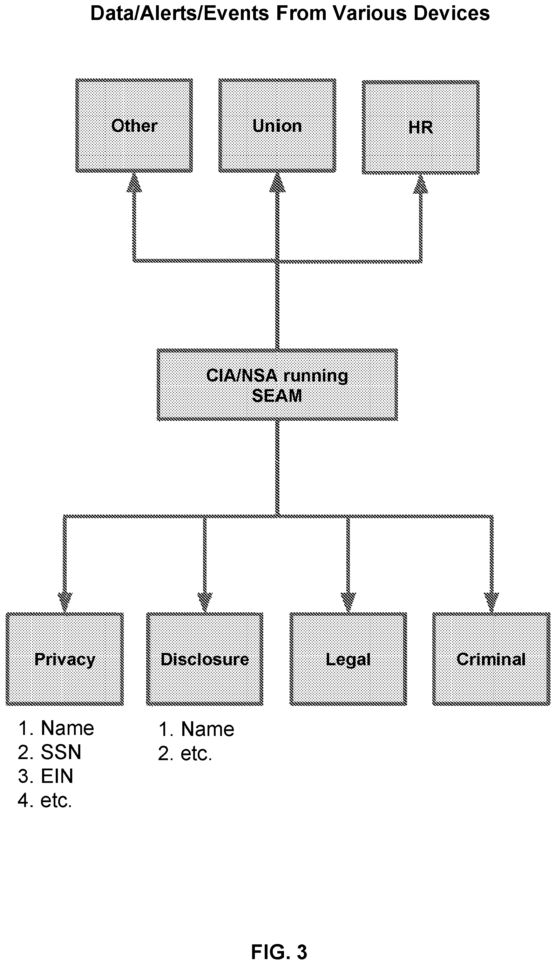

Referring to Fig. 3, the organization **12** comprises a plurality of departments **16.** Step **S04** of first investigating assigns the potential incident to one of the departments **16** of the organization **12.**

The method further comprises reporting the potential incident to the assigned department **S05;** and deciding by the assigned department whether the potential incident is an incident **S06.**

The step **S06** of deciding incident comprises a step of second investigating under second investigation rules **S07.** The second investigation rules comprise department specific criteria (e.g., Privacy incident, Disclosure incident, Criminal Incident, Security Incident, etc.).

The method further comprises a step of performing a risk assessment process if the alert or potential incident is decided to be an incident **S08.**

The first investigating rules assign a department according to investigation criteria related to sensitivity of the data for the potential incident, and role of each department.

The investigation criteria includes whether the data for the potential incident are suspected intentional disclosure or not; whether the data for the potential incident are suspected unauthorized disclosure or not; and whether the data for the potential incident are suspected policy violation or not.

If the data for the potential incident are decided to be suspected intentional or unintentional but unauthorized disclosure, a department **18** handling electronic crimes is assigned; if the data for the potential incident are decided to be suspected unintentional but authorized disclosure, a department **20** managing privacy incident is assigned; wherein if the data for the potential incident are decided to be otherwise, a department **22** having the function of security operation center is assigned.

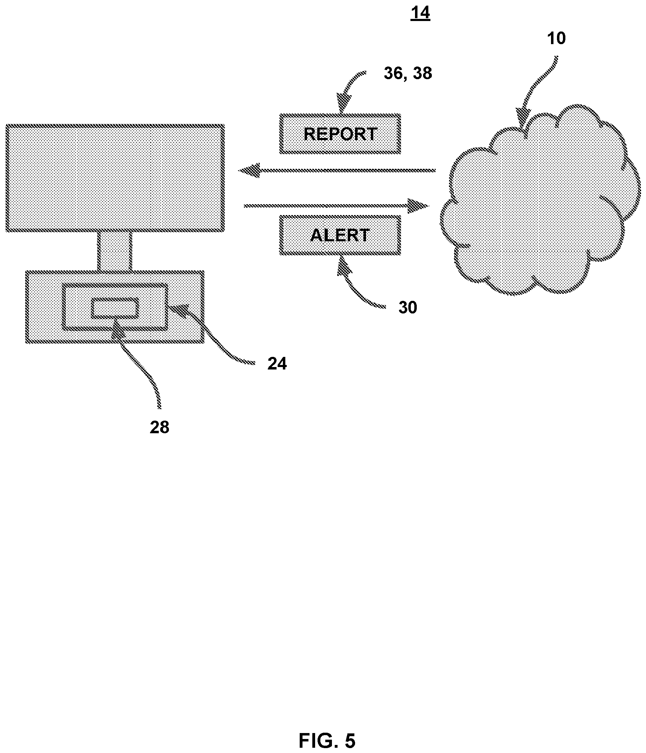

Referring to Fig. 5, a security screening program **24** is installed on each of the computing devices **14.** The security screening program **24** screens network traffic through the computing device **14** to find a potential incident. When the security screening program **24** finds a potential incident under given screening rules **28,** the security screening program **24** generates an alert **30.** Alternatively a network or cybersecurity screening server/device can monitor inbound/outbound traffic from a given enterprise/organization in order to perform the aforementioned functions without the need for installation of security screening programs being installed on each of the computing devices.

The method further comprises steps of making a feedback solution **32** for modifying the screening rules **28** if the potential incident **26** is decided not to be an incident **34, S09;** and generating and sending a screening rules feedback report **36** to the computing devices **S10.** The screening rules feedback report **36** comprises the feedback solution **32** for modifying the screening rules **28.**

In this embodiment, the first filtering criteria is false positive. The method further comprises a step **S11** of generating and sending a false positive report **38** to the security screening programs **24** of the computing devices **14,** if the potential incident **26** is decided a false positive in the step **S03** of deciding whether the potential incident **26** is a false positive.

In the step **S11** of generating a false positive report, the false positive report **38** comprises a solution for modifying the screening rules **28.**

The method further comprises a step **S12** of filling a predetermined incident evaluation form that describes the potential incident **26** after the step **S04** of investigating the potential incident **26;** and a step **S13** of verifying the filled-in incident evaluation form **40** under predetermined form verification rules. The predetermined incident evaluation form and the predetermined form verification rules are related to a category that is different per each of the assigned departments **16.**

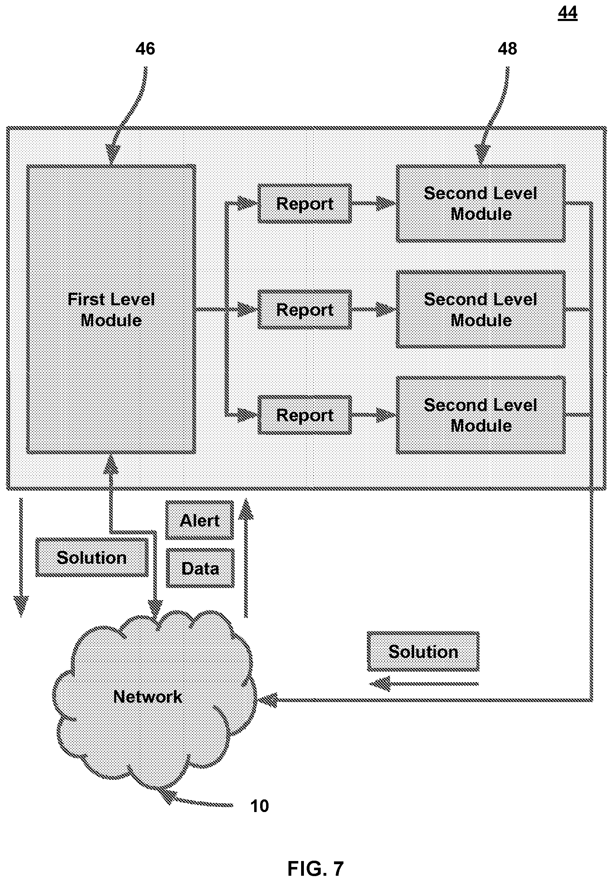

Referring to Fig. 7, a security server **44** manages security in the computer network **10** for the organization **12.** The security server **44** comprises a first level module **46** that is communicatively coupled to the computer network **10;** receives an alert **30** generated from one or more computing devices **14,** and data for a potential incident **26** associated with the alert **30;** analyzes the data for the potential incident **26;** decides whether the potential incident **26** is a false positive; and investigates the potential incident **26** under first investigating rules, if the potential incident **26** is decided not a false positive.

The security server **44** further comprises a second level module **48** that is operatively connected to the first level module **46.** Each department **16** comprises the second level module **48.** The first level module **46** assigns the potential incident **26** to the second level module **48** of one of the departments **16** of the organization **12.**

The first level module **46** reports the potential incident **26** to the second level module **48** of the assigned department **16.** The second level module **48** of the assigned department **16** decides whether the potential incident **26** is an incident **34.**

The second level module **48** decides incident under second investigating rules.

The second level module **48** performs a risk assessment process if the potential incident **26** is decided to be an incident **34.**

The second level module **48** makes a feedback solution **32** for modifying the screening rules **28** if the potential incident **26** is decided not to be an incident **34;** and generates and sends a screening rules feedback report **36** to the computing devices **14.**

The first level module **46** generates and sends a false positive report **38** to the security screening programs **24** of the computing devices **14,** if the potential incident **26** is decided a false positive.

The first level module **46** fills a predetermined incident evaluation form **40** that describes the potential incident **26;** and verifies the filled-in incident evaluation form **46** under predetermined form verification rules **42.** Hence providing a corrective action to address the specific incident based on organization/department specific criteria, policy, laws, etc.

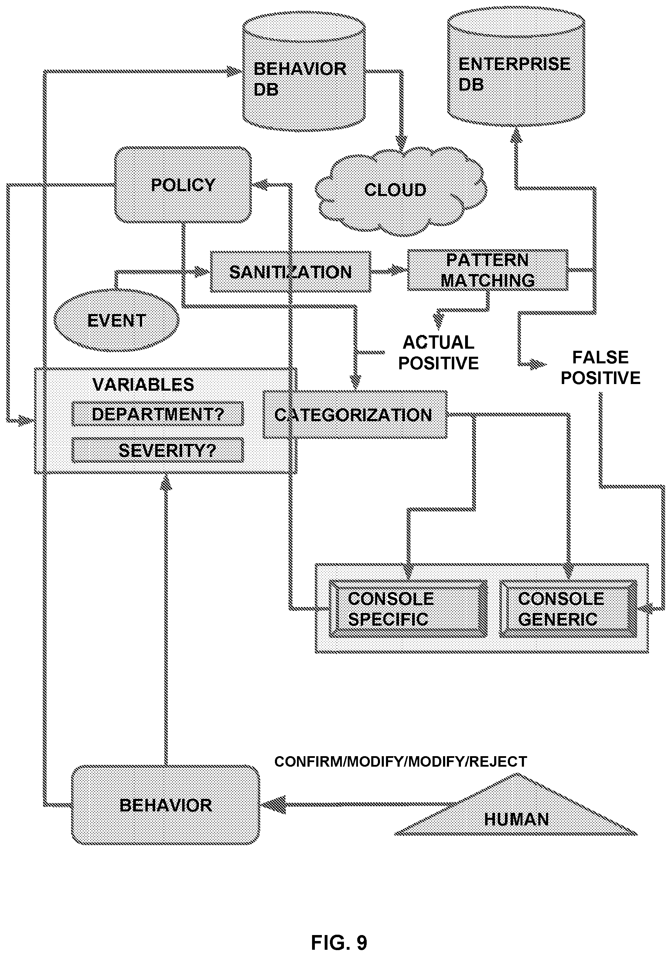

Figs. 9-11 illustrate details on algorithms for cyber security. One main behavioral algorithm (receiving input from numerous sub-algorithms), which is driven by organizational behavior ensures (1)Dynamic Policy, (2) Automated Analysis, (3)Instantaneous/Real Time Corrective Action, and (4) Human input for behavior, policy & other rule modifications as & when necessary.

These algorithms utilize Artificial Intelligence (AI) including (1) Anomalies, (2) Pattern /Exact Data matching, (3) Dynamic data/flow analysis (real time), (4) Heuristics & or Historical data/evidence, (5) Self Learning, and (6) Intelligent Virtual Agents.

Fig. 9 shows the overall process/workflow, which demonstrates how the various concepts are orchestrated.
- The behavior module will access a DB that consists of 'metadata'.
- There are different categories of 'metadata' in the DB, each one represented by a sub-algorithm.
- Such data essentially draws connections to different concepts with a confidence rating. A typical category would have 4 columns: reference id, concept a, concept b, algorithm determined association index (this means the output of the relevant sub-algorithm).
- A generic 'combination' algorithm combines useful links between different categories.
- A reaction is determined based off of the resulting output from generic algorithm.

The above logic flow encompasses the enumerated points depicted in Fig. 9. The key is having multiple sub algorithms executed in parallel, processing input and storing output, even if the output might be of low or unknown quality. The generic algorithm then does some simple ranking to get the most relevant info from this pool of info, and should output the final result of the entire behavior module, and simultaneously feedback into the DB by modifying/removing certain rows to increase quality of metadata. This is articulated in more detail in the second diagram.

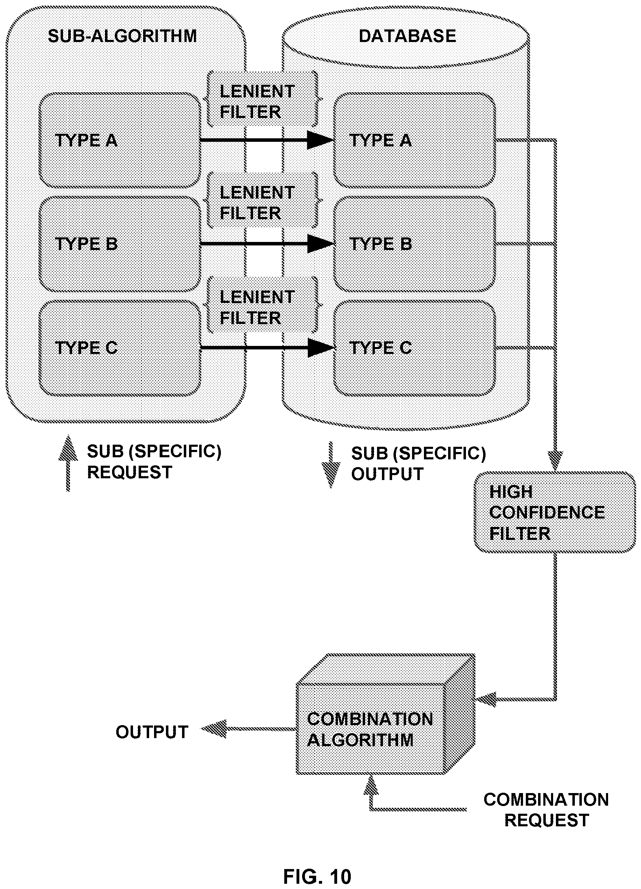

Fig. 10 illustrates how the behavior analysis should be split up into specialized or 'sub' algorithms. The main or 'combination' algorithm is what is delivering the desired final result, such as a major security analysis, whilst the algorithms would categorize individual types of security issues (like one analyzes Social Security Numbers, another does location analysis, another analyzes names, etc).

The sub-algorithms are spawned independent of the combination algorithm to populate the DB with results, even if they are low quality. The combination algorithm's sidekick, the 'high confidence filter', would be dealing with making sure meaningful high quality results are outputted. Having low quality results stored in the DB is important because of their potential to mature into high quality.

For example one sub algorithm might have picked up a location anomaly but has very little evidence to prove it (low confidence). As time passes it goes through more data and eventually that anomaly has matured into a high confidence security threat, which is then picked up by the combination algorithm via the high confidence filter and delivered in the final output that reaches humans. Sometimes though a low confidence will just stay low confidence but that's ok because it's value is in it's potential.

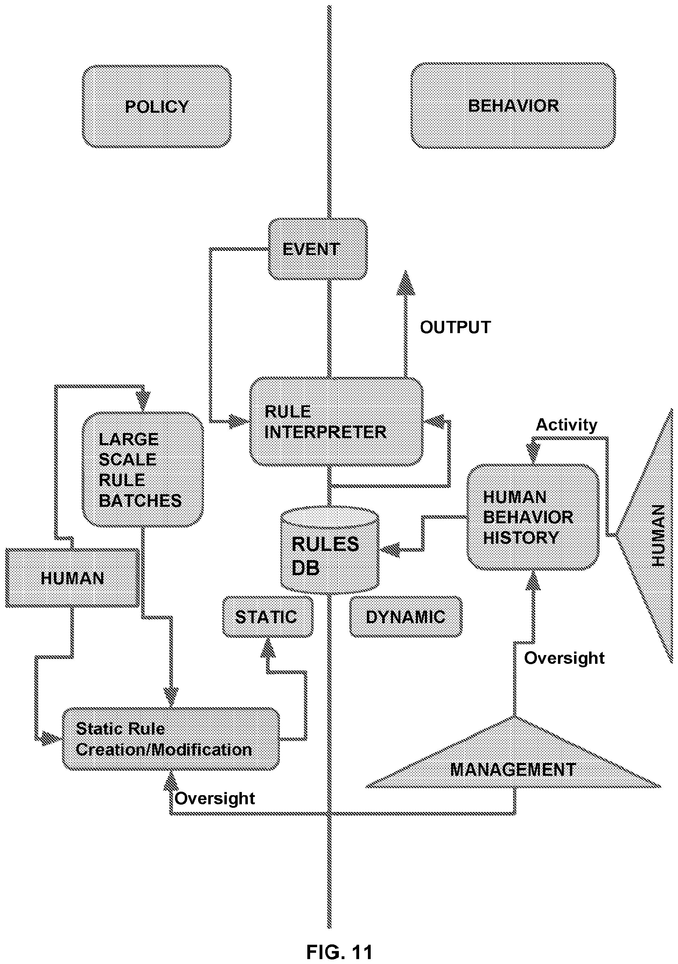

Fig. 11 illustrates Policy & Behavior.

Fig. 9 is explained in detail. This flow chart represents the main sequence of information analysis.
- An incoming event is first sanitized based on somewhat simple and static policy rules.
- A pattern matching module uses established behavior patterns in conjunction with the company/enterprise's database to filter out very weak alerts (essentially false positives). False positives are still recorded but put in a 'spam filter' style location for potential human review.
- If an event passes the initial pattern-matching layer, it goes through a categorization process, which utilizes a combination of policy and behavior to determine the department and severity of an alert.

- Such an event with the appropriate department and severity information is displayed to the relevant department console (console specific), and also the generic console, which applies to certain branches of employees that have an interest in viewing all security activity.
- Recommended action to perform is displayed to relevant console if made available by AI.

Fig. 10 is explained in detail. An independent thread manager sends information processing requests to the relevant sub algorithm ("Sub Request"). That sub-algorithm stores the processed data in it's own separate database table, with a very lenient/forgiving filter. The filter is tuned as such so that potential high quality results can be gradually built from what was originally a low quality result. A separate thread manager in parallel sends requests to the combination algorithm, which uses a combination of certain sub algorithms depending on the type of combination request. Results are selected based on a high quality/confidence criterion.

Fig. 11 is explained in detail.

### Policy:

Humans directly create/modify static rules that are placed in effect in the rules database. Humans may also create batches of static rules via the creation of 'large scale rules', of which small-scale rules are automatically derived.

### Behavior:

Humans receive event information and are given options for potential degrees of classification and/or actions to undertake. Such decisions might possibly be made on a binary 'yes' or 'no' (and 'skip') basis. All such behavior history is recorded, and from there dynamic rules in a constant state of gradual change are reflected in the rules database.

A human management division oversees the human behavior history in conjunction with the relevant Al decisions that were made based on such history. Management division also has the oversight for static rule creation modification.

### CONSPIRACY DETECTION

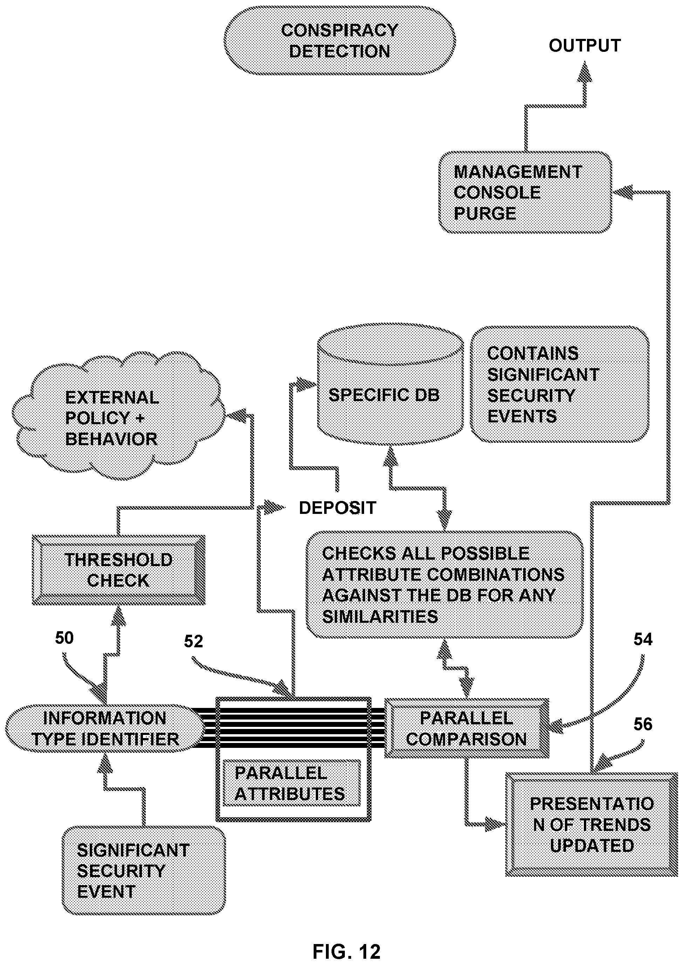

Fig. 12 shows conspiracy detection sub-algorithm. This sub-algorithm provides a routine background check for multiple 'conspiratorial' security events, and attempts to determine patterns and correlations between seemingly unrelated security events. The output is primarily for human cyber security analysts to benefit from, and not for further Al action.

A significant security event is parsed by the Information Type Identifier **50** to derive all the relevant attributes of information (IP address, time, location, SSN etc). The variables are checked by an external policy and behavior interpretation to see if the event attributes pass the threshold for being processed.

In the embodiment:
Retrieved info:
User ID token: A1B2C3
IP address: 112.20.190.176
Timestamp: 1439226504
Threshold Check: Yes this security event is significant enough to be processed.

Referring to parallel attributes **52,** all the derived attributes are submitted to the specific DB to be used for future iterations of this sub-algorithm.

In the embodiment:
Here are the attributes of something to keep on eye out for:
User ID token: A1B2C3
IP address: 112.20.190.176
Timestamp: 1439226504

Referring to parallel comparison **54,** every possible allowed combination of attributes are organized and queried against the specific DB for similarities. Hypothetical security events that are searched for similarities are:
1) Security events that have the same SSN and time of day of occurrence.
2) Security events that include the same IP LAN subnet range and personal phone number and personal address.
3) Security events that include the same domain name in different email addresses.
4) Security events that include a domain name and the IP address it is supposed to point to, to fight against ghost domain names.

Referring to presentation **56,** any relevant trends or connections that have been made are processed into human readable form, and the management console is notified to refresh its data to reflect any meaningful changes.

In the embodiment:
Show on the console management screen that there is a high risk of a co-ordinated attack originating from China.

### FOREIGN ENTITIES MANAGEMENT

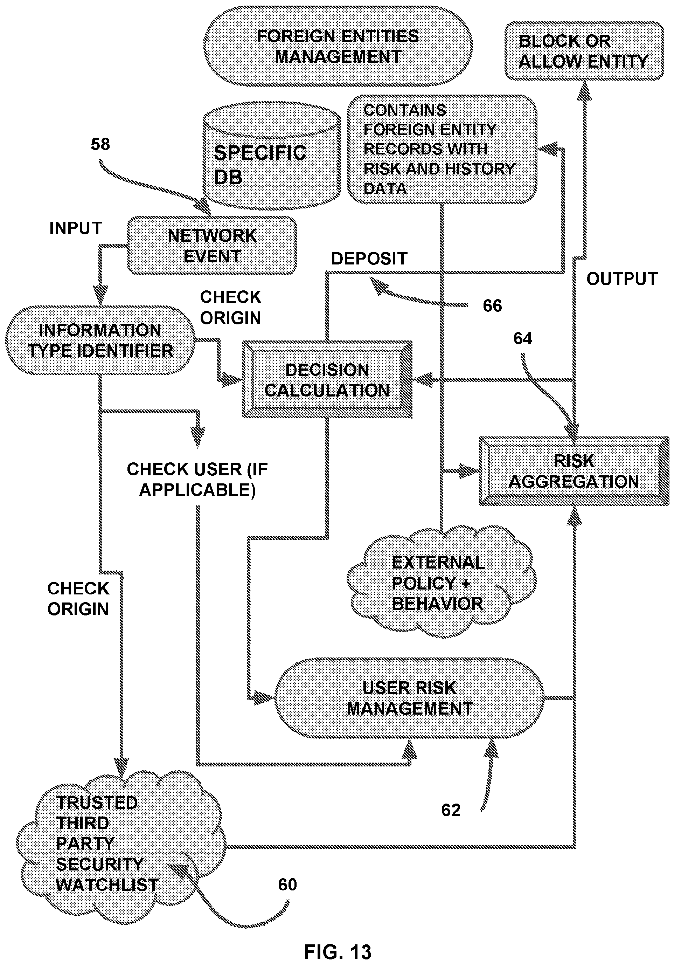

Fig. 13 shows foreign entities management sub-algorithm. This sub-algorithm manages perceived foreign threats by constantly upgrading/downgrading their severity based off of requests they make to the isolated network of the enterprise. Also receives third party information to augment its perception of potential foreign threats.

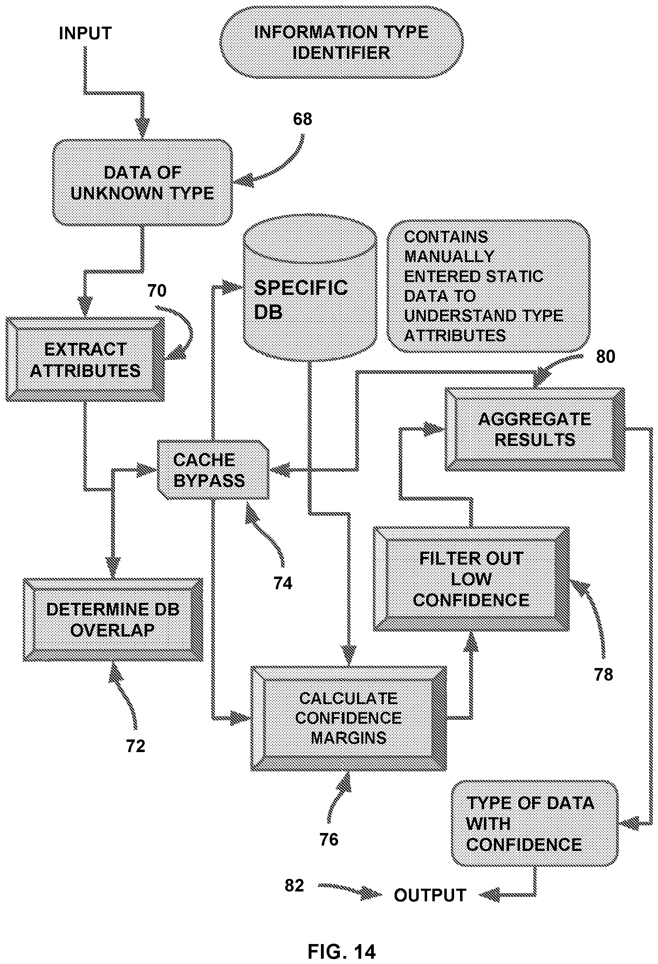

A network event **58** is parsed by Information Type Identifier sub-algorithm, which is explained later referring to Fig. 14. Network origin and user involved (if applicable) are the two main variables that are sought for.

In the embodiment:
Network Origin: 112.20.190.176
User ID token: A1B2C3

The network origin is checked against a security watch list 60, which is maintained by a trusted second or third party. It can be within or out of enterprise structure.

In the embodiment:Trusted Party says: This IP address has some bad security history.

If user info has been found, then the user is checked by the User Risk Assessment sub-algorithm **62.**

In the embodiment:
User Risk Management: User A1B2C3 has a 75% risk factor, and shouldn't be allowed to deal with sensitive SSNs.

Referring risk aggregation **64,** if All relevant results are considered and aggregated based off of thresholds which are influenced by external policy and behavior.

In the embodiment:
Base off of current Policy and Behavior, this IP address should be banned from the system for a long time.

Referring deposit 66, any new information that is learned is submitted to the specific database for future reference.

In the embodiment:
Deposit to DB: The IP address 112.20.190.176 has been banned.
Deposit to User Risk Management: User A1B2C3 is even riskier that you thought, here is some more information on him.

### INFORMATION TYPE IDENTIFIER

Fig. 14 shows information type identifier sub-algorithm. This sub-algorithm determines the type/nature of unknown data. It can determine whether the unknown data is a social security number, home address, phone number etc. The sub-algorithm also declares it's confidence in the data type that it has chosen, and if the confidence is too low it will return a failure flag.

Referring to **68,** unknown data is provided. Actual code will offer bulk input for parallelization purposes.

In the embodiment:
123-45-6789 is provided to input.

Referring to extract attributes **70,** attributes are derived such as length, number/letter ratio and special characters.

In the embodiment:
Attributes are that it is 9 numbers, 100% number to letter ratio, and has 2 dashes.

Referring to determine DB overlap **72,** DB data points are selected for comparison.

In the embodiment:
Query the database: Are there are data types that are defined as having 9 numbers? with 100% number to letter ratio? and 2 dashes?

Referring to cache bypass **74,** Cache is checked first for comparisons.

In the embodiment:
Query the cache: The last time I had a request like this, what was your response (if any) and how confident were you?

Referring to calculated confidence margins **76,** results are processed for confidence levels.

In the embodiment:
100% of the criteria for an SSN was matched, hence 100% confident this is a SSN.

Referring to filter out low confidence **78,** threshold cutoff for confidence of results is applied, threshold can be made dynamic.

In the embodiment:
Because the confidence is 100%, the decision that this is a SSN will be passed on to output.

Referring to cache confidence patterns **80,** pattern detection is performed to correlate type affinity with attribute makeup. High confidence patterns are stored in the cache, the DB does not contain calculated patterns but contains static correlations between type and attribute.

In the embodiment:
Create a pattern rule: If there is a string with a total length of 11, contains 9 numbers and 2 dashes, then don't even talk to the DB, because I am 100% sure this is a SSN.

Referring to output **82,** results are compiled to conform to API and output is performed.

In the embodiment:
Output in API syntax: I am 100% sure this is a SSN.

### MEDIA SCANNER

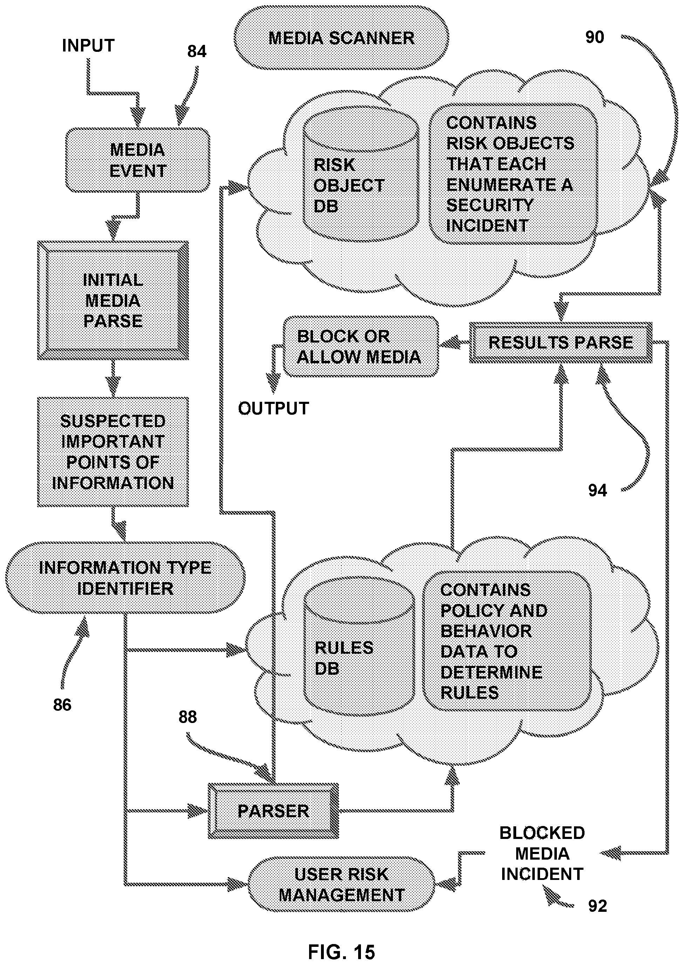

Fig. 15 shows media scanner sub-algorithm.

This sub-algorithm is provided a document/photo etc. and checks for illegal information transfer and inconsistent/suspicious behavior for the expected composition of such media.

Referring to media event **84,** (initial media parse), document/photo is received, a media parse is performed to highlight suspected points of information. This might include information hidden in metadata, or in the raw format of the document etc.

In the embodiment:
Data and Metadata is scanned.

Referring to information type identifier **86,** suspected important points of information are processed by the Information Type Identifier. Any user identities are passed to the User Risk Management sub-algorithm. All other information is passed to a generic parser.

In the embodiment:
Potential points of interest found:
User ID token found: A1B2C3
Multiple SSNs found

Referring to **88, 90, 92,** the parser interacts with the Risk Objects DB to find any significantly risky associations that are in the file. For example: An SSN in the document has been found in the Risk Objects DB and it turns out that the SSN has been suspected of being leaked in the past 24 hours. Hence the document is ultimately blocked from being transferred, a risk object has been created, and the User Risk Management algorithm has been notified of the relevant user's involvement with the incident.

In the embodiment:
One of the SSNs found exists in a common document with an SSN that has been leaked in the past 24 hours.

Referring to **94,** results are combined and parsed to produce a decision of whether to block or allow the file.

In the embodiment:
The User found has a high risk factor, a bad history with SSN leaks, and one of the SSNs in the file has been found in the another file that includes another SSN that has been leaked within 24 hours.
Because of all this information, the media is blocked from transit.

### PRIVILEGE ISOLATION ANALYSIS

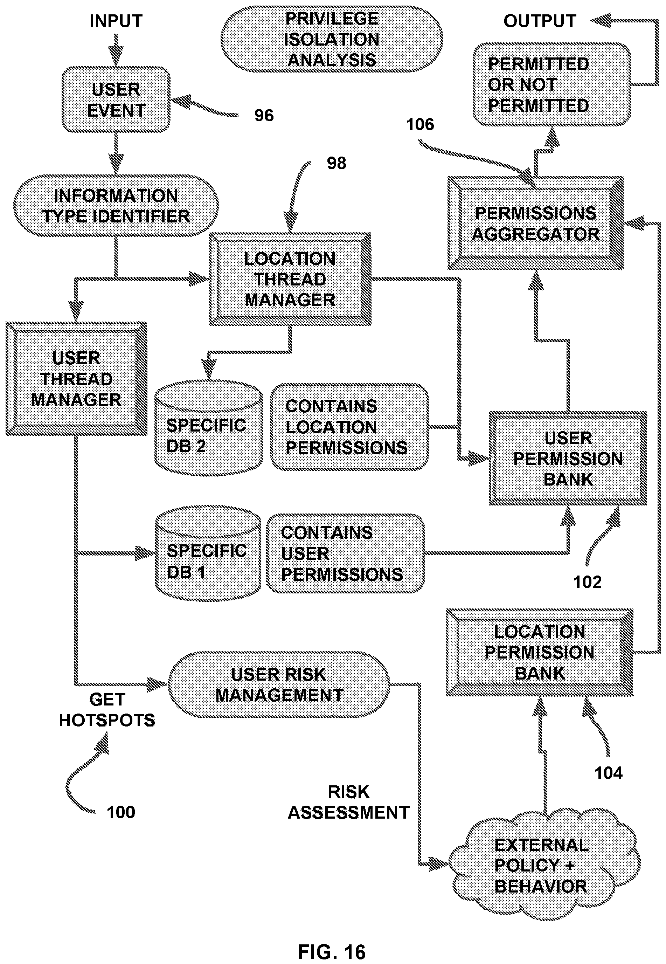

Fig. 16 shows privilege isolation analysis sub-algorithm. This sub-algorithm determines if a user or process is within their permitted privilege allocation. It is designed to be constantly invoked, and is a watchdog process that determines if a user or process is permitted to be in it's sector of activity. The process if fed background information by a master process, and does not actively seek information itself. Any confirmed privilege violations are immediately reported to the master process and a secondary process which double checks that the master process eventually did something about it.

A user permission event **96** is sent. Such event might not be necessarily a direct human, but also a process that uses a user account of which permissions need to be verified. The user ID token and requested location of access/modification is extracted by the Information Type Identifier sub-algorithm and pushed to the relevant thread manager.

In the embodiment:
User ID token found: A1B2C3
Location requested: Human Resources SSN folder
Permissions requested: Read only (no modification)

Referring to location thread manager **98,** thread manager receives location information and invokes the location database for who is permitted to access/modify.

In the embodiment:
Ask the database: Who are all the people who are allowed to read files from the Human Resources SSN folder?

Referring to user thread manager **100,** thread manager receives user information and invokes the user database for what locations are permitted to access/modify. It also invokes the User Risk Management sub-algorithm to get any potential risky locations that should be blocked for this specific user within a precautionary policy.

In the embodiment:
User A1B2C3 is permitted to read from this list of 25 folders.
According to the User Risk Management sub-algorithm, this user should be blocked from accessing this folder.

User permission bank **102** receives the user's permission attributes by Specific DB 1, and is queried by the location thread manager to see if the user is permitted to perform the requested action in this location. The result is submitted to a permissions aggregator.

In the embodiment:
User A1B2C3 is allowed to read and write from the Human Resources SSN folder.

Location permission bank **104** receives the location's permission requirements by Specific DB 2, and is queried by a thread that decides if certain locations should be blocked as a precaution due to a user security risk. The threshold for the precaution level is determined via external policy and behavior.

In the embodiment:
Human Resources SSN folder can be read by User A1B2C3. However, as a precaution he should be blocked because he is 75% risky and has a bad history with dealing with SSNs.

A permissions aggregator **106** logically combines both streams of results, and pushes its verdict to the output.

In the embodiment:
User A1B2C3 has been blocked from to reading anything in the Human Resources SSN folder.

### USER RISK MANAGEMENT

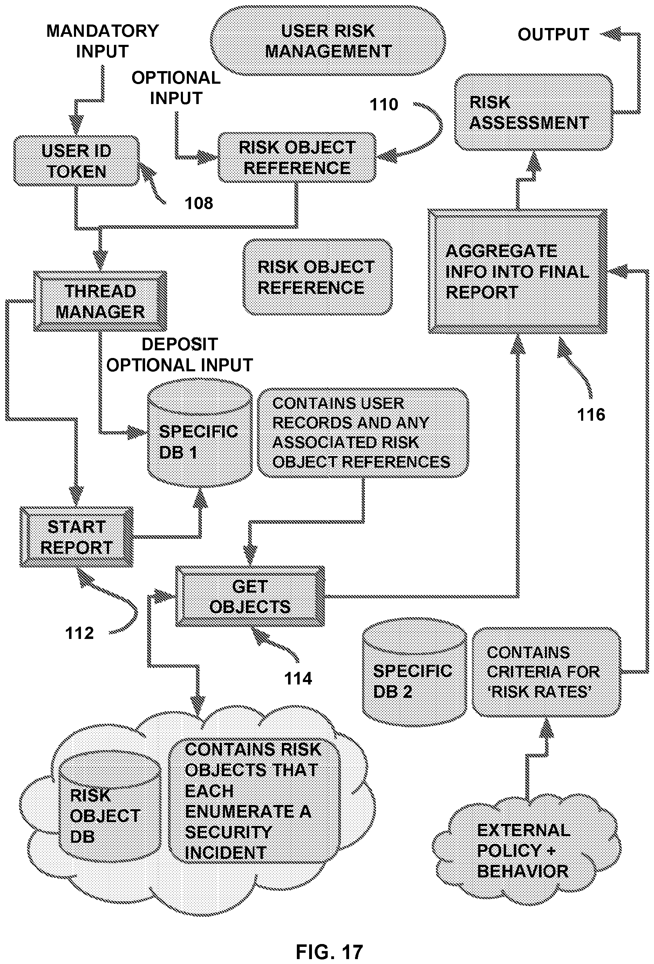

Fig. 17 shows user risk management sub-algorithm. This sub-algorithm determines the overall risk assessment for a user record (which may be an employee or otherwise). Risk factors include prior policy violations, excessive usage, suspicious operations enacted etc. Mandatory input is a user identification token, and output is an overall risk assessment percentage with various linked objects that are of risk interest. These objects can be accessed independently via other sub-algorithms for further analysis. Optional input is a Risk Object Reference that is related to the user. The sub-algorithm would then record the user's association with the risk object, and by default would not output a risk assessment.

User ID token **108** is provided to either generate a risk assessment report or to deposit a risk object reference. Such a deposit is for building a user's risk history, and in such a usage case no meaningful output is given.

In the embodiment:
User ID token: A1B2C3 Risk Object Reference: None

If a risk object reference **110** is provided, then deposit is made in the database for future reference, and the algorithm instance has concluded its run.

In the embodiment:
No Risk Object Reference provided, so no deposit to DB

Referring to start report **112,** No Risk Object Reference deposit made, hence the thread manager requests a report to be made. The relevant user ID is lookup in the specific database to assess the user's risk history.

In the embodiment:
User ID token A1B2C3 found in DB, has 3 security incidents in the past week and 12 in the past year.

Referring to **114** (get objects), Object references that have been produced by the specific DB query are materialized. The full object details are retrieved from an object DB that is accessible to the other algorithms.

In the embodiment:
Get Risk Object 192 and 866 from the DB

Referring to **116,** all risk details are ranked. Risk rates are retrieved from the specific DB, which gives a risk rating for certain kinds of risk objects. Using the risk rates and the retrieved risk objects, a final aggregate report is produced and pushed to output. A comprehensive principal risk index is also pushed to output, for other modules to quickly identify a user's immediate risk factor.

In the embodiment:
Considering Risk Objects 192 and 866, the risk rates are telling me that we should consider these really bad security offences. The user had been confirmed to be leaking SSN numbers to a rogue foreign entity. Therefore, I highly recommend that this user be blocked from accessing enterprise SSNs, and potentially to even all email traffic.
Risk Index: 75%

### SECURITY CASE SCENARIO

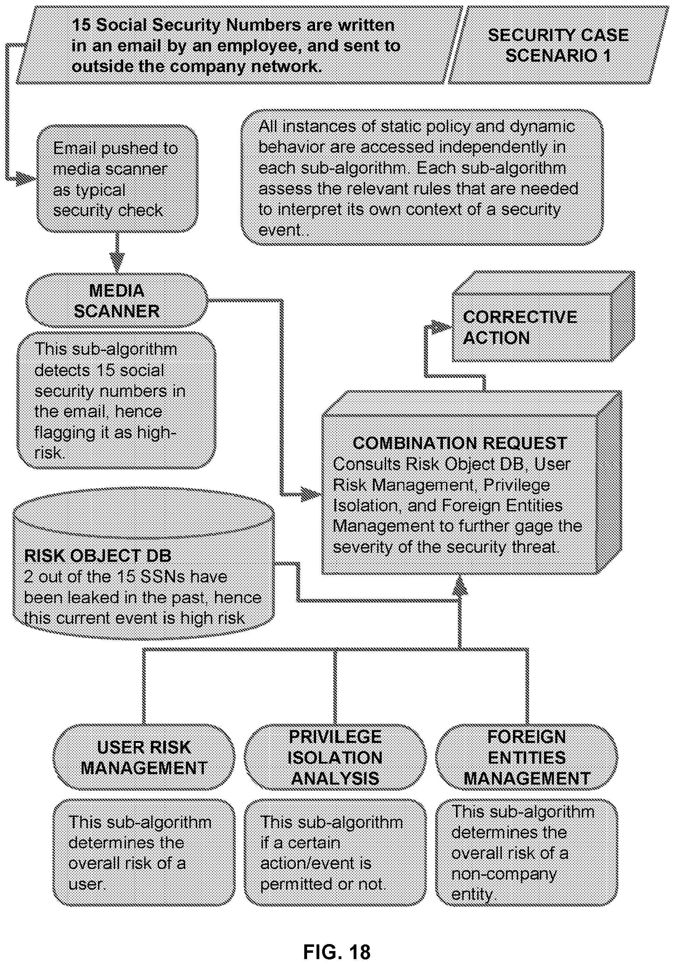

Fig. 18 shows a security case scenario in which the above-explained sub-algorithms are used. In the scenario, 15 Social Security Numbers are written in an email by an employee, and sent to outside the company network. The email is pushed to the media scanner as typical security check. The media scanner sub-algorithm detects 15 social security numbers in the email, hence flagging it as high-risk. A combination request module consults a Risk Object DB, the User Risk Management sub-algorithm, the Privilege Isolation sub-algorithm, and the Foreign Entities Management sub-algorithm to further gage the severity of the security threat. In this process, all instances of static policy and dynamic behavior are accessed independently in each sub-algorithm. Each sub-algorithm assesses the relevant rules that are needed to interpret its own context of a security event.

The risk object DB, which contains risk objects that each enumerate a security incident, returns that 2 out of the 15 SSNs have been leaked in the past, hence this current event is high risk. The user risk management sub-algorithm, which determines the overall risk of the user, returns that the employee is risky and has past behavior of leaking sensitive information. The privilege isolation analysis sub-algorithm, which decides if a certain action/event is permitted or not, returns that the employee was not permitted to include 15 SSNs in an outgoing email. The foreign entities management sub-algorithm, which determines the overall risk of a non-company entity, returns that the intended recipient of email is high risk, rogue, and outside company network. Corrective action is taken based on the results. Due to the risk of the event: (1) the outgoing email is blocked; (2) all inbound and outbound traffic for the employee is blocked' and (3) relevant management is notified.

### ITERATIVE INTELLIGENCE GROWTH

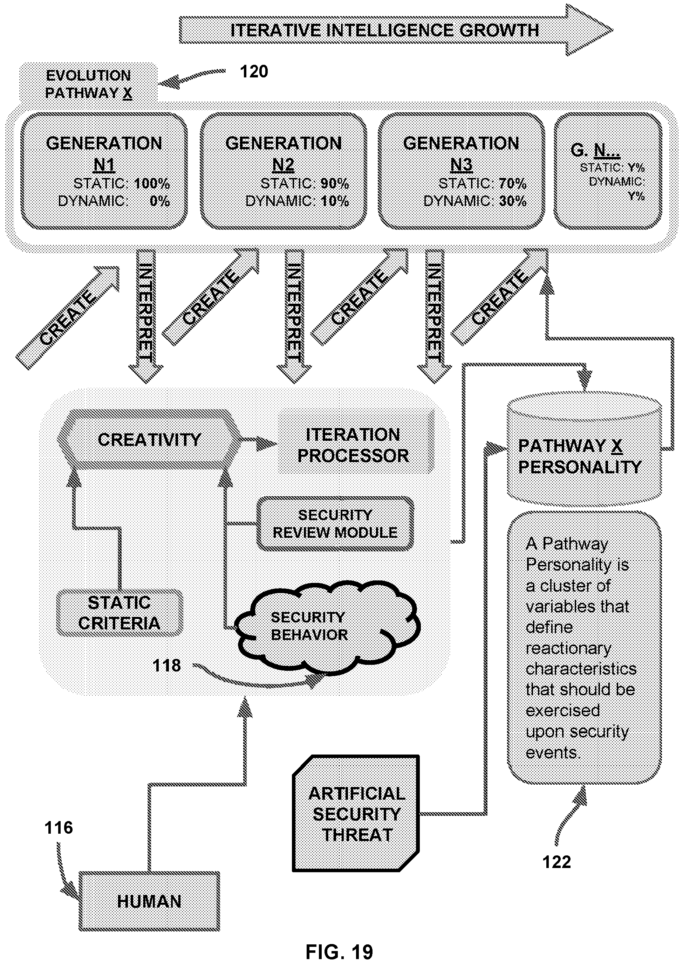

Fig. 19 shows the way a static ruleset is matured as it adapts to varying security threats. A sequence of generational rulesets are produced, their evolution being channeled via 'personality' trait definitions. Such rulesets are used to process incoming security alerts, and perform the most desired notification and corrective action.

Referring to **116,** cybersecurity analysts create an initial ruleset to start the evolutionary chain.

In the embodiment:
An outgoing email that isn't sent from the HR department cannot have more or equal to 5 social security numbers.

Referring to **118,** Artificial Security Threats (AST) is an isolated system which provides a consistent security exploitation environment.

In the embodiment:
The AST system infected a computer on the LAN with malware. Such malware sent sensitive information outside of the network and permanently locked the infected computer.

An evolutionary pathway **120** is an entire chain of generations with a consistent 'personality'. Generations become increasingly dynamic as CPU time progresses. The initial static ruleset become less prevalent and potentially erased or overridden.

In the embodiment:
Evolutionary Pathway A has a trait of being strict and precautious, with little forgiveness or tolerance of assumption.

A Pathway Personality **122** is a cluster of variables that define reactionary characteristics that should be exercised upon security events. Such traits are defined by the human directly, and correlated by observing human behavior in reaction to real and artificial security threats.
Upon being told what batch of decisions are of x and y traits, it can apply those traits in security scenarios provided by the Artificial Security Threats (AST) system.

In the embodiment:
Example traits for such a security system:
- Realist: Whenever there is a certain security event with an obscure correlation it gives a benefit of a doubt that there is no security issue. The algorithm then focuses more CPU time on more actual and realistic threats instead.
- Unforgiving: If a certain individual or system has undergone a prior security incident, it will treat such an entity suspiciously for a longer time.
- Opportunistic: Whenever the algorithm perceives a potential corrective action, it will pursue all possible evidence to try and achieve such corrective action.

### ITERATIVE EVOLUTION

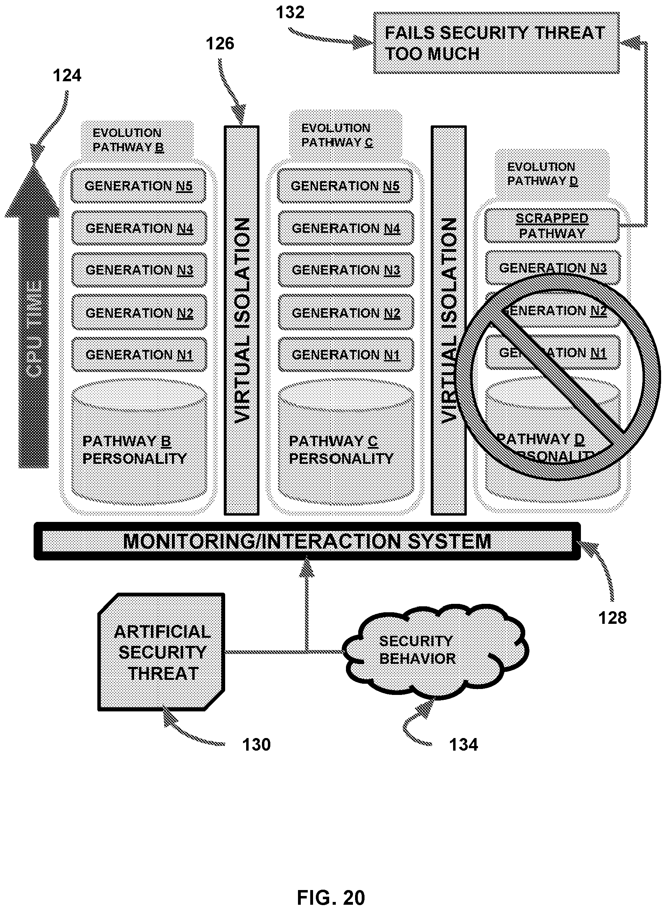

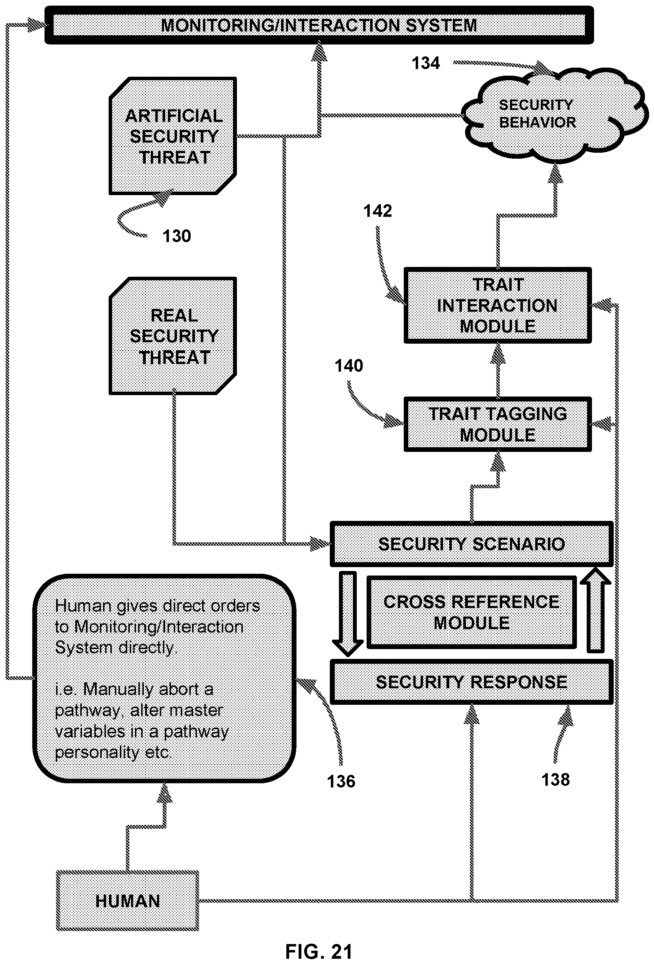

Figs. 20, 21 describe the method in which parallel evolutionary pathways are matured and selected. Iterative generations adapt to the same Artificial Security Threats (AST), and the pathway with the best personality traits ends up resisting the security threats the most.

CPU time **124** is a measure of CPU power over time. Can be measured in CPU cycles/second. Using time alone to measure the amount of processing exposure an evolutionary pathway receives is insufficient, as the amount of cores and power of each CPU must be considered.

In the embodiment:
Processing a request that takes a Pentium III a thousand years might take a Haswell processor 30 minutes.

Referring to **126,** all evolutionary pathways are virtually isolated to guarantee that their iterations are based solely from the criteria of their own personalities.

In the embodiment:
Pathway B is completely unaware that Pathway C had solved a difficult security problem, and must rely on its own personality traits and learned data to calculate a solution.

The monitoring/interaction system **128** is the platform that injects security events from the Artificial Security Threat (AST) system and relays associated security responses from the security behavior cloud (all according to the specified personality traits).

In the embodiment:
The monitoring system has provided Pathway B the necessary security responses needed to formulate Generation 12.

Artificial Security Threats (AST) **130** is an isolated system which provides a consistent security exploitation environment. It provides security drills for cyber analysts to practice on and to train the system to recognize different potential security responses and traits.

In the embodiment:
The AST system infected a computer on the LAN with malware. Such malware sent sensitive information outside of the network and permanently locked the infected computer.

Referring to **132,** certain pathways may be scrapped because they reached an indefinite state of being unable to solve a security problem. The most likely outcome is that a new pathway must be spawned with a modified personality.

In the embodiment:
Pathway D was unable to solve a security problem for a hundred units of CPU time. Hence the entire pathway was scrapped.

Referring to **134** (security behavior cloud), behavior of cybersecurity analysts are processed and stored so that the evolutionary pathways may learn from them.

In the embodiment:
Pathway A found a lot reactions to security threats that matched the specific situation and the personality type optimistic. Pathway A then creates rules that mimic such behavior.

Referring to **136,** cyber analysts are able to use the Monitoring/Interaction system to view the performance of the pathways, as well as to make custom modifications. Human gives direct orders to Monitoring/Interaction System directly, i.e. Manually abort a pathway, alter master variables in a pathway personality etc.

In the embodiment:
A cyber analyst manually scraped Pathway D because he saw its poor performance was due to an absurd combination of personality traits.

Referring to **138,** the Cross Reference Module is the analytical bridge between a security event and the response made by a cybersecurity analyst. After extracting a meaningful action it pushes it to the trait tagging module. Security events can come from either real events or security drills.

In the embodiment:
A cyber analyst manually increased the risk of an email that had 90% of the allowed limit of SSNs per email. The Cross Reference Module recorded the action as well as the self-proclaimed personality characteristic of this action (which has been defined by the cybersecurity analyst).

The Trait Tagging Module **140** partitions all behavior according to personality type(s).

In the embodiment:
When this cybersecurity analyst flagged this email with 4 SSNs as risky, the module has flagged this as a precautious personality because of its behavioral overlap with past events, but also because the analyst is a self-proclaimed cautionary person.

The Trait Interaction Module **142** analyzes the correlation between different personalities. This information is passed to the Security Behavior Cloud, which is then passed onto the Monitoring/Interaction System and the pathways themselves. The security behavior cloud stores the data from a machine learning process which correlates security events, and what appropriate response to perform depending on what traits are specified.

In the embodiment:
The personalities Unforgiving and Realist have a large overlap in usage and return similar responses for the same event.

### CYBER THREAT INTELLIGENCE IDENTIFICATION INTEGRATION & ANALYSIS (CTI³A)

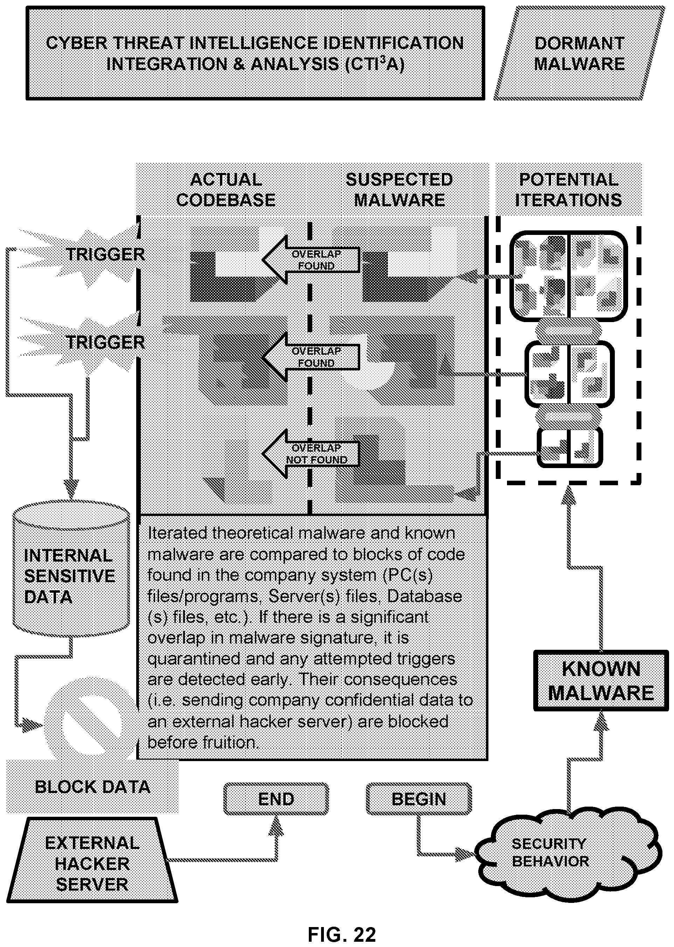

Fig. 22 shows cyber threat intelligence identification integration & analysis algorithm. Definition: Dormant malware masks as normal code that is part of the system, and when it is triggered it attempts to send sensitive information to an external hacker server. The malware can be triggered from a pre-programmed timestamp, an internal event (file saved with title e.g. financial data), or an externally stimulated event such as receipt of an innocuous email.

Malware with known, proven and predictable patterns are passed on for iteration to determine potential future and unknown malware that the system has yet to directly interact with. Iterated theoretical malware and known malware are compared to blocks of code found in the company system (PC(s) files/ programs, Server(s) files, Database(s) files, etc.). If there is a significant overlap in malware signature, it is quarantined and any attempted triggers are detected early. Their consequences (i.e. sending company confidential data to an external hacker server) are blocked before fruition.

### CREATIVITY

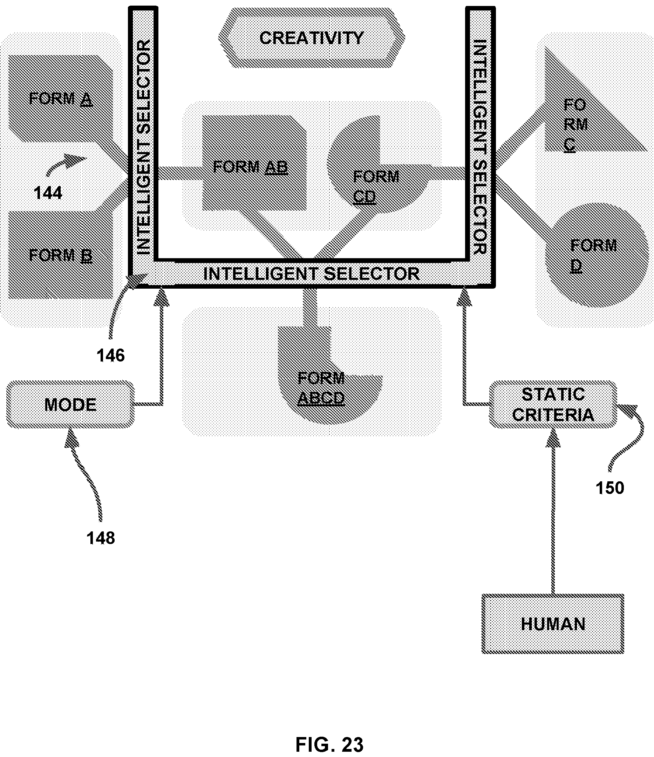

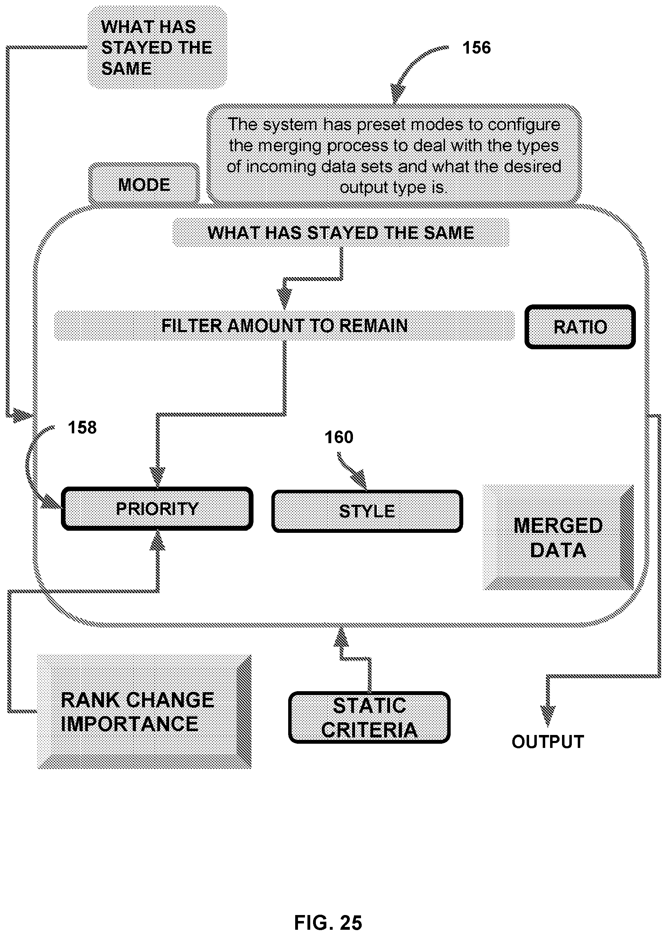

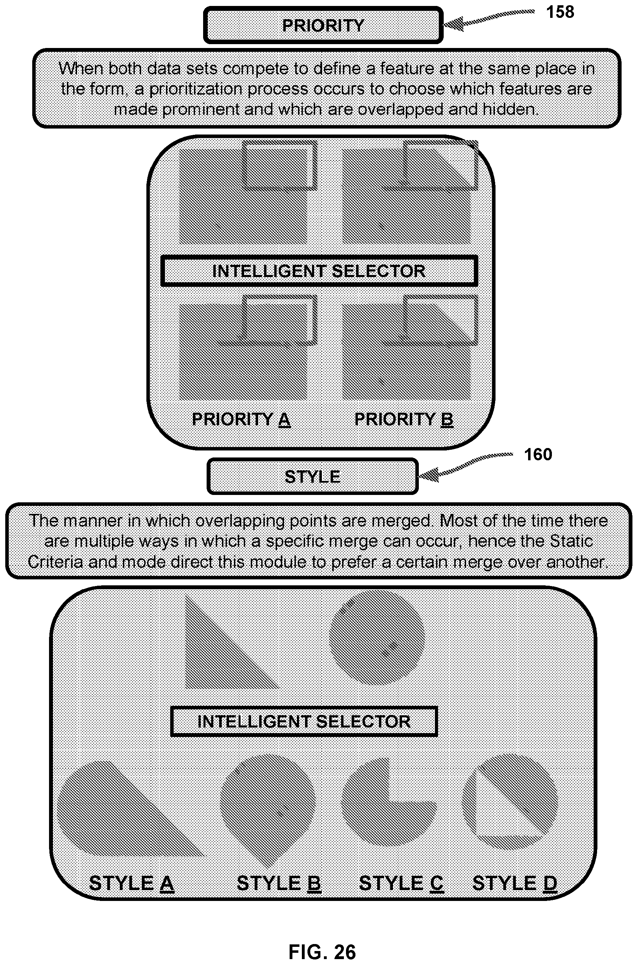

Figs. 23 - 26 show creativity module that performs process of intelligently creating new hybrid forms out of prior forms, and is used as a plug in module to service multiple algorithms.

Referring to **144,** two parent forms (prior forms) are pushed to the intelligent selector to produce a hybrid form. These forms can represent abstract constructs of data. The Intelligent Selector algorithm **146** selects and merges new features into a hybrid form.

In the embodiment:
Form A represents an average model of a security exploit derived by an Exploit DB. Form B represents a new information release by a security ruleset on how it reacted to a security exploit. The information in Form B allows the hybrid form produced to be a better security exploit than what Form A represents.

Mode **148** defines the type of algorithm that the creativity module is being used in. This way the Intelligent Selector knows what parts are appropriate to merge, depending on the application that is being used. The system has preset modes to configure the merging process to deal with the types of incoming data sets and what the desired output type is. The amount of overlapping information is filtered through according to the ratio set by the Static Criteria. If the ratio is set to large then a large amount of form data that has remained consistent will be merged into the hybrid form. If the ratio is set to small then most of hybrid form will be constructed has a very different from its past iterations. When both data sets compete to define a feature at the same place in the form, a prioritization process occurs to choose which features are made prominent and which are overlapped and hidden. The manner in which overlapping points are merged. Most of the time there are multiple ways in which a specific merge can occur, hence the Static Criteria and mode direct this module to prefer a certain merge over another.

In the embodiment:
The Mode is set as `Artificial Security Threat', so the intelligent selector knows that the expected input data is of an Exploit DB representation (Form A) and of newly released information detailed a ruleset reaction to a security exploit (Form B). The attributed Mode defines the detailed method on how to best merge the new data with the old to produce an effective hybrid form.

Static Criteria **150** is provided by a cybersecurity analyst which provides generic customizations for how forms should be merged. Such data may include ranking prioritizations, desired ratios of data, and data to direct merging which is dependent on what Mode is selected.

In the embodiment:
If the Mode is selected as `Artificial Security Threat', then resulting information from a failed exploit should heavily influence the exploit DB to strongly vary the composition of such an exploit. If the exploit keeps failing after such variations, then abandon the exploit completely.

A raw comparison **152** is performed on both incoming forms, dependent on the static criteria provided by the cyber security analyst.

In the embodiment:
After a raw comparison was performed, the vast majority of the forms were compatible according to the static criteria. The only differences found was that Form A included a response that was flagged by the static criteria as 'foreign'. This means the Exploit DB representation Form B does not encompass/ represent a certain anomaly that was found in Form A.

Referring to **154,** Ranks what changes are important and not important according to the provided static criteria.

In the embodiment:
Because an anomaly was found in Form A that is not represented in Form B, the Static Criteria recognizes that this anomaly is of crucial importance, hence it results in a prominent modification being made in the merging process to produce hybrid Form AB.

Referring to **156** (merge - mode, ratio, priority, style), What remains the same and what is found to be different are reassembled into a hybrid form based off of the Static Criteria and the Mode that is being used. Such variations may include the ratio distribution of data, how important are certain data, and how the data should mesh/relate to each other.

In the embodiment:
The rank importance of the anomaly composition is received. After the appropriate adjustments are made, a process which is guided by the Static Criteria discerns if that reaction to the anomaly is incompatible with other parts of the data. The merging process then modifies such pre-existing data so that the anomaly fix can blend in effectively with the pre-existing data.

Referring to **158,** when only one trait can occupy a certain spot (highlighted in red), then a prioritization process occurs to choose which feature. When both data sets compete to define a feature at the same place in the form, a prioritization process occurs to choose which features are made prominent and which are overlapped and hidden.

In the embodiment:
In the diagram, the two potential outcomes are shown. In actuality, only one of these forms may be the final output.

Referring to **160,** most of the time, there are overlapped forms between features, hence a form with merged traits can be produced. The manner in which overlapping points are merged. Most of the time there are multiple ways in which a specific merge can occur, hence the Static Criteria and mode direct this module to prefer a certain merge over another.

In the embodiment:
When a triangle and a circle are provided as input forms, a 'pac-man' shape can be produced.

### SECURITY BEHAVIOR

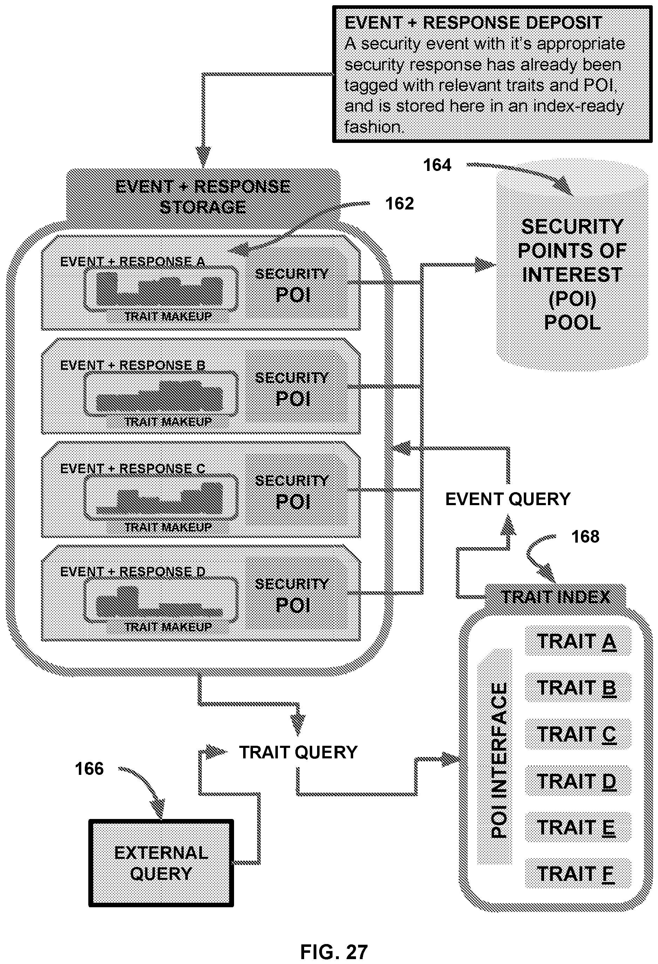

Fig. 27 shows security behavior module. Events, and their respective responses and traits are stored and indexed for future queries

Referring to **162** (event + response storage), an event and its respective response is stored. Trait makeup is defined as well as indexed security Points of Interest (POI) to easily query security events with their appropriate responses.

In the embodiment:
The event of SSNs being transferred via FTP during off hours is stored. The response of blocking the transfer as well as every entity related directly to the sender and receiver is marked as a precautionary response. The POI are the SSN type and FTP protocol.

Referring to **164** (security POI pool), POI are stored here for references, and to bridge with the Trait Index. This way, if someone looks up a trait with some criteria, they will be shown events that are stored. These events are queried via POI indexes.

In the embodiment:
A query to look up strict and neutral traits that deal with SSNs are submitted. The relevant POI are looked up in the POI pool, and the relevant Event + Response storage is retrieved and returned.

An external query **166** is performed to look up either Traits or Events + Responses.

In the embodiment:
A query to look up events that deal with the FTP protocol are submitted. The relevant POI are looked up in the POI pool, and the relevant Event + Response storage is retrieved and returned.

Referring to **168** (trait index), The POI interface connects Trait statistics with relevant Events + Responses.

In the embodiment:
A Trait Query is performed to ask if an optimistic personality would block more than 5 SSNs being sent out. The POI interface looks up the SSN POI, and retrieves Events + Responses to illustrate what an optimistic personality would do.

### RESPONSE PARSER

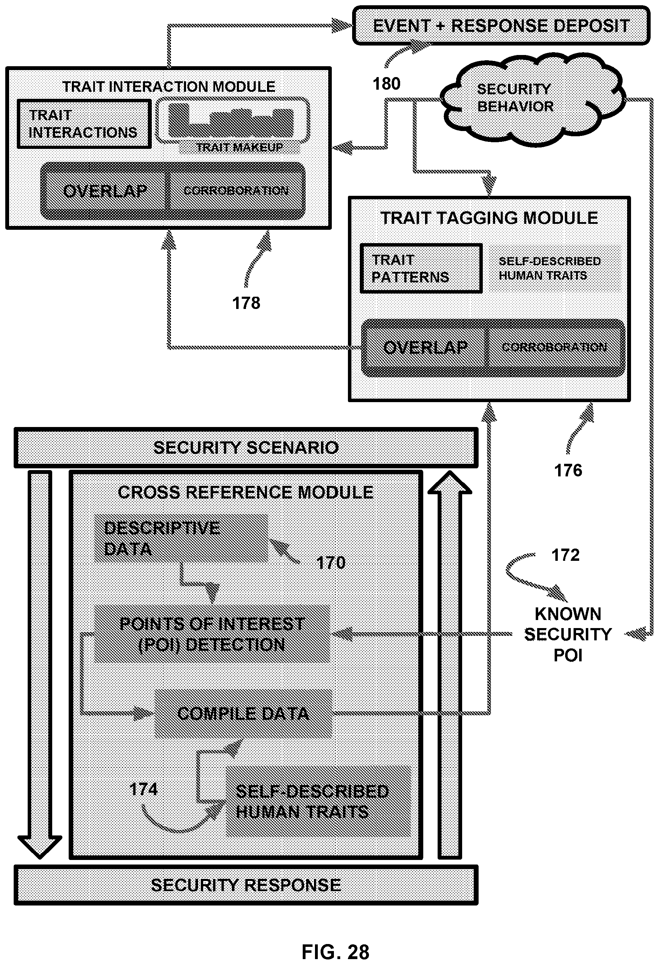

Fig. 28 shows response parser module. The response parser monitor human reactions to security scenarios and discerns the kind of behavior traits that fueled such a security response.

Referring to **170,** Descriptive data from the security scenario (whether it be real or a drill) is received.

In the embodiment:
Security Scenario A describes an atypical amount of SSNs being submitted via an FTP port during company off hours.

Referring to **172,** known security Points of Interest (POI) are provided by the Security Behavior module. Such POI aid in evaluating the security scenario and what parts matter in conjunction with the human response.

In the embodiment:
The SSN being sent are a POI, so they are highlighted in the secure scenario, and are looked for in the human response.

Referring to **174,** the cyber security analyst that is responding to the security threat tags each action with a certain trait. This information is passed on to the Trait Tagging Module.

In the embodiment:
Cyber security analyst John has tagged his response to the SSN security leak as a 'strict' and 'pessimistic' response.

Referring to **176,** the Trait Tagging Module associates the security response with its respective trait. This is done with a mixture of self-prescribed traits by the human, and pattern correlation from past security behavior. The pattern detection checks for overlap with past security behavior, and then if there is self-prescribed tagging it checks to see if this corroborates the module's decision. These variables alter the final confidence in the module's tagging.

In the embodiment:
Past security behavior indicates that security response A is 'pessimistic', and the self-described trait is 'neutral'.

Referring to **178,** the Trait Interaction Module receives a Trait Makeup from the Trait Tagging Module, and assess its internal compatibility.

In the embodiment:
A Trait Makeup included a strong pessimistic trait and a strong optimistic trait. These two are mutually exclusive hence the trait submission is cancelled.

Referring to **180,** the initial security scenario and it's response along with compatible traits are depositing into the Security Behavior cloud.

In the embodiment:
The response to an atypical amount of SSNs being sent over FTP during off hours is to block the transaction and every entity related to the receiver and sender. This is tagged as having a precautionary trait.

### CYBER NEFARIOUS & ANOMALOUS BEHAVIOR DETECTION & ANALYSIS (CNADA)

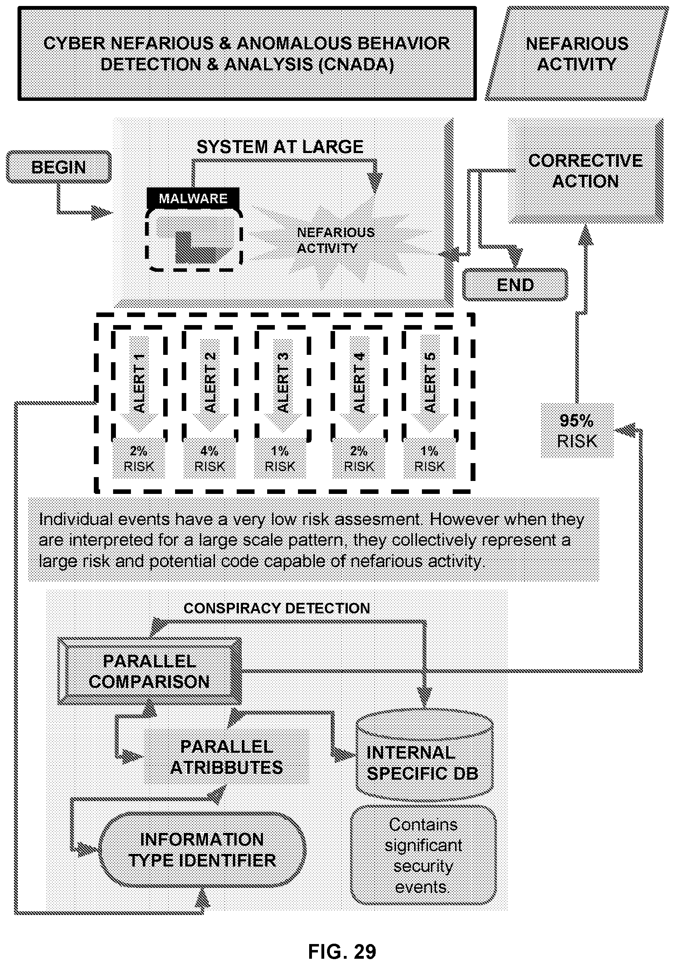

Fig. 29 shows cyber nefarious & anomalous behavior detection & analysis algorithm. Definition: Dormant Malware is remotely planted in a network by visiting a website, clicking on a phishing email or using infected thumb drive, etc. After activation the malware performs nefarious activity that is undetectable from a small isolated amount of alerts but rather a large volume of alerts received from a variety of sources providing the volume of data necessary for the algorithm to detect the nefarious activity. Individual events have a very low risk assessment. However when they are interpreted for a large scale pattern, they collectively represent a large risk and potential code capable of nefarious activity. Information type identifier detects information type/attribute so that an accurate comparison can be performed. The conspiracy detection sub-algorithm checks all possible attribute combinations against the DB for any similarities. The conspiracy detection sub-algorithm receives numerous events (related and unrelated). It performs a large scale pattern comparison with prior significant security events. It reports the risk and the appropriate corrective action is taken. At corrective action stage, an overall risk assessment is calculated through automated iterated generations (analysis) of security alerts that have demonstrated strength in resisting attacks and targeting malware. The active generation receives the 95% risk assessment, and provides an intelligently formulated corrective action.

### ARTIFICIAL SECURITY THREAT

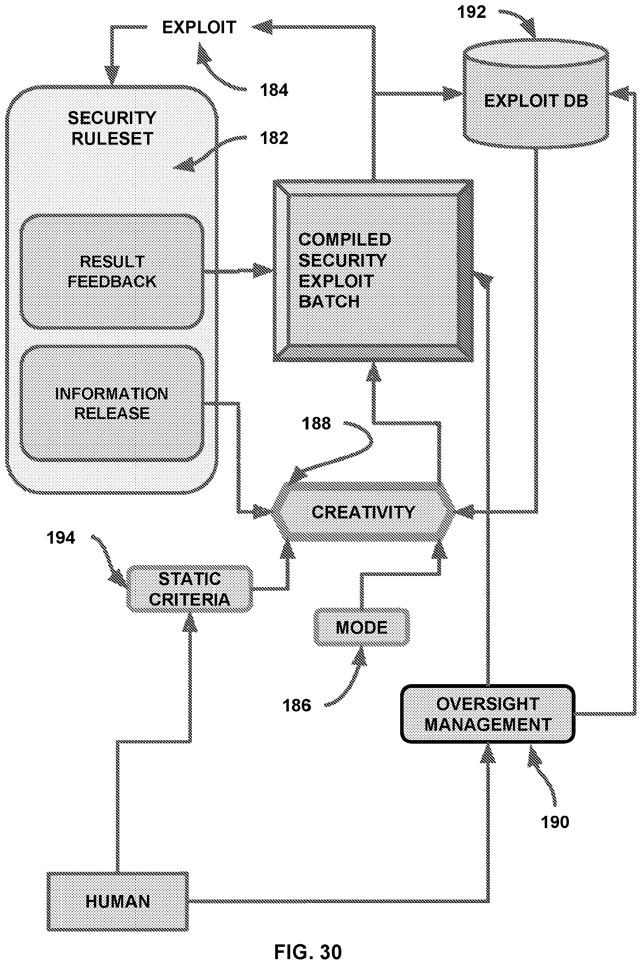

Fig. 30 shows artificial security threat module. This module provides a hypothetical security scenario to test the efficacy of security rulesets. Security threats are consistent in severity and type to provide a meaningful comparison of security scenarios.

Referring to **182,** a security ruleset that is being tested with an artificial exploit. After an exploit is performed, the `Result Feedback' provides an immediate and simple result if the exploit worked and if it should be incorporated into the Exploit DB. The 'Information Release' provides details to the Creativity module for how the next exploit should look like (information is merged between 'Information Release' and the Exploit DB).

In the embodiment:
Security Exploit A failed to penetrate the ruleset, so the Exploit DB is immediately notified to devalue the exploit via 'Result Feedback'. Then the creativity module forms the next exploit via the new 'Information
Release' and the pre-existing exploits in the Exploit DB. This way, the newly made Exploit does not face the same weakness that the previous one did.

Referring to **184** (compiled security exploit batch), an exploit is performed. It is performed as a batch which means that all the evolutionary pathways get tested in parallel and simultaneously with the exact same exploit. This way a legitimate competition between them may be performed to discern the best pathway.

In the embodiment:
Out of the 5 evolutionary pathways that were tested in this Exploit Batch, only 2 resisted the exploit.

Referring to **186,** mode defines the type of algorithm that the creativity module is being used in. This way the Intelligent Selector knows what parts are appropriate to merge, depending on the application that is being used.

In the embodiment:
The Mode is set as `Artificial Security Threat', so the intelligent selector knows that the expected input data is of an Exploit DB representation (Form A) and of newly released information detailed a ruleset's reaction to a security exploit (Form B). The attributed Mode defines the detailed method on how to best merge the new data with the old to produce an effective hybrid form.

Referring to **188,** the Creativity module intelligently produces a hybrid exploit that uses the strengths of prior exploits and avoids known weaknesses in exploits (as known by the `Released Information').

In the embodiment:
Security Exploit A failed to penetrate the ruleset. Exploit B is produced by removing the weakness that was found in Exploit A and making prominent known strengths from the Exploit DB that circumvent the weakness that caused Exploit A to fail.

Oversight management **190** is to monitor and track developments in Exploit storage and usage. Such exploits may be manually produced/modified/removed by cybersecurity analysts.

In the embodiment:
Cybersecurity analyst has monitored a certain exploit development pattern for a week. He notices its progress is improving however he produces a better exploit himself. He removes the old one from the Exploit DB and plugs in his manually produced exploit.

Referring to **192** (exploit DB), exploits are stored along with known behavioral history (how the exploits performed in the past within certain conditions). Exploit importance is also stored, so that the Creativity module can consider the known importance of an exploit.

In the embodiment:
Exploit A is one of the strongest and reliable exploits in the DB. It has a long history of working well in varying conditions and against varying rule sets. It is labeled as high value/importance in the Exploit DB.

Static Criteria **194** is provided by a cybersecurity analyst which provides generic customizations for how forms should be merged. Such data may include ranking prioritizations, desired ratios of data, and data to direct merging which is dependent on what Mode is selected.

In the embodiment:
The Mode is selected as `Artificial Security Threat'. The resulting information from a failed exploit heavily influences the exploit DB to strongly vary the composition of such an exploit. If the exploit keeps failing after such variations, then abandon the exploit completely.

### MONITORING/INTERACTION SYSTEM

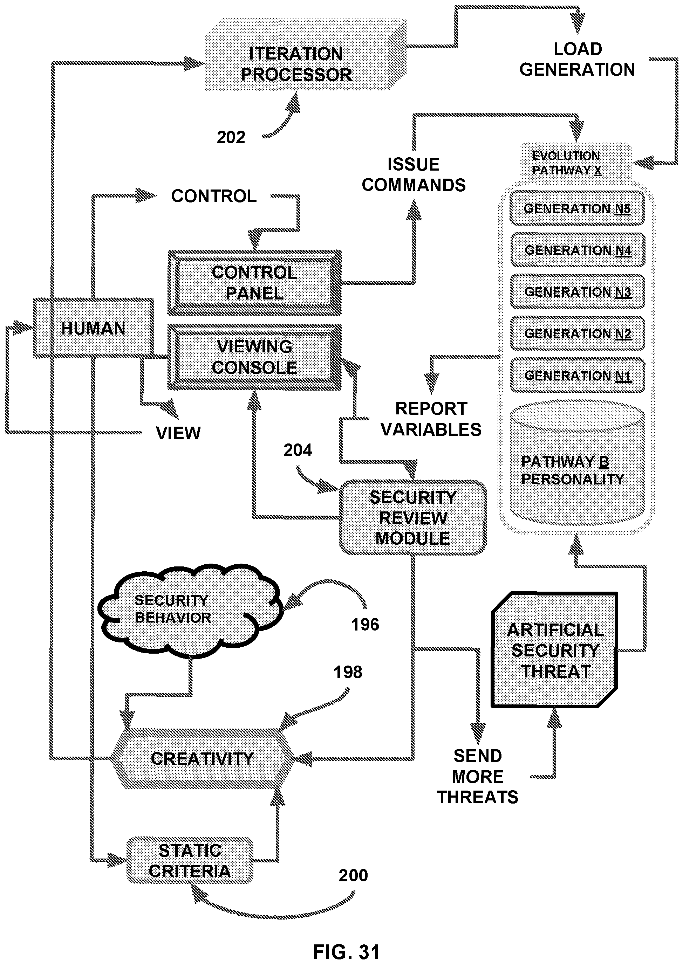

Fig. 31 shows monitoring/interaction system module. This module is the middleman between evolutionary pathways and data banks/human intervention.

Referring to **196,** Behavior of cybersecurity analysts are processed and stored so that the evolutionary pathways may learn from them.

In the embodiment:
Pathway A found a lot reactions to security threats that matched the specific situation and the personality type *optimistic.* Pathway A then creates rules that mimic such behavior.

Referring to **198,** the Creativity module is being used here to produce the next generation for a pathway. The two input forms are compiled Security Behavior from **196** and variables from the Security Review Module **204.** The resultant hybrid form is pushed to the Iteration Processor **202.**

In the embodiment:
The Security Review Module has reported that Generation 9 as being weak. It highlights the security flaws and passes it on to the Creativity module. The Creativity module performs its merging process with known security behavior to produce a more resilient generation that solves the security flaw.

Referring to **200,** static criteria is provided by a cybersecurity analyst which provides generic customizations for how forms should be merged. Such data may include ranking prioritizations, desired ratios of data, and data to direct merging which is dependent on what Mode is selected.

In the embodiment:
The Mode is selected as 'Iteration Processor'. The resulting information from the 'Security Review Module' indicates a security flaw in the current generation. This information is merged with known Security Behavior to produce a hybrid generation that fixes the security flaw.

Referring to **202,** the Iteration Processor processes the hybrid form pushed from the Creativity module, and assembles a new generation that assimilates into the relevant evolutionary pathway.

In the embodiment:
The Creativity module sent the construct points for Generation 10. The processing of Generation 9 was suspended, Generation 10 was loaded into the virtualized environment, and security threats were activated.

Referring to **204,** the Security Review Module receives report variables from the evolutionary pathway to evaluate its security performance against the Artificial Security Threat (AST) system. It pushes the assembled report for cyber security analyst viewing, and to the Creativity module to iterate the next Generation.

In the embodiment:
Generation 9 reported variables that equated to a security flaw, so the viewing module was notified and the Creativity module was given the details needed to produce a hybrid form (next generation) that omits such security flaws.

### SECURITY REVIEW MODULE

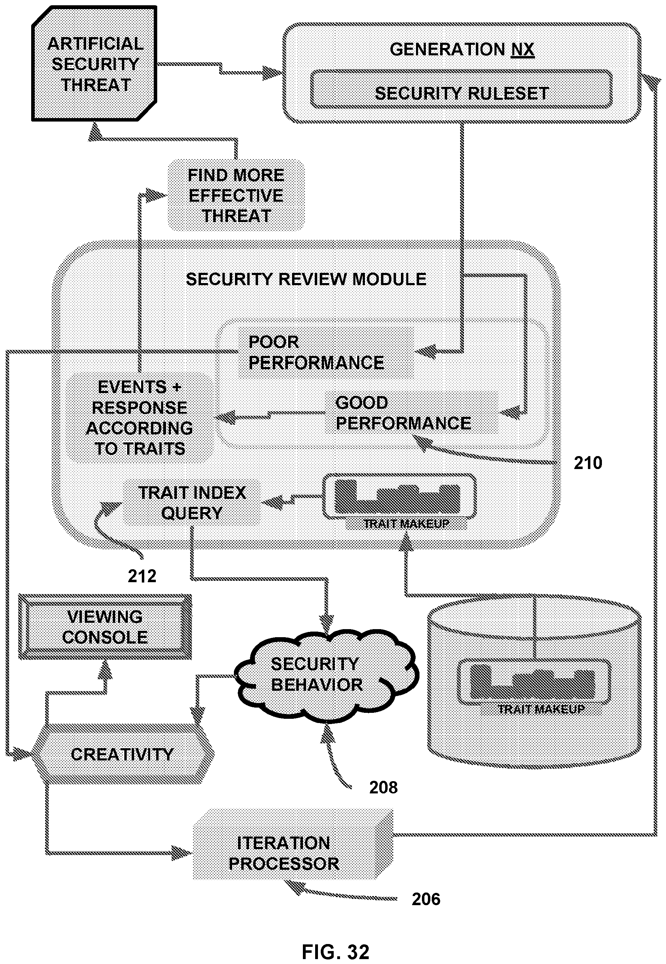

Fig. 32 shows security review module, which belongs exclusively to the monitoring/interaction system.

The Creativity module pushes a hybrid form to the iteration processor 206, which manages the technical tasks of loading the next generation.

In the embodiment:
The Creativity module sent the construct points for Generation 10. The processing of Generation 9 was suspended, Generation 10 was loaded into the virtualized environment, and security threats were activated.

The Security Behavior cloud **208** is used to provide an input form for the Creativity module and to supply relevant Events + Responses to the Security Review Module. The criteria is determined via a Trait Index Query.

In the embodiment:
A Trait Index Query was performed for 'very pessimistic'. Hence Events + Responses that are related to an overall pessimistic trait makeup was provided to the security module to look for weaknesses in the ruleset. The Security Behavior cloud also provided a base form for input to create an overall pessimistic hybrid form.

Referring to **210,** When a poor performance evaluation is received, the Creativity module iterates a new generation to attempt to overcome the flaws. If a good performance evaluation is received, the Security Review Module attempts to find a better exploit to break the exploit.

In the embodiment:
The ruleset performed very well, so the generation was not iterated but instead a stronger more relevant exploit was found in the Events + Responses query, and is about to be run against the generation.

Referring to **212**, the pathway personality provides a trait makeup to inform the Security Behavior cloud and eventually the Creativity Module on guidelines for how the generational ruleset should be composed.

In the embodiment:
Since this pathway personality is overall 'strict', the Creativity module received forms that maintain traits and characteristics of traits. Even after many iterations, the ruleset still maintains a general personality of 'strict.'

### AUTOMATED GROWTH GUIDANCE

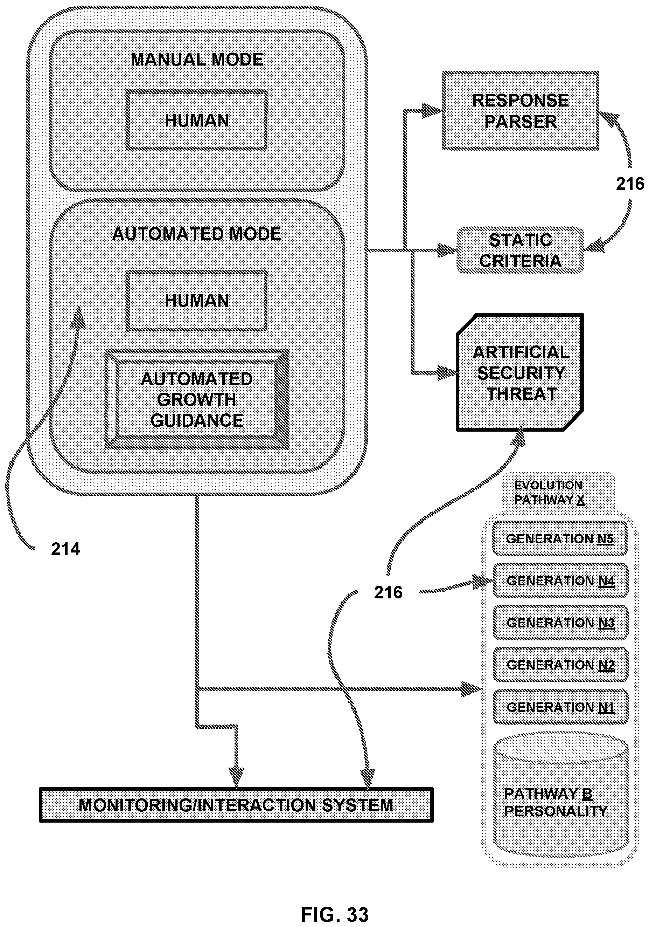

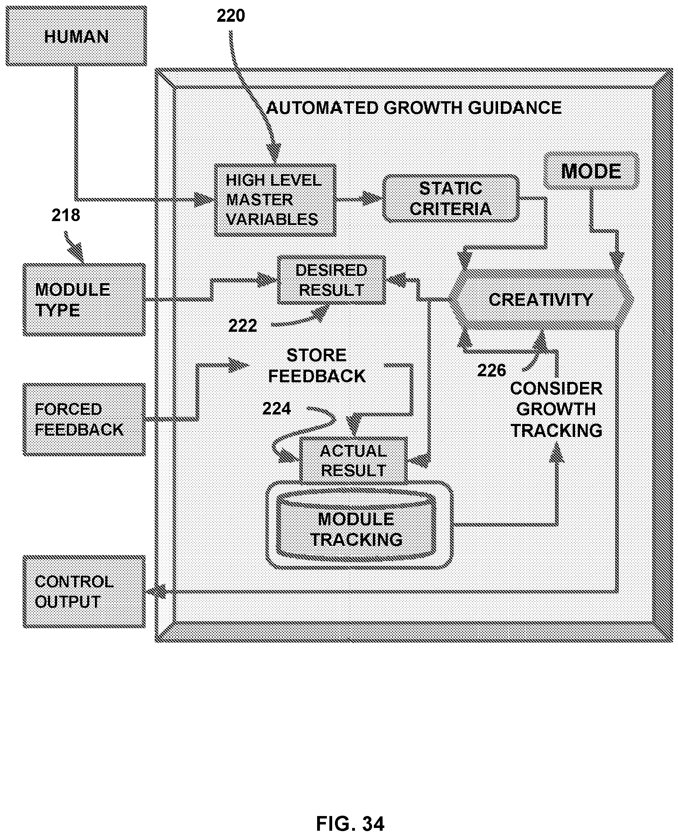

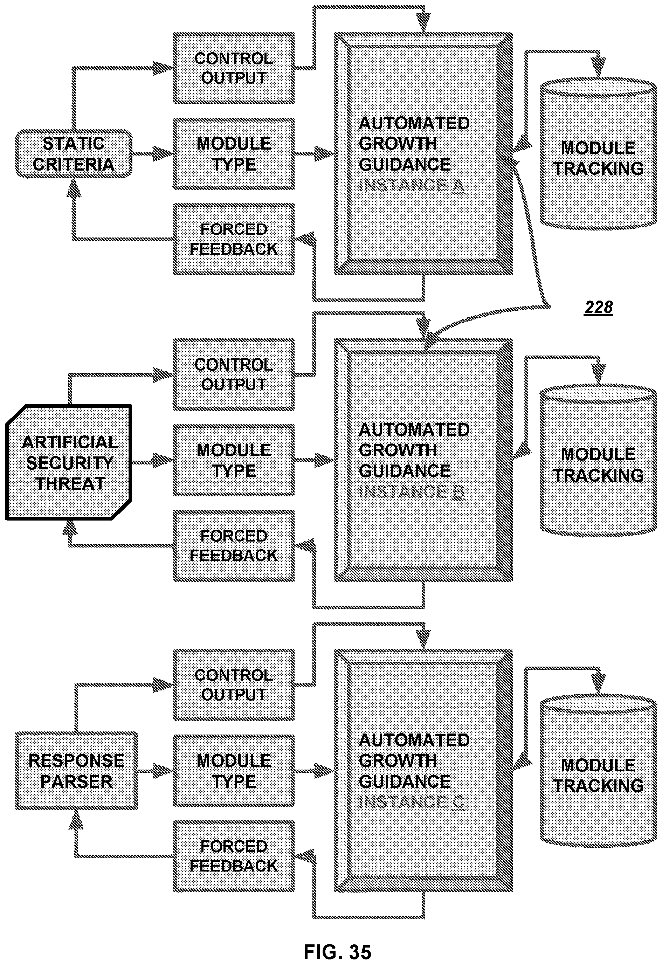

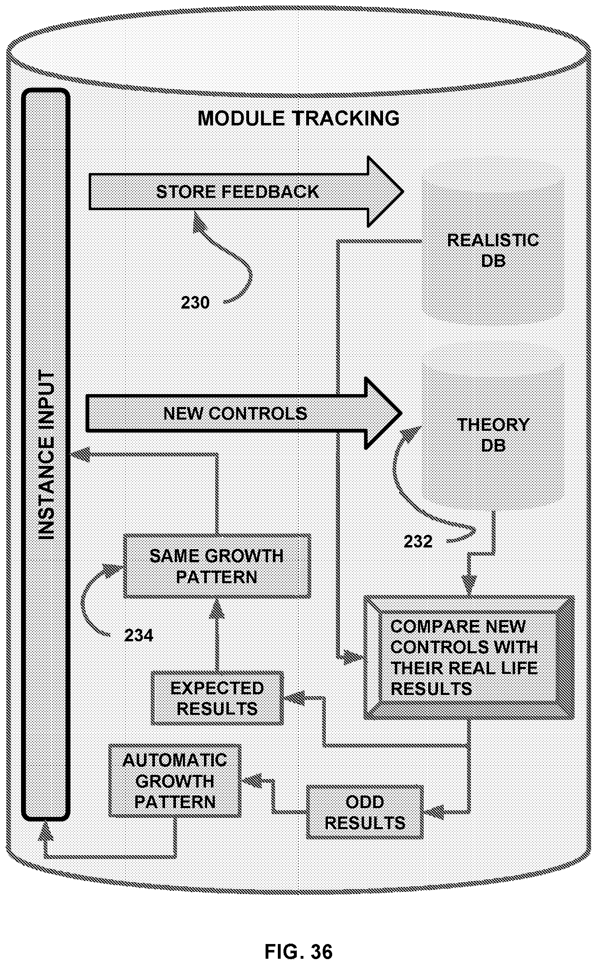

Figs. 33 - 36 show automated growth guidance module, which Adds a layer between the human and human controlled functions to further automate system growth and maintenance at large.

Referring to **214**, in manual mode, the cyber security analyst directly controls the relevant variables. In automatic mode, the analyst controls much fewer variables, and the entire control process is automated to guide the growth of the system at large.

In the embodiment:
The system was placed in Automatic mode and neutral settings, hence the entire system was best setup to eventually adapt to all manners of security threats and the custom environment of the enterprise network.

Referring to **216,** listed are the various modules that receive direct control from the human, and hence the Automated Growth Guidance system can intervene and act as a bridge between the human and the module.

In the embodiment:
The Automated Growth Guidance system automatically tuned the Artificial Security Threat module to provide more effective threats in the long term.

Referring to **218,** the module type is provided to discern what the desired module result/behavior is. Forced feedback is a response mechanism that a module informs about its current condition every time it is given new instructions.

In the embodiment:
The module type is set as Artificial Security Threat (AST), hence desired result is calculated by telling the Creativity module what the type is.

Referring to **220,** high level variables are few in number and are still controlled by the human. They direct the entire system on large and long term scale.

In the embodiment:
The variable 'system safety' was set to high, so the entire system was set to non-risky, gradual and predictable settings.

Referring to **222**, the Creativity module discerns a new desired result after being given the previous desired result and the actual result.

In the embodiment:The new desired result is that Artificial Security Threat (AST) system should be more aggressive.

Referring to **224,** the actual result (status and state of the module) is stored in the module tracking DB. This is populated directly by the module itself and the Creativity module (this part specifically is for theoretical controls that may be implemented in the future). The module tracking DB itself provides an input form to the Creativity module which reflects the internally chosen growth pattern for the controlled module.

In the embodiment:
Module tracking internally chose an alternate pattern because the previous one wasn't working. This new pattern of data was sent to the Creativity module as an input form.

Referring to **226**, the Creativity module pushes the new controls for the module to the module tracker and the module itself.

In the embodiment:
The Creativity module produced controls for the AST system that taught it a new exploit with the FTP protocol.

Referring to **228,** modules are controlled in parallel, except that the module tracking operates in a single instance and is partitioned to deal with multiple modules simultaneously.
- Modules are controlled in parallel, except that the module tracking operates in a single instance and is partitioned to deal with multiple modules simultaneously.

In the embodiment:
The AST system and the evolutionary pathway container were both modified simultaneously in two separate processing threads.

Referring to **230,** feedback from the controlled module is stored in the Realistic DB, which represents information derived from actual module history.

In the embodiment:
The AST sent feedback that its security exploits were performing very poorly in general.

Referring to **232,** the theory DB contains theoretical controls (not be be confused with desired results, which deals specifically with *results* and not *controls)* for the module. These theoretical results are populated by the Creativity module.

In the embodiment:
The Creativity module sent the theoretical control of the AST system performing a new exploit of the FTP protocol.

Referring to **234,** if a control performs as expected that the same growth pattern is kept, and the inverse is true. Growth patterns affect the Creativity module input.

In the embodiment:
The growth pattern of rapidly adding new exploit types to the AST system has been working, so the Creativity module persists in this growth pattern.

### MALWARE PREDICTIVE TRACKING

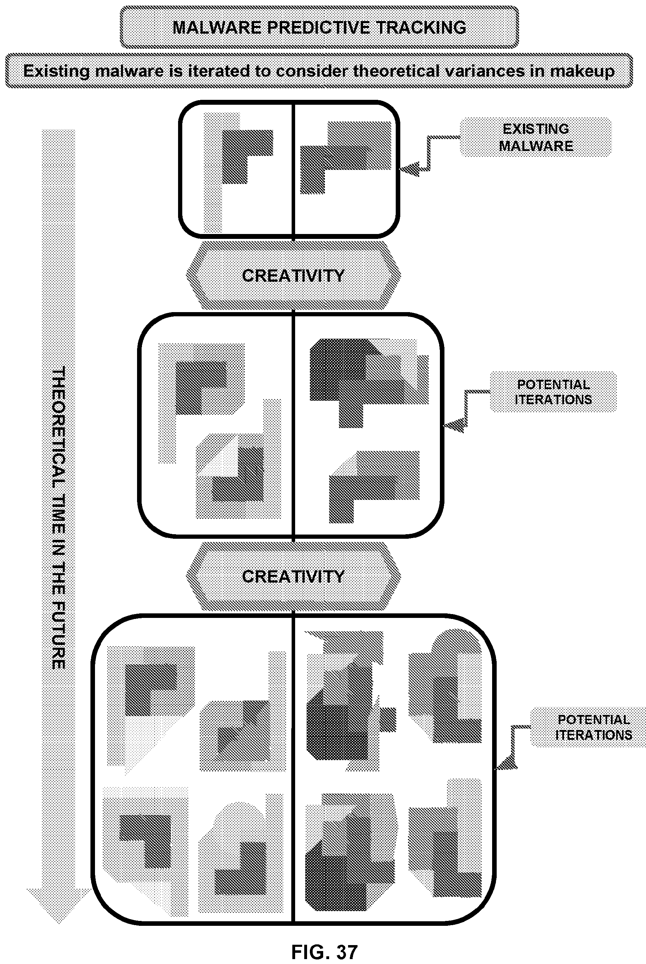

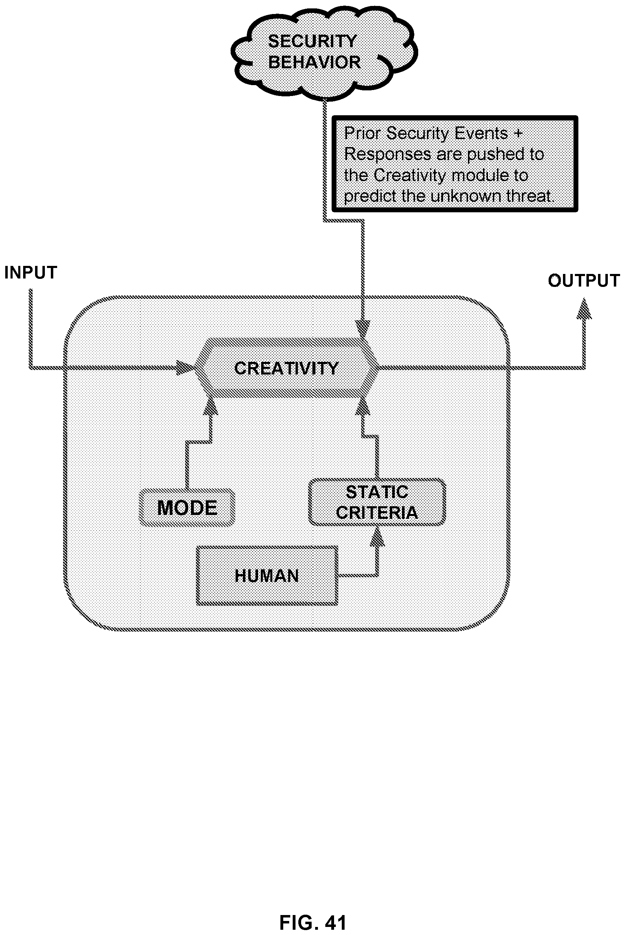

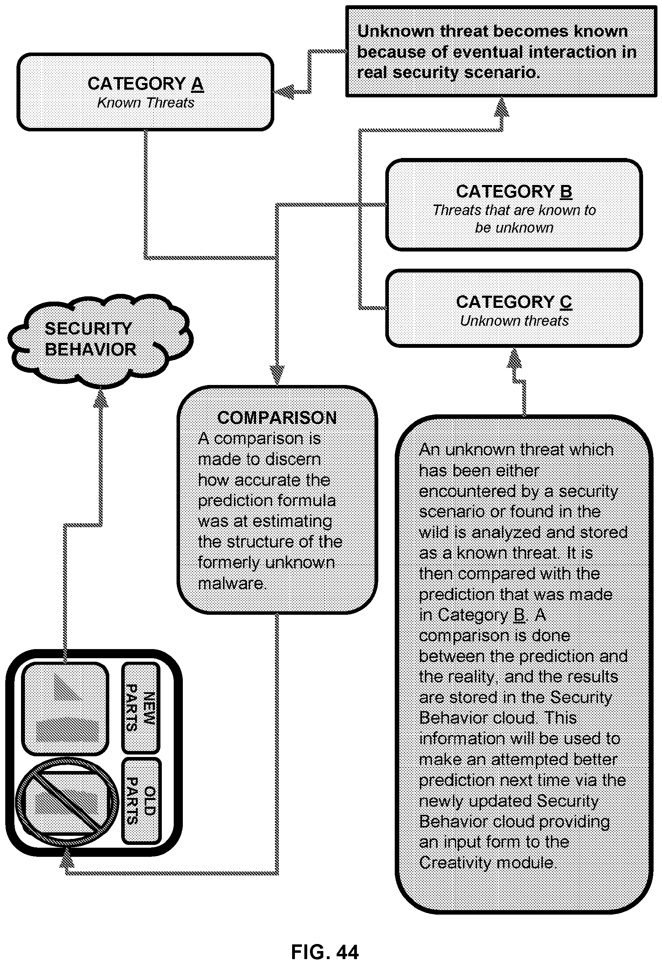

Figs. 37 - 45 show malware predictive tracking algorithm, which leverages the Creativity module to iterate malware evolution patterns with various scopes. These iteration scopes represent different priorities in the long term analysis of malware prediction, which faces a tradeoff between accuracy and efficiency. Known threats are used as an analogy to predict the range and makeup of unknown threats.

Referring to Fig. 37, existing malware is iterated to consider theoretical variances in makeup. As the theoretical time progresses, the malware evolves interacting with the creativity module.

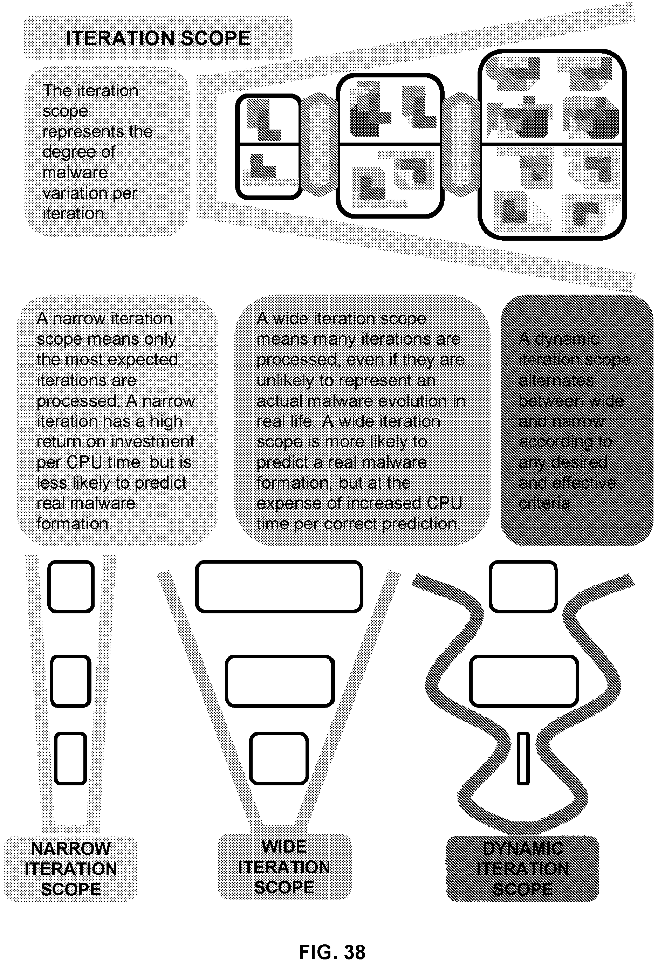

Referring to Fig. 38, the iteration scope represents the degree of malware variation per iteration. A narrow iteration scope means only the most expected iterations are processed. A narrow iteration has a high return on investment per CPU time, but is less likely to predict real malware formation. A wide iteration scope means many iterations are processed, even if they are unlikely to represent an actual malware evolution in real life. A wide iteration scope is more likely to predict a real malware formation, but at the expense of increased CPU time per correct prediction. A dynamic iteration scope alternates between wide and narrow according to any desired and effective criteria.

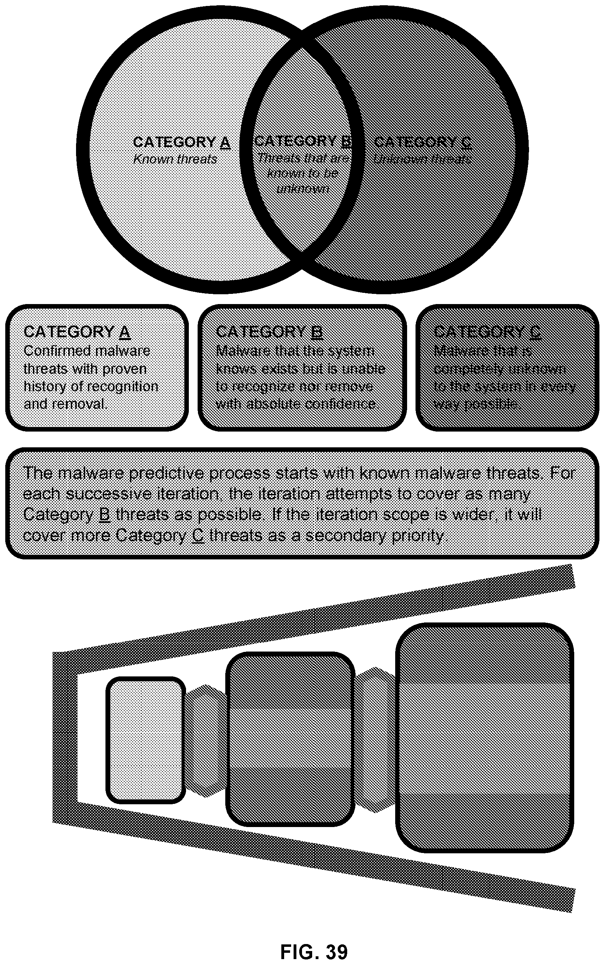

Referring to Fig. 39, CATEGORY A represents confirmed malware threats with proven history of recognition and removal. CATEGORY B represents malware that the system knows exists but is unable to recognize nor remove with absolute confidence. CATEGORY C represents malware that is completely unknown to the system in every way possible. The malware predictive process starts with known malware threats. For each successive iteration, the iteration attempts to cover as many Category B threats as possible. If the iteration scope is wider, it will cover more Category C threats as a secondary priority.

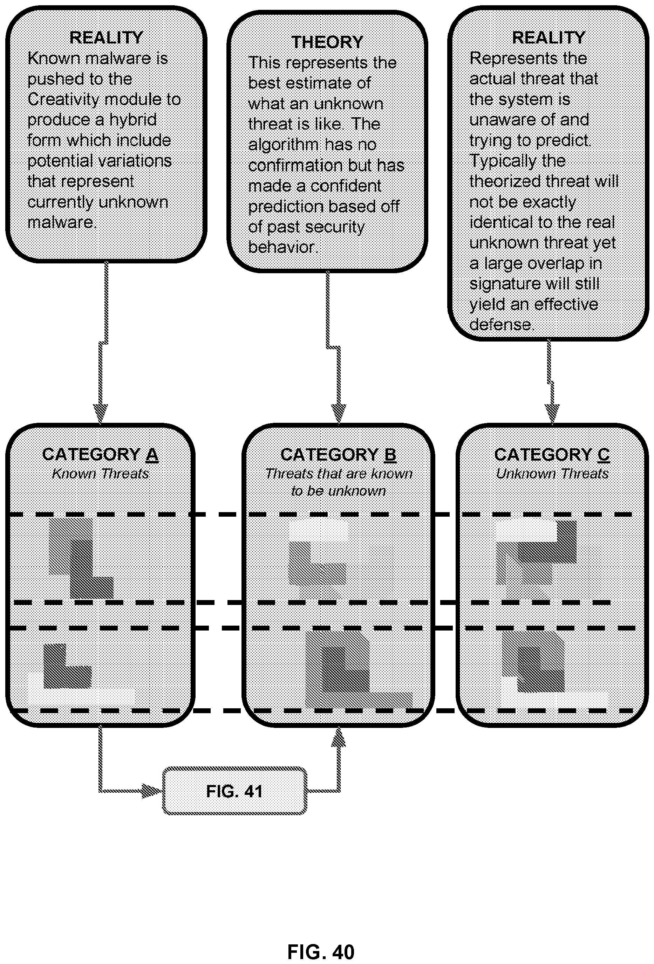

Referring to Fig. 40-41, the process starts from category A. Known malware is pushed to the Creativity module to produce a hybrid form which include potential variations that represent currently unknown malware. By the security behavior cloud, prior Security Events + Responses are pushed to the Creativity module to predict the unknown threat. Then based on category B, a theoretical process represents the best estimate of what an unknown threat is like. The algorithm has no confirmation but has made a confident prediction based off of past security behavior. A process based on category C represents the actual threat that the system is unaware of and trying to predict. Typically the theorized threat will not be exactly identical to the real unknown threat yet a large overlap in signature will still yield an effective defense.

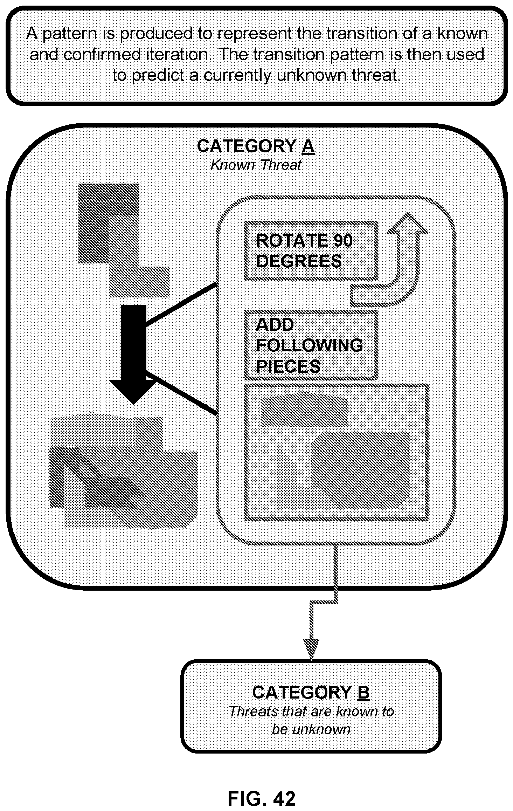

Referring to Fig. 42, a pattern is produced to represent the transition of a known and confirmed iteration. The transition pattern is then used to predict a currently unknown threat. The transition pattern is used to predict what a known malware might evolve into. The pieces added are not the exact same as those which were added in the known iteration, because this new color set matched the initial threat better. This means that the pattern iteration is dynamic and the iterative characteristics depends on the initial input.

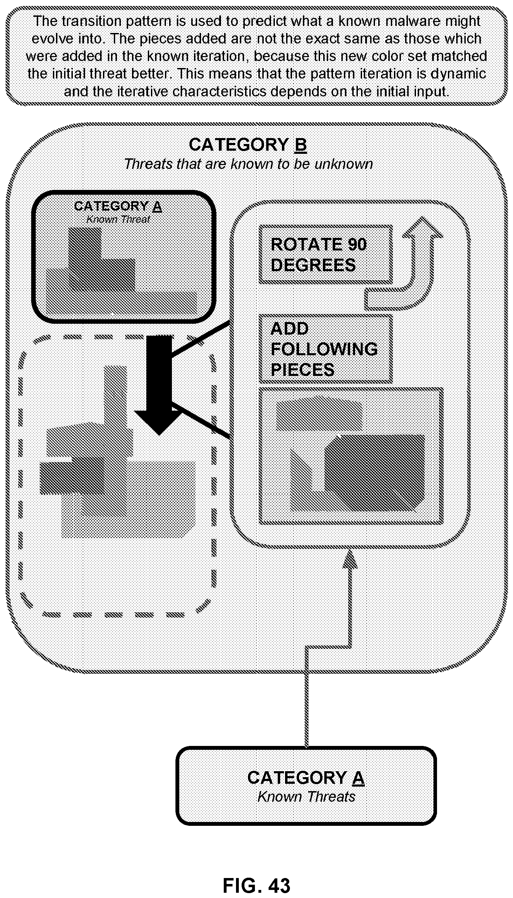

Referring to Fig. 43-44, related to category C, an unknown threat which has been either encountered by a security scenario or found in the wild is analyzed and stored as a known threat. It is then compared with the prediction that was made in Category B. A comparison is done between the prediction and the reality, and the results are stored in the Security Behavior cloud. This information will be used to make an attempted better prediction next time via the newly updated Security Behavior cloud providing an input form to the Creativity module. Unknown threat becomes known because of eventual interaction in real security scenario. Then a comparison is made to discern how accurate the prediction formula was at estimating the structure of the formerly unknown malware.

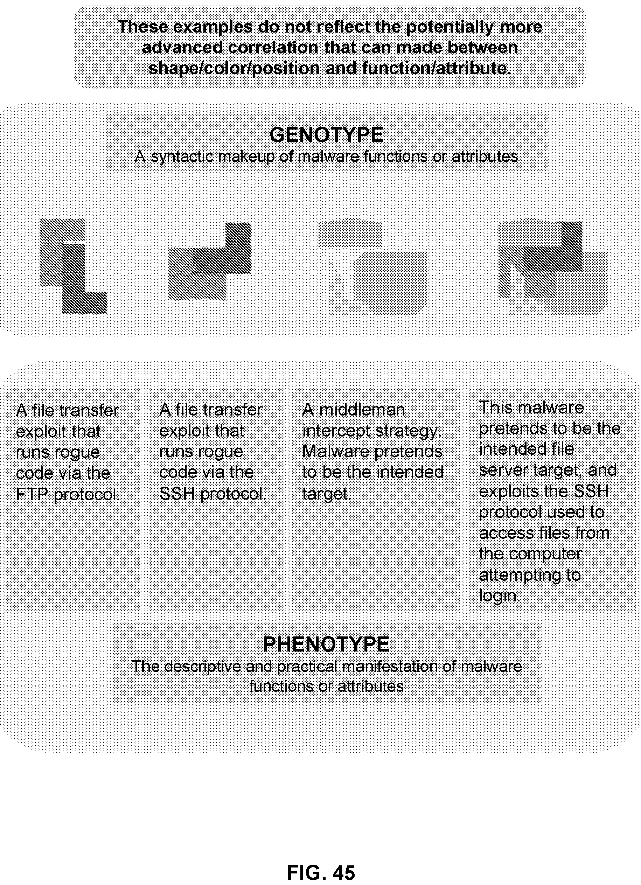

Referring to Fig. 45, while the examples shown do not reflect the potentially more advanced correlation that can made between shape/color/position and function/attribute, many examples of malware are illustrated that can be represented by certain attributes. For example, the four combinations of different geometrical shapes represent genotype, a syntactic makeup of malware functions or attributes. The four phenotypes of malware represent the descriptive and practical manifestation of malware functions or attributes, which are (1) a file transfer exploit that runs rogue code via the FTP protocol; (2) a file transfer exploit that runs rogue code via the SSH protocol; (3) a middleman intercept strategy. Malware pretends to be the intended target; and (4) this malware pretends to be the intended file server target, and exploits the SSH protocol used to access files from the computer attempting to login.

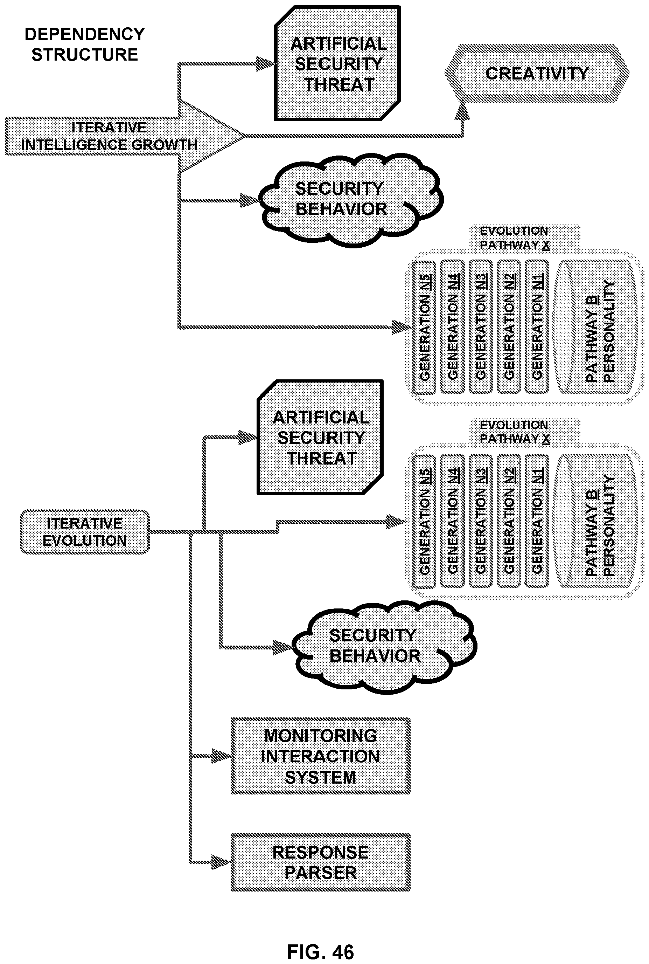

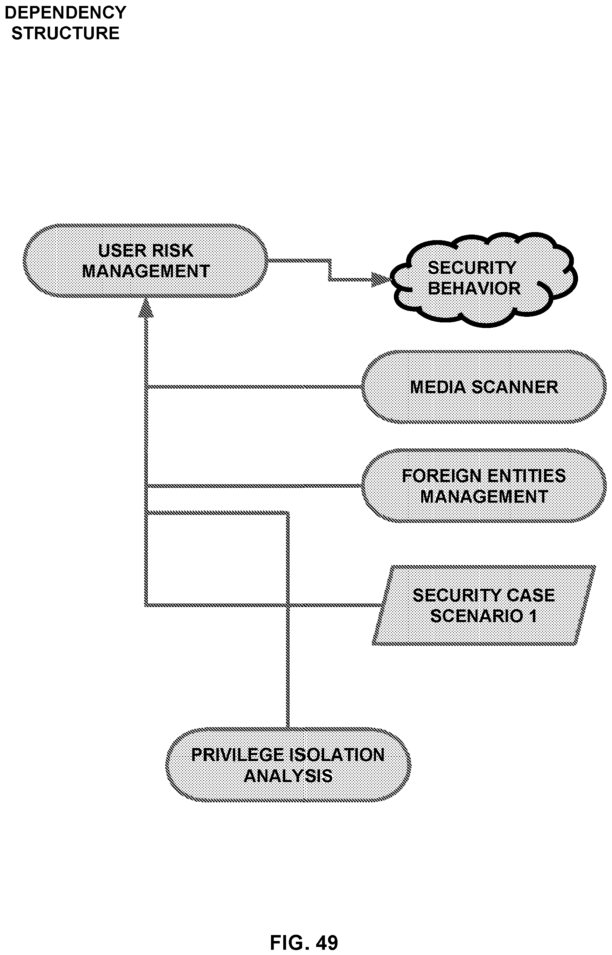

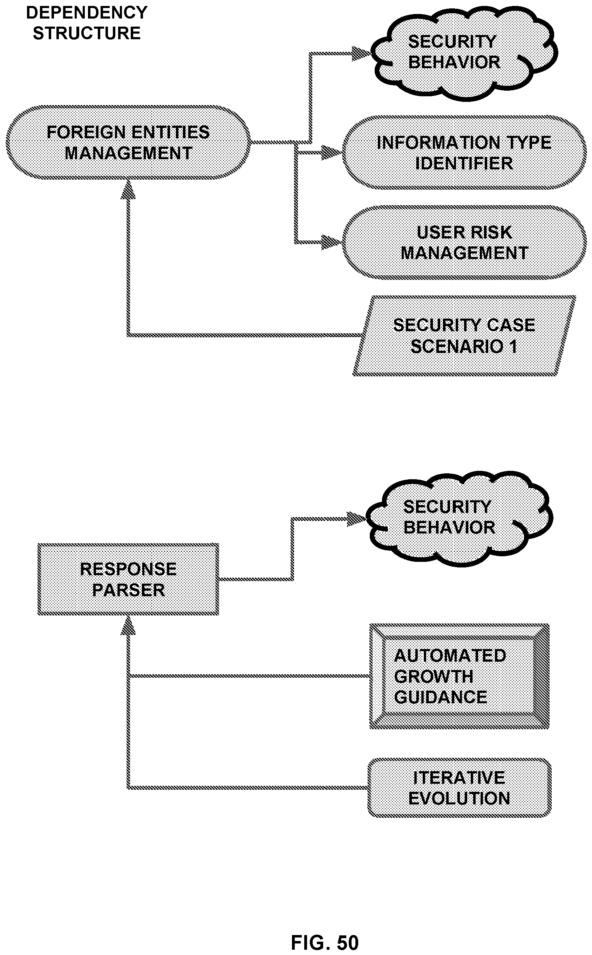

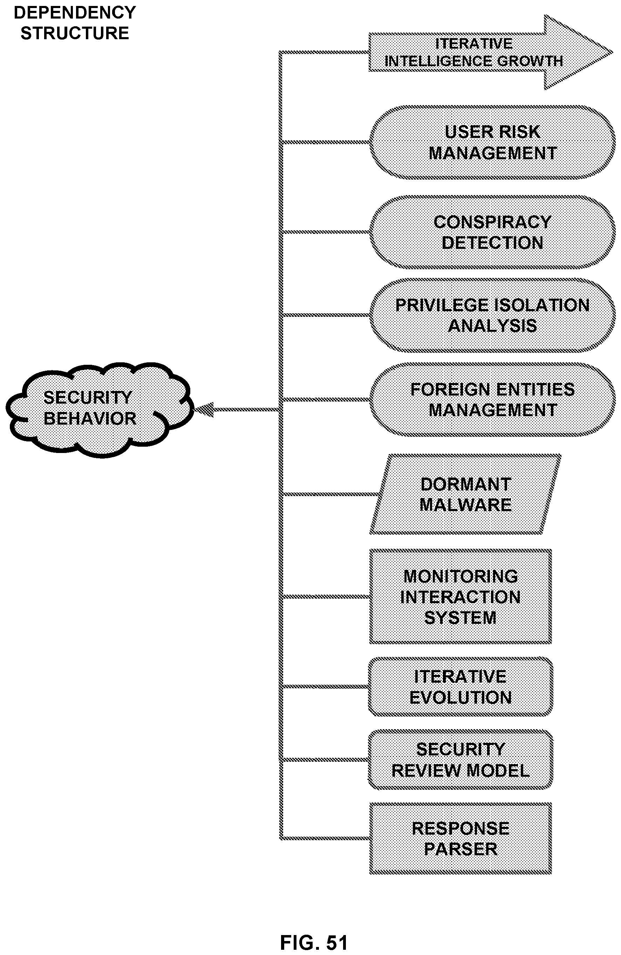

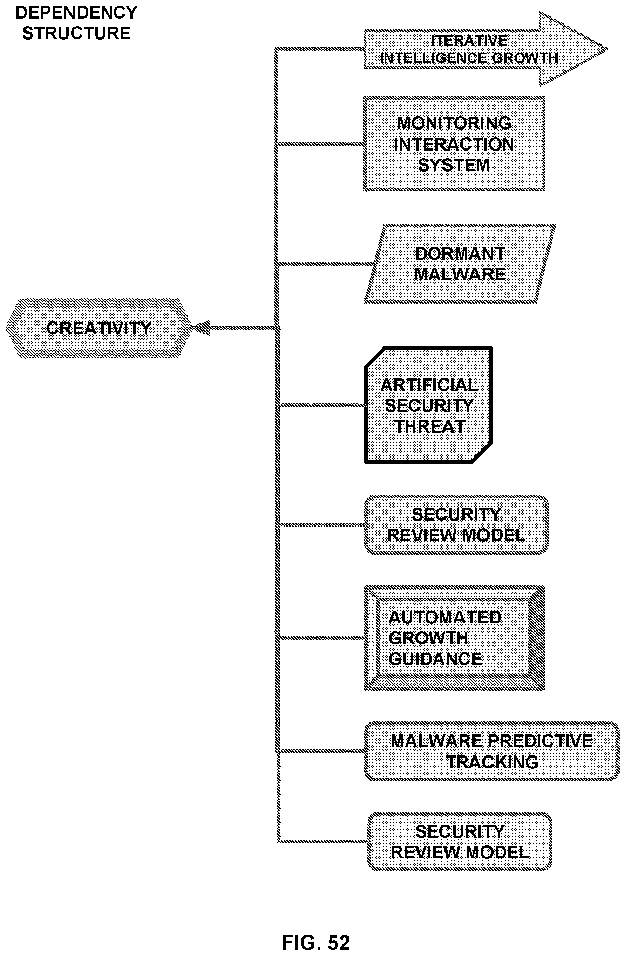

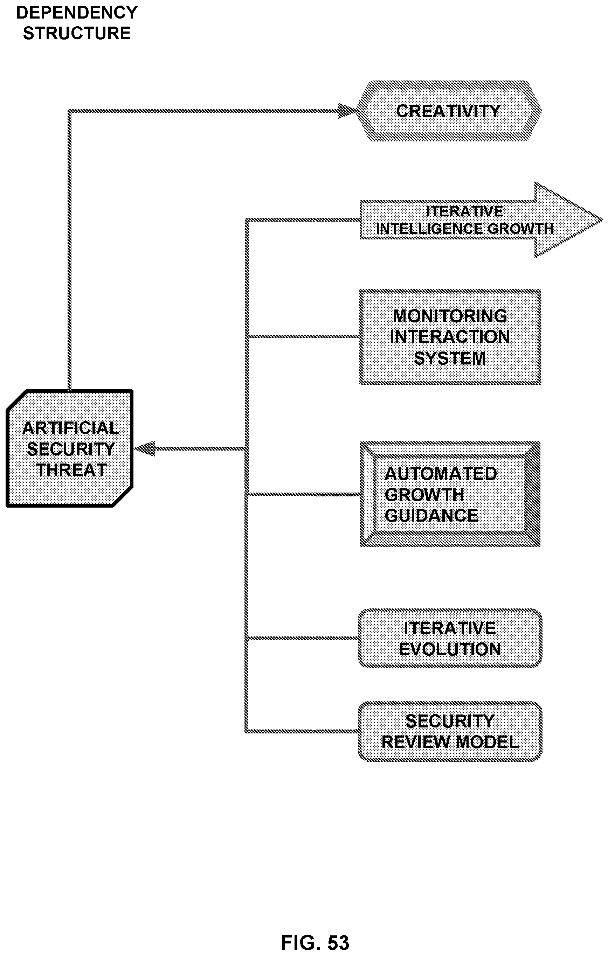

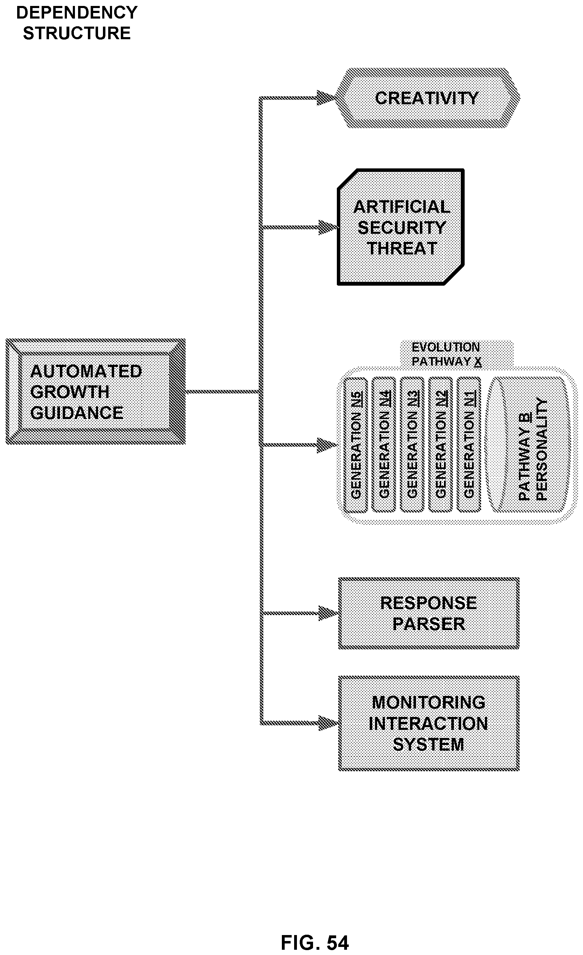

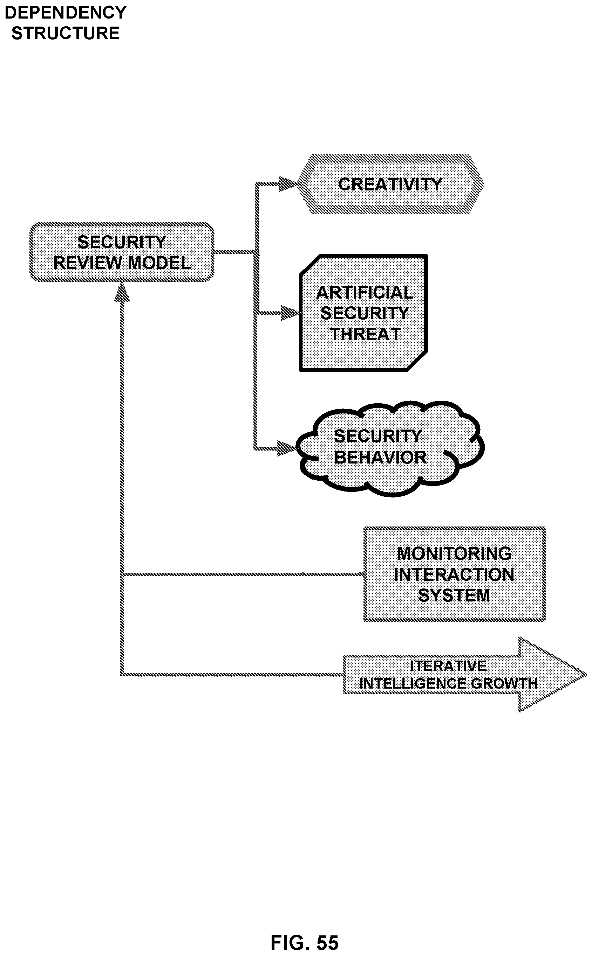

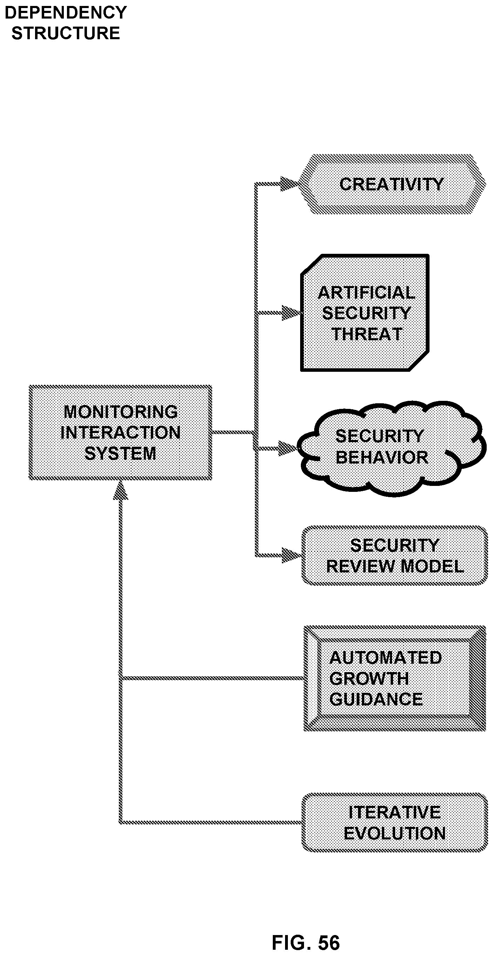

Figs. 46 - 56 are schematic diagrams showing a dependency map among algorithms and/or modules for the network security system of the present invention.

Fig. 46 is a schematic diagram showing dependencies for general algorithms. The ITERATIVE INTELLIGENCE GROWTH algorithm produces generational rulesets, and channels the evolution via 'personality' trait definitions. Such rulesets are used to process incoming security alerts, and perform the most desired notification and corrective action. The iterative intelligence growth algorithm depends on the creativity module, the artificial security threat module, the security behavior module and the evolution pathway module.

In the ITERATIVE EVOLUTION algorithm, parallel evolutionary pathways are matured and selected. Iterative generations adapt to the same Artificial Security Threats (AST), and the pathway with the best personality traits ends up resisting the security threats the most. The iterative evolution algorithm depends on the monitoring interaction system module, the artificial security threat module, the security behavior module and the evolution pathway module.

The EVOLUTION PATHWAY X algorithm is a virtually contained and isolated series of ruleset generations. Evolutionary characteristics and criterion are defined by such Pathway Personality X. The automatic growth guidance module, the iterative evolution module and the iterative intelligence growth module depend on the evolution pathway X algorithm.

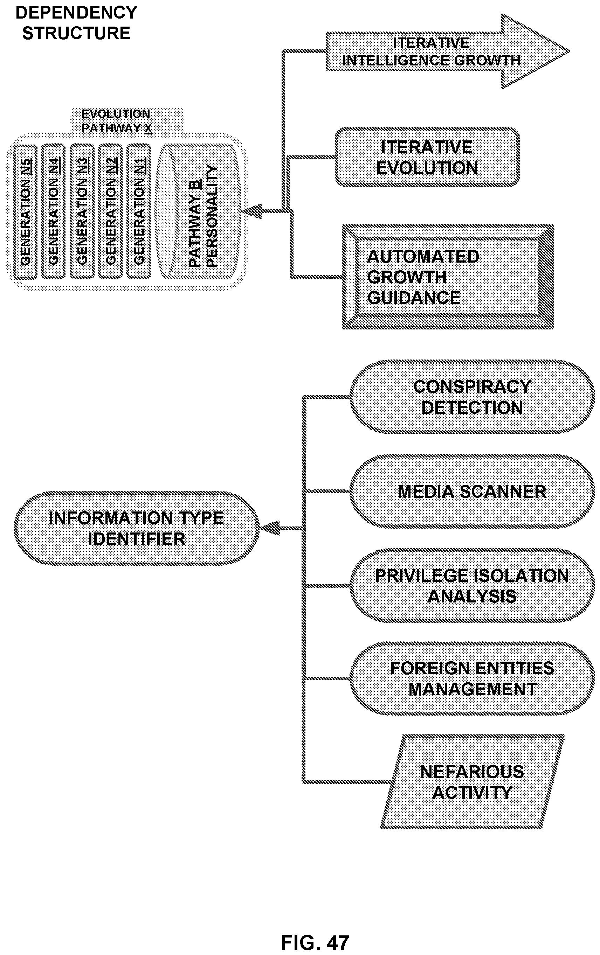

Fig. 47 is a schematic diagram showing dependencies for sub-algorithms. The INFORMATION TYPE IDENTIFIER sub-algorithm determines the type/nature of unknown data. It can determine whether the unknown data is a social security number, home address, phone number etc. The conspiracy detection sub-algorithm, the privilege isolation analysis sub-algorithm, the media scanner sub-algorithm, the foreign entities management sub-algorithm, and the nefarious activity module depend on the information type identifier sub-algorithm.

The CONSPIRACY DETECTION sub-algorithm provides a routine background check for multiple 'conspiratorial' security events, and attempts to determine patterns and correlations between seemingly unrelated security events. The conspiracy detection sub-algorithm depends on the information type identifier sub-algorithm and the security behavior module.

The MEDIA SCANNER sub-algorithm receives a document/photo etc. and checks for illegal information transfer and inconsistent/suspicious behavior for the expected composition of such media. The media scanner sub-algorithm depends on the information type identifier sub-algorithm, and the user risk management sub-algorithm. The security case scenario 1 module depends on the media scanner sub-algorithm.

The PRIVILEGE ISOLATION ANALYSIS sub-algorithm is a consistently invoked process that determines if a user or process is permitted to be in its sector of activity. The privilege isolation analysis sub-algorithm depends on the information type identifier sub-algorithm, the user risk management sub-algorithm and the security behavior module. The security case scenario 1 module depends on the privilege isolation analysis sub-algorithm.

The USER RISK MANAGEMENT sub-algorithm determines the overall risk assessment for a user. Risk factors include policy violations, excessive usage, suspicious operations enacted etc. The user risk management sub-algorithm depends on the security behavior module. The media scanner sub-algorithm, the privilege isolation analysis sub-algorithm, the foreign entities management sub-algorithm, and the security case scenario 1 module depend on the user risk management sub-algorithm.

The FOREIGN ENTITIES MANAGEMENT sub-algorithm manages perceived foreign threats by constantly upgrading and downgrading their severity based upon requests they make to the isolated network of the enterprise. The foreign entities management sub-algorithm depends on the information type identifier sub-algorithm, the user risk management sub-algorithm and the security behavior module. The security case scenario 1 module depends on the foreign entities management sub-algorithm.

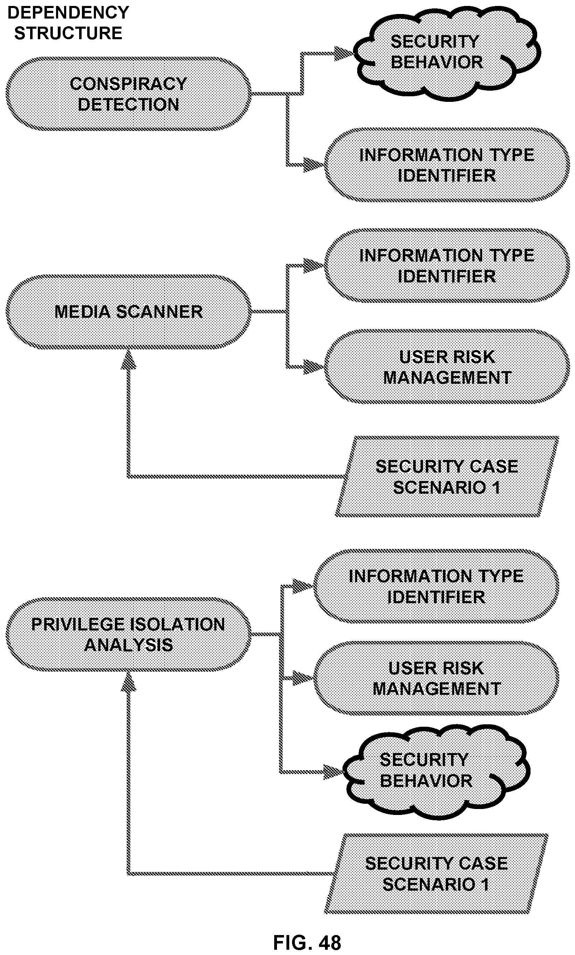

Figs. 48- 56 are schematic diagrams showing dependencies for modules. In the SECURITY BEHAVIOR module, events and their security responses and traits are stored and indexed for future queries. Sub-algorithms of the conspiracy detection, the privilege isolation analysis, the user risk management, the foreign entities management; algorithms of the iterative evolution and the iterative intelligence growth; modules of the monitoring interaction system, the dormant malware, the response parser, the security review module and the malware predictive tracking depend on the security behavior module.

The creativity module includes the process of intelligently creating new hybrid forms out of prior forms, and is used as a plug in module to service multiple algorithms. The iterative intelligence growth algorithm, and modules of the artificial security threat, the security review, the monitoring interaction system, the malware predictive tracking, automated growth guidance and the dormant malware depend on the creativity module.

The artificial security threat module provides a hypothetical security scenario to test the efficacy of security rulesets. Security threats are consistent in severity and type in order to provide a meaningful comparison of security scenarios. The artificial security threat module depends on the creativity module. Algorithms of the iterative evolution and the iterative intelligence growth; and modules of the monitoring interaction system, the security review and the automated growth guidance depend on the security behavior module.

The AUTOMATED GROWTH GUIDANCE module adds a layer between the human and human controlled functions to further automate system growth and maintenance at large. The automatic growth guidance module depend on the evolution pathway X algorithm, and modules of the artificial security threat, the response parser, the monitoring interaction system and the creativity.

The RESPONSE PARSER module monitors human reactions to security scenarios and discerns the kind of behavior traits that fueled such a security response. The response parser module depends on the security behavior module. The iterative evolution algorithm and the automated growth guidance module depend on the response parser module.

The SECURITY REVIEW module coordinates iterated and evolved security mechanisms with the Artificial Security Threat. This helps guide the evolution of security mechanisms, and is an access point for human analysis. The security review module depends on modules of the creativity, the artificial security threat, and the security behavior. The iterative intelligence growth algorithm and the monitoring interaction system module depends on the security review module.

The MONITORING INTERACTION SYSTEM module interacts with evolutionary pathways and data banks and provides a sophisticated control/monitoring system for the human. The monitoring interaction system module depends on modules of the creativity, the artificial security threat, the security behavior and the security review. The automatic growth guidance module and the iterative evolution algorithm depend on the monitoring interaction system module.

### CRITICAL INFRASTRUCTURE PROTECTION & RETRIBUTION THROUGH CLOUD & TIERED INFORMATION SECURITY (CIPR/CTIS)

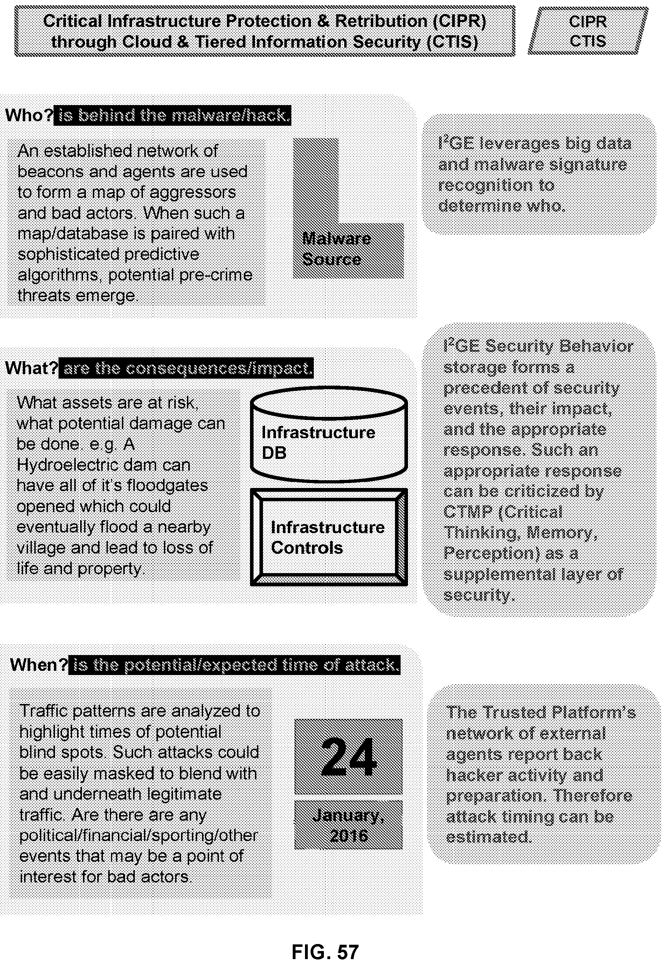

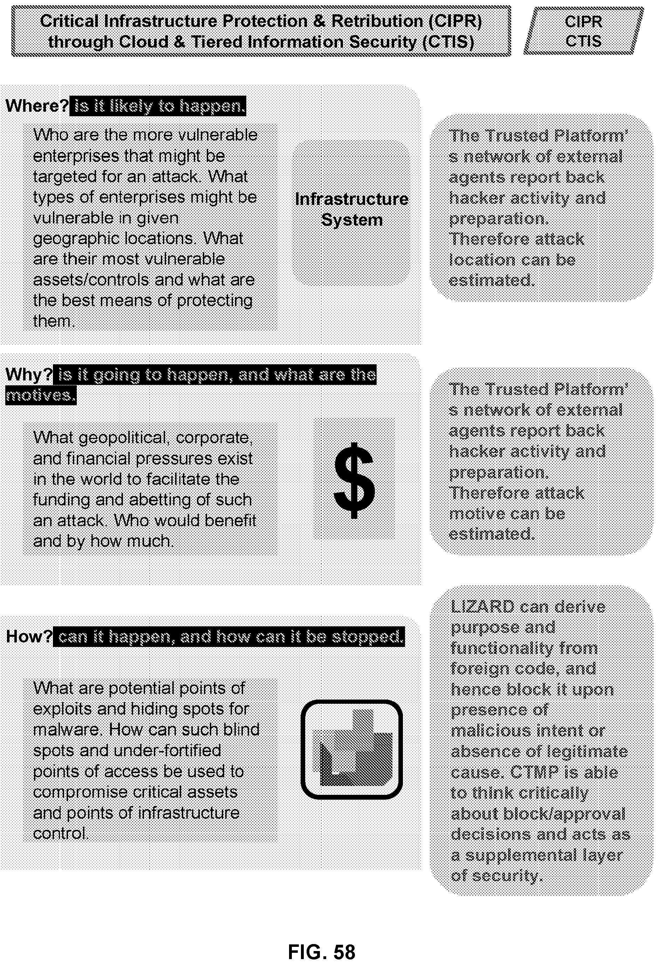

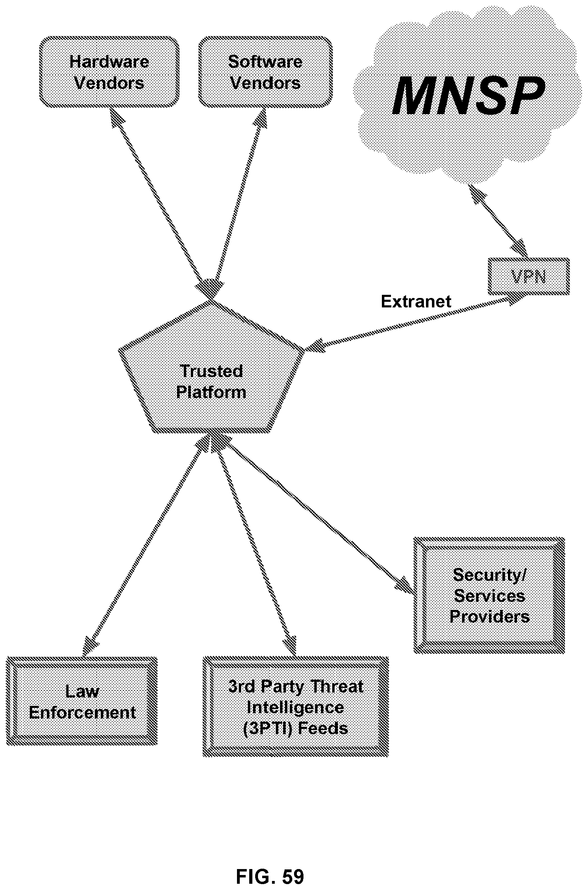

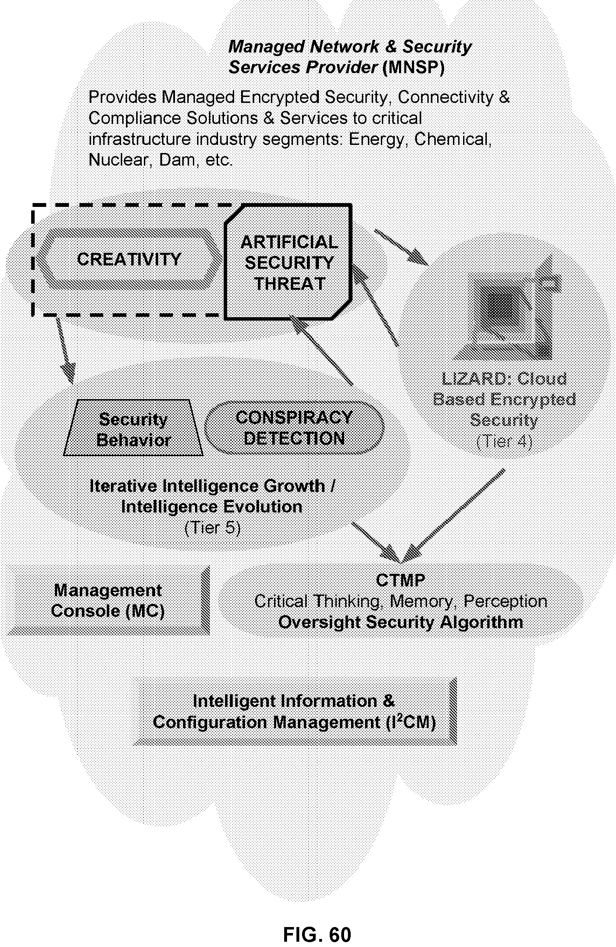

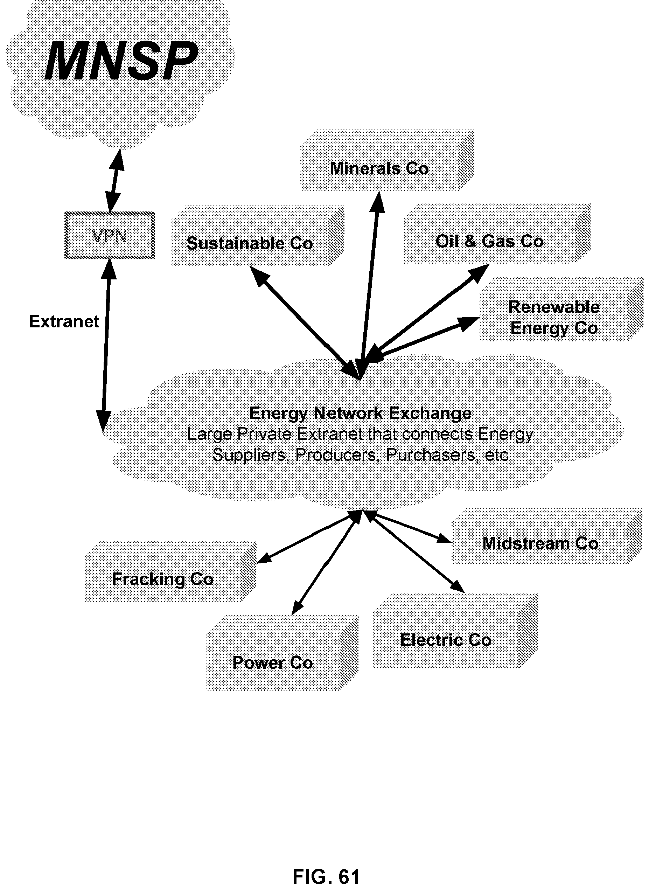

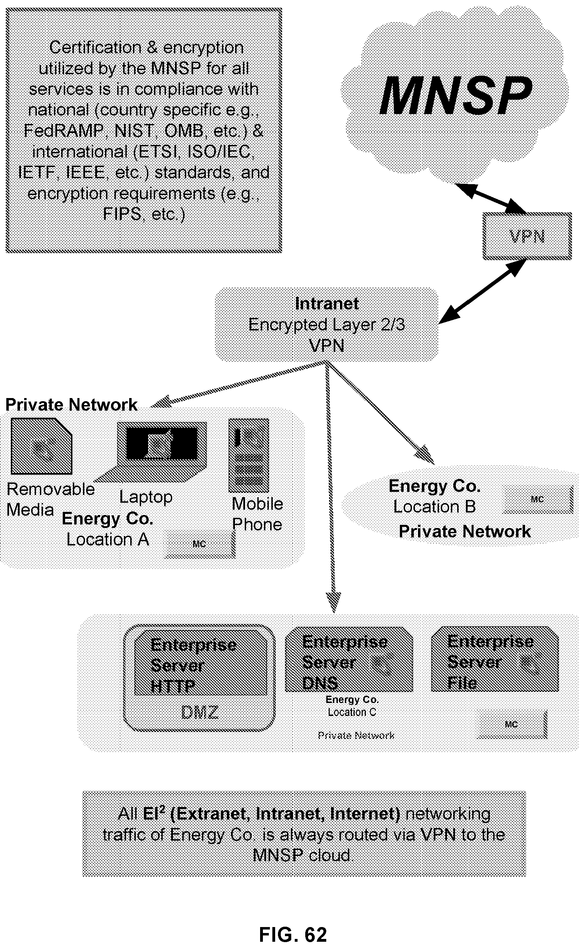

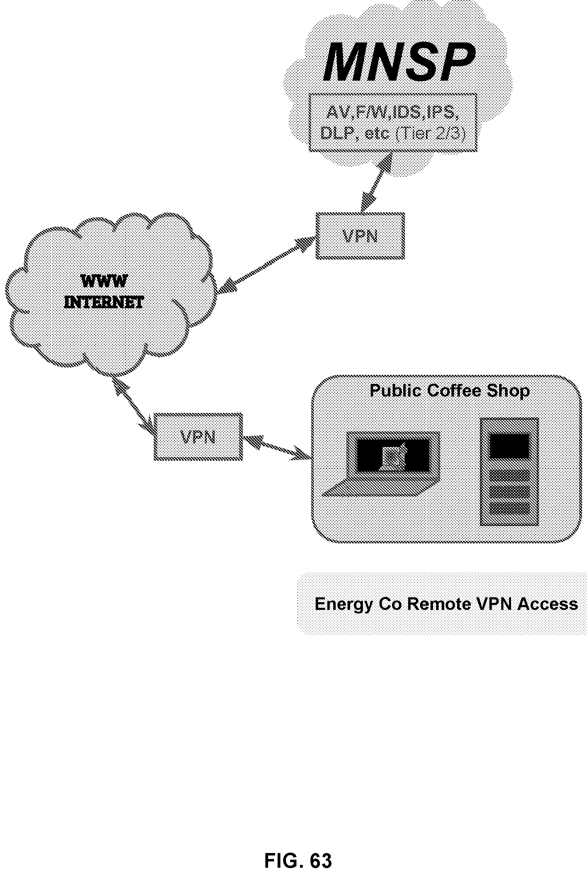

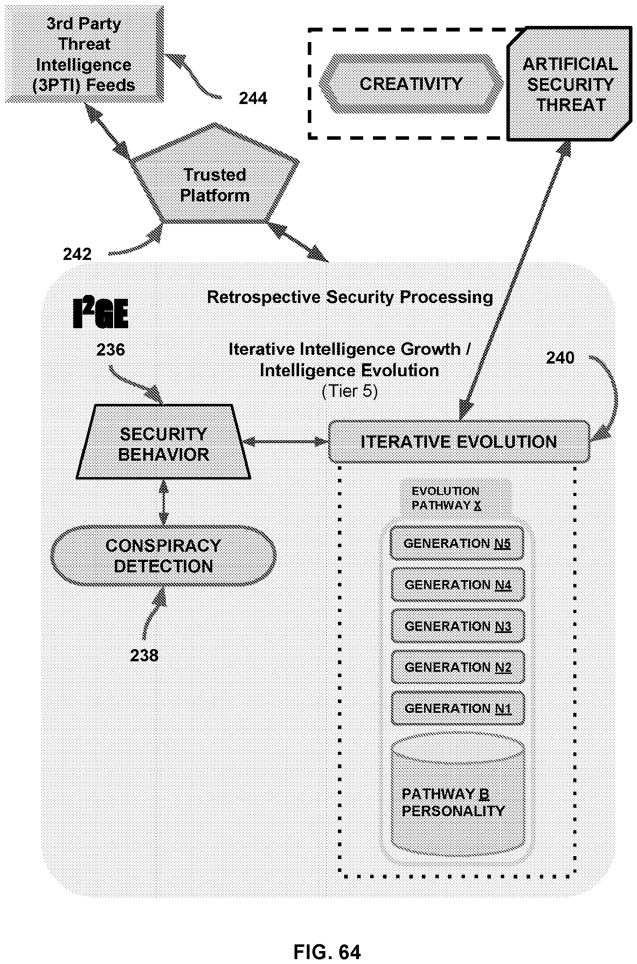

Fig. 57 shows an analysis for the questions who, what and when in relation to modern cybersecurity. Fig. 58 shows an analysis for the questions where, why and how in relation to modern cybersecurity. Fig. 59 shows trusted platform security information synchronization service. The trusted platform is a congregation of verified companies and systems that mutually benefit from each other by sharing security information and services. Fig. 60 shows the flow of information between multiple security algorithms within the Managed Network & Security Services Provider (MNSP). Fig. 61 shows how multiple corporations (i.e. energy companies) corporate via an industrial private extranet. Such extranet connects to MNSP cloud service. Fig. 62 shows relaying of all enterprise traffic, within an enterprise intranet, to the MNSP cloud via VPN for realtime and retrospective security analysis. Fig. 63 shows an enterprise device within a non-enterprise environment (coffee shop) relaying information to the MNSP cloud via VPN. Fig. 64 shows Retrospective Security Processing in regards to I²GE Iterative Intelligence Growth and Evolution.

Referring to **236,** events and their security responses and traits are stored and indexed for future queries.

Referring to **238**, conspiracy detection provides a routine background check for multiple 'conspiratorial' security events and attempts to determine patterns and correlations between seemingly unrelated security events.

Referring to **240,** parallel evolutionary pathways are matured and selected. Iterative generations adapt to the same AST batch, and the pathway with the best personality traits ends up resisting the security threats the most.

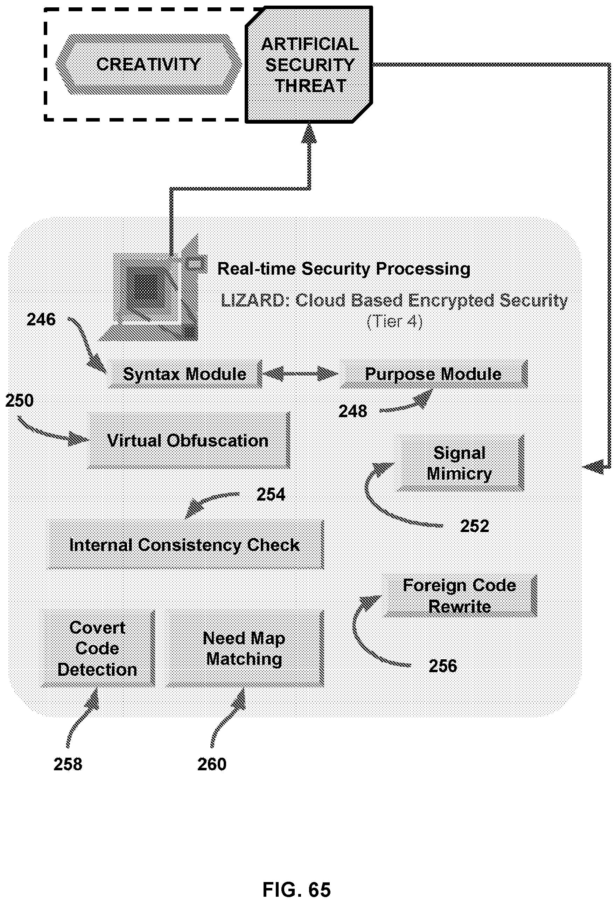

Fig. 65 shows Realtime Security Processing in regards to LIZARD Cloud Based Encrypted Security. Referring to **246**, Syntax Module provides a framework for reading & writing computer code. For writing; receives a complex formatted purpose from PM, then writes code in arbitrary code syntax, then a helper function can translate that arbitrary code to real executable code (depending on the desired language). For reading; provides syntactical interpretation of code for PM to derive a purpose for the functionality of such code.

Referring to **248,** Purpose Module uses Syntax Module (Fig. 65A) to derive a purpose from code, & outputs such a purpose in it's own 'complex purpose format'. Such a purpose should adequately describe the intended functionality of a block of code (even if that code was covertly embedded in data) as interpreted by SM.

Referring to **250,** the enterprise network and database is cloned in a virtual environment, and sensitive data is replaced with mock (fake) data. Depending on the behavior of the target, the environment can by dynamically altered in real time to include more fake elements or more real elements of the system at large.

Referring to **252,** Signal Mimicry provides a form of Retribution typically used when the analytical conclusion of Virtual Obfuscation (Protection) has been reached. Signal Mimicry uses the Syntax Module to understand a malware's communicative syntax with it's hackers. It then hijacks such communication to give malware the false impression that it successfully sent sensitive data back to the hackers (even though it was fake data sent to a virtual illusion of the hacker). The real hackers are also sent the malware's error code by LIZARD, making it look like it came from the malware. This diverts the hacker's time and resources to false debugging tangents, and eventually abandoning working malware with the false impression that it doesn't work.

Referring to **254**, checks that all the internal functions of a foreign code make sense. Makes sure there isn't a piece of code that is internally inconsistent with the purpose of the foreign code as a whole.

Referring to **256,** uses the Syntax and Purpose modules to reduce foreign code to a Complex Purpose Format. It then builds the codeset using the derived Purpose. This ensures that only the desired and understood purpose of the foreign code is executed within the enterprise, and any unintended function executions do not gain access to the system.

Referring to **258**, detects code covertly embedded in data & transmission packets.

Referring to **260,** a mapped hierarchy of need & purpose is referenced to decide if foreign code fits in the overall objective of the system.

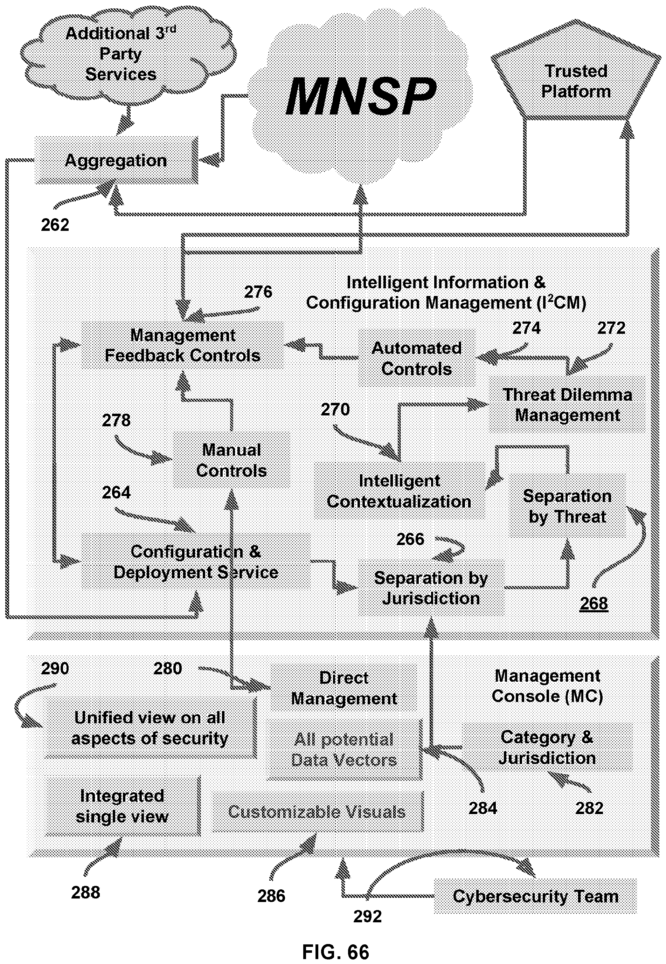

Fig. 66 shows intelligent information management, viewing and control.

Referring to **262,** uses generic level criteria to filter out unimportant and redundant information, whilst merging and tagging streams of information from multiple platforms.

Referring to **264,** Configuration & Deployment Service is an interface for deploying new enterprise assets (computers, laptops, mobile phones) with the correct security configuration and connectivity setup. After a device is added and setup, they can can be tweaked via the Management Console with the Management Feedback Controls as a middleman. This service also manages the deployment of new customer/client user accounts. Such a deployment may include the association of hardware with user accounts, customization of interface, listing of customer/client variables (i.e. business type, product type etc.).

Referring to **266,** the tagged pool of information are separated exclusively according to the relevant jurisdiction of the Management Console User.

Referring to **268,** the information is organized according to individual threats. Every type of data is either correlated to a threat, which adds verbosity, or is removed.

Referring to **270,** at this stage of the process the remaining data now looks like a cluster of islands, each island being a cybersecurity threat. Correlations are made inter-platform to mature the security analysis. Historical data is accessed (from I²GE as opposed to LIZARD) to understand threat patterns, and CTMP is used for critical thinking analysis.

Referring to **272**, the cybersecurity threat is perceived from a bird's eye view (big picture). Such a threat is passed onto the management console for a graphical representation. Since calculated measurements pertaining to threat mechanics are finally merged from multiple platforms; a more informed threat management decision can be automatically performed.

Referring to **274,** automated controls represent algorithm access to controlling management related controls of MNSP, TP, 3PS.

Referring to **276**, offers high level controls of all MNSP Cloud, Trusted Platform (TP), additional 3^{rd} Party Services (3PS) based services which can be used to facilitate policy making, forensics, threat investigations etc. Such management controls are eventually manifested on the Management Console (MC), with appropriate customizable visuals and presentation efficiency. This allows for efficient control and manipulation of entire systems (MNSP, TP, 3PI) direct from a single interface that can zoom into details as needed.

Referring to **278,** manual controls represent human access to controlling management related controls of MNSP, TP, 3PS.

Referring to **280,** direct management leverages manual controls to provide human interface.

Referring to **282,** the user of the Management Console uses their login credentials which define their jurisdiction and scope of information category access.

Referring to **284,** all potential data vectors are data in motion, data at rest & data in use.

Referring to **286,** represents customizable visuals for various enterprise departments (accounting, finance, HR, IT, legal, Security/Inspector General, privacy/disclosure, union, etc.) and stakeholders (staff, managers, executives in each respective department) as well as 3rd party partners, law enforcement, etc.

Referring to **288,** a single view of all the potential capabilities such as monitoring, logging, reporting, event correlation, alert processing, policy/rule set creation, corrective action, algorithm tuning, service provisioning (new customers/modifications), use of trusted platform as well as 3rd party services (including receiving reports and alerts/logs, etc from 3rd party services providers & vendors).

Referring to **290,** visuals representing perimeter, enterprise, data center, cloud, removable media, mobile devices, etc.

Referring to **292,** a team of qualified professionals monitor the activity and status of multiple systems across the board. Because intelligent processing of information and Al decisions are being made, costs can be lowered by hiring less people with fewer years of experience. The Team's primary purpose is for being a fallback layer in verifying that the system is maturing and progressing according to desired criteria whilst performing large scale points of analysis.

### LIZARD (Logically Inferred Zero-database A-priori Realtime Defense): CLOUD BASED ENCRYPTED SECURITY

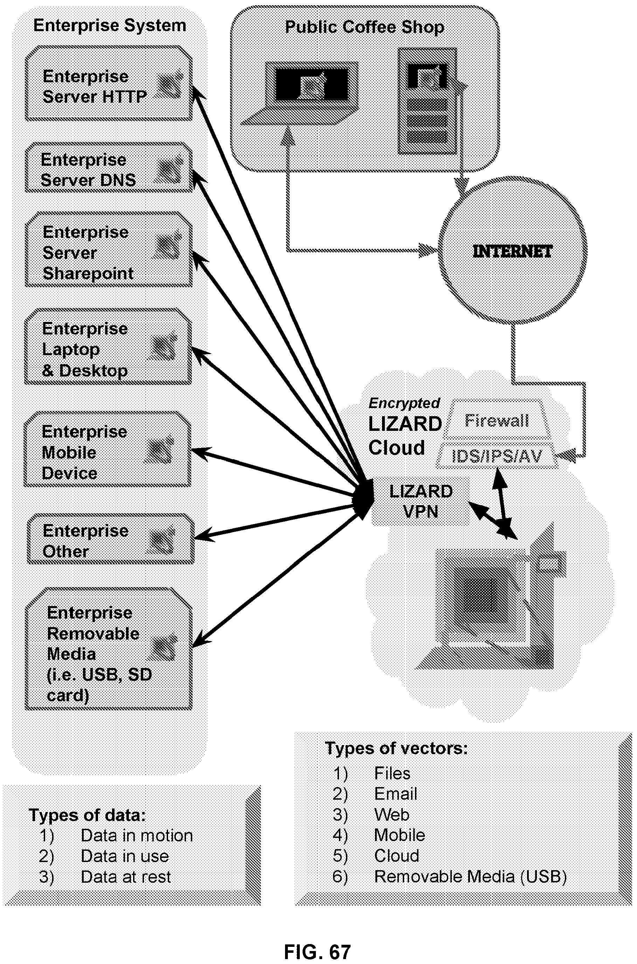

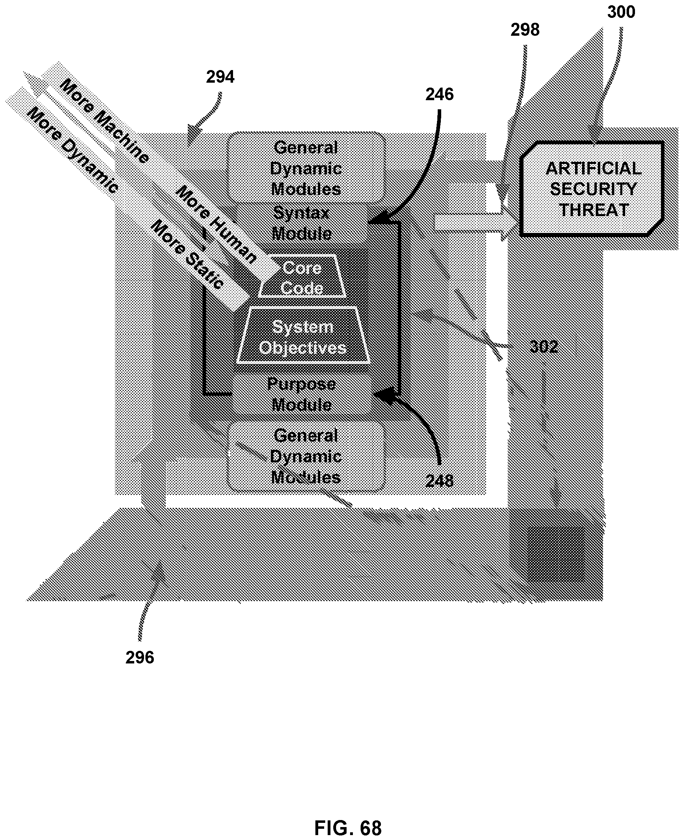

Fig. 67 shows how every digital transfer within the Enterprise System is relayed through an instance of LIZARD. If the transfer occurs on a LAN, the LIZARD lite version running on individual endpoints will manage security procedures. All outgoing/incoming information from outside the Enterprise must be channeled via the LIZARD VPN and LIZARD Cloud. Complex functions such as Virtual Obfuscation are relayed from LIZARD lite to LIZARD Cloud to offset processing resource management. Fig. 68 shows an overview of LIZARD realtime security algorithm.

Referring to **294,** the dynamic shell is more prone to changing via iteration. Modules that require a high degree of complexity to achieve their purpose usually belong here; as they will have surpassed the complexity levels a team of programmers can handle.

Referring to **296,** the Iteration Module (IM) uses the Static Core (SC) to syntactically modify the code base of Dynamic Shell (DS) according to the defined purpose in 'Fixed Goals' & data from the Data Return Relay (DRR). This modified version of LIZARD is then stress tested (in parallel) with multiple and varying security scenarios by the Artificial Security Threat (AST). The most successful iteration is adopted as the live functioning version.

Referring to **298,** represents data return relay. If LIZARD performs a low confidence decision, it relays relevant data to the AST to improve future iterations of LIZARD. LIZARD itself does not directly rely on data for performing decisions, but data on evolving threats can indirectly benefit the a priori decision making that a future iteration of LIZARD might perform.

Referring to **300,** the Artificial Security Threat (AST) creates a virtual testing environment with simulated security threats to enable the iteration process. The artificial evolution of the AST is engaged sufficiently to keep ahead of the organic evolution of criminal malicious cyber activity.

Referring to **302,** represents static core. This layer of LIZARD is the least prone to changing via automated iteration, and is instead changed directly by human programmers. Especially the innermost deep-red square, which is not influenced by automated iterations at all. This innermost layer is like the root of the tree that guides the direction & overall capacity of LIZARD.

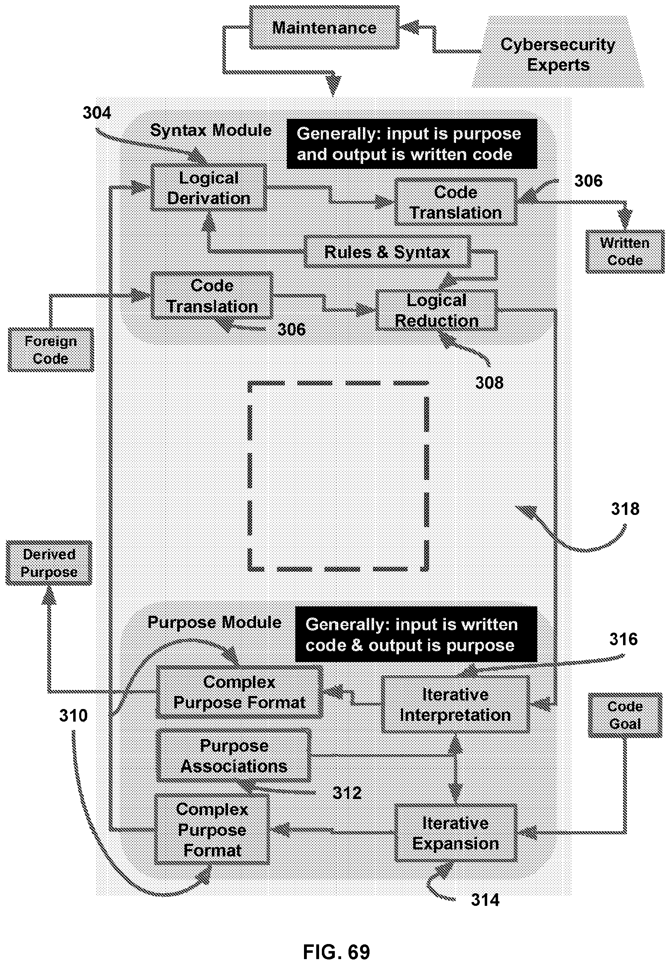

Fig. 69 shows an overview of the static core of LIZARD. Referring to **304**, derives logically necessary functions from initially simpler functions. End result is that an entire tree of function dependencies are built from a stated complex purpose.

Referring to **306,** Converts arbitrary (generic) code which is understood directly by Syntax Module functions to any chosen known computer language. The inverse of translating known computer languages to arbitrary code is also performed.

Referring to **308,** reduces code logic to simpler forms to produce a map of interconnected functions.

Referring to **310,** represents a storage format for storing interconnected sub-purposes that represent an overall purpose.

Referring to **312,** a hardcoded reference for what functions & types of behavior refer to what kind of purpose.

Referring to **314,** iteration expansion adds detail and complexity to evolve a simple goal into a complex purpose by referring to Purpose Associations.

Referring to **316,** iteration interpretation loops through all interconnected functions & produce an interpreted purpose by referring to Purpose Associations.

Referring to **318**, represents the outer core. The Syntax Module (SM) & urpose Module (PM) work together to derive a logical purpose to unknown foreign code, & to produce executable code from a stated function code goal.

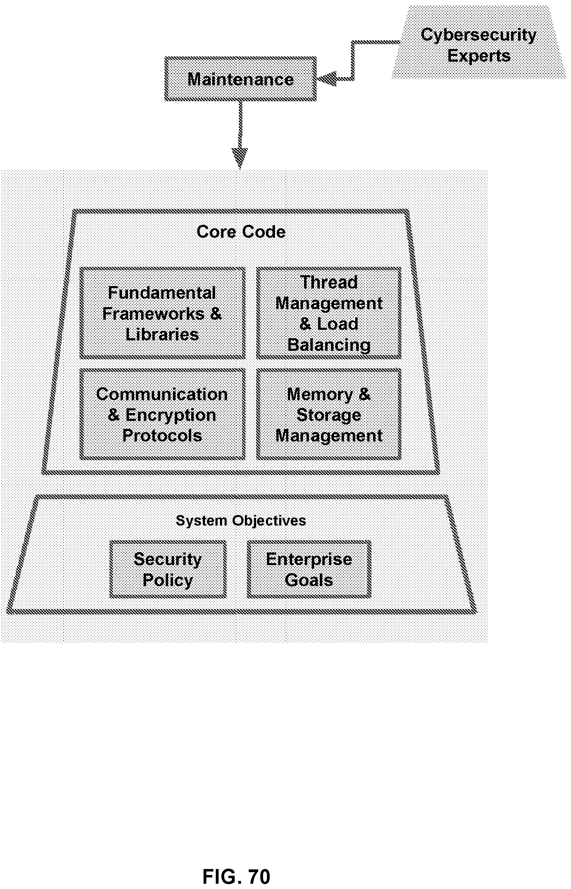

Fig. 70 shows the inner core of the static core of LIZARD. Represents the essential core functions of the system, which are directly and exclusively programmed by relevant Cybersecurity Experts.

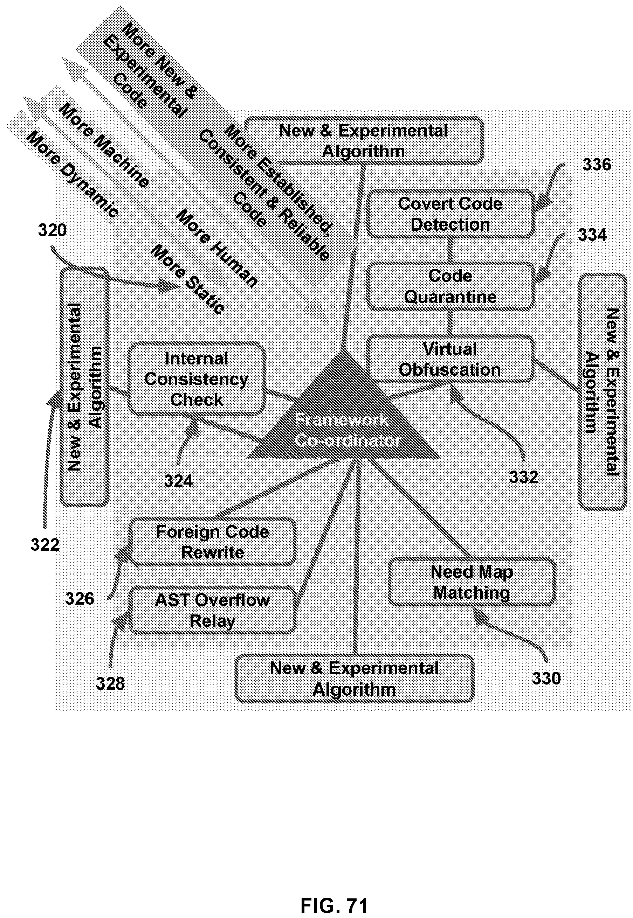

Fig. 71 shows the dynamic shell of LIZARD.

Referring to **320,** represents human/reliability relationship. Despite there being an average correlation, there is no direct causal link between the code being more static/human & the code being more reliable/established.

Referring to **322,** represents a new and experimental algorithm. The need for a new module can be decided by humans or Al.

Referring to **324,** Internal Consistency Check checks if all the internal functions of a block of foreign code make sense. Makes sure there isn't a piece of code that is internally inconsistent with the purpose of the foreign code as a whole.

Referring to **326,** represents Foreign Code Rewrite. After deriving foreign code purpose, rewrites either parts or the whole code itself and allows only the rewrite to be executed. Mirror test checks to make sure the input/output dynamic of the rewrite is the same as the original. This way, any hidden exploits in the original code are made redundant and are never executed.

Referring to **328,** represents AST overflow relay. Data is relayed to the AST for future iteration improvement when the system can only perform a low confidence decision.

Referring to **330,** represents Need Map Matching. A mapped hierarchy of need & purpose is referenced to decide if foreign code fits in the overall objective of the system (i.e. a puzzle).

Referring to **332,** represents Virtual Obfuscation. Confuses & restricts code, & hence potential malware, by gradually & partially submerging them into a virtualized fake environment.

Referring to **334,** represents Code Quarantine. Isolates foreign code into a restricted virtual environment (i.e. a petri dish).

Referring to **336,** represents Covert Code Detection. Detects code covertly embedded in data & transmission packets.

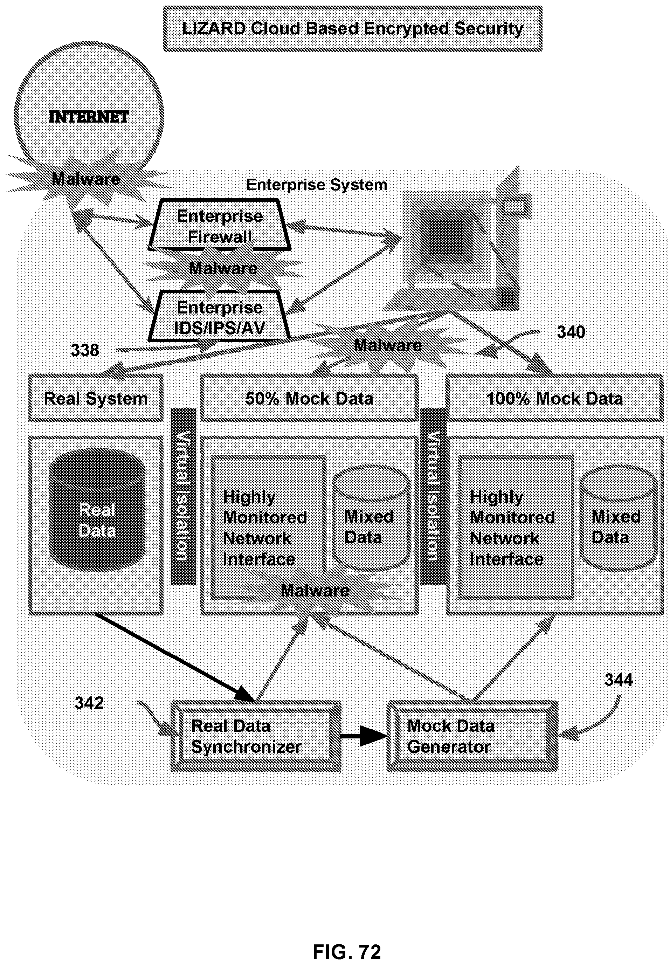

Fig. 72 shows Virtual Obfuscation. Referring to **338,** malware hypothetically bypasses the Enterprise Firewall/Intrusion Detection System/Anti-Virus etc.

Referring to **340,** LIZARD has a low confidence assessment of the intent/purpose of the incoming block of code. So as to mitigate the risk of having an innocent process deprived of entitled crucial data, & to also avoid the risk of allowing malicious code to have sensitive data, the questionable code is covertly allocated to an environment in which half of the data is intelligently mixed with mock (fake) data.

Referring to **342,** the Real Data Synchronizer is one of two layers (the other being Data Manager) that intelligently selects data to be given to mixed environments & in what priority. This way highly sensitive information is inaccessible to suspected malware, & only available to code that is well known & established to be trustworthy.

Referring to **344,** the Mock Data Generator uses the Real Data Synchronizer as a template for creating counterfeit & useless data. Attributes such as data type, data format, data density, data detail etc are mimicked from the real data to produce a database with realistic looking data that appears to be well integrated into the System at large (no irrelevant & odd data).

### Clandestine Machine Intelligence (MACINT) & Retribution through Covert Operations in Cyberspace

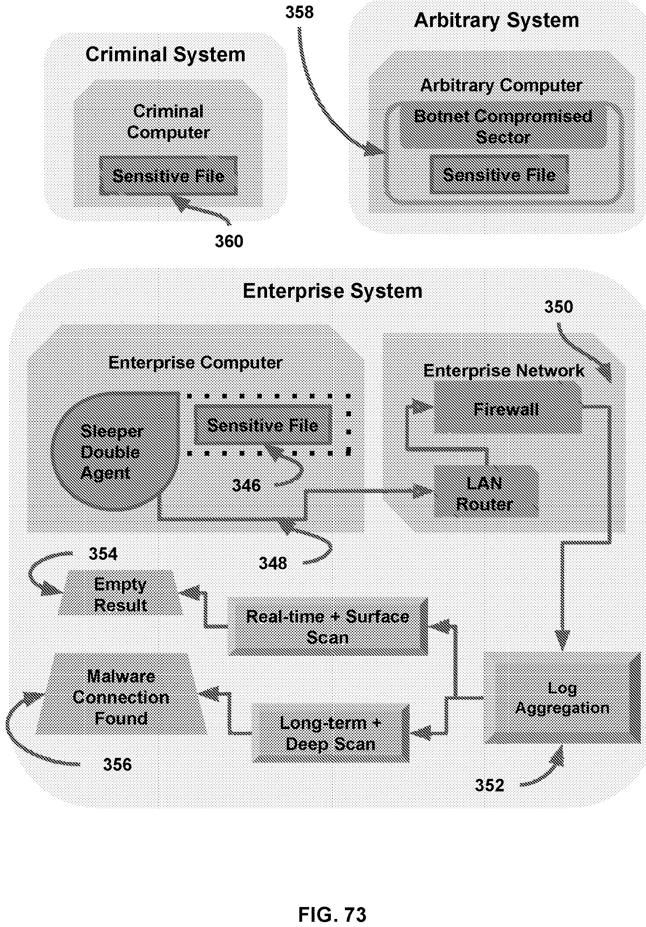

Fig. 73 shows MACINT covert operations overview, how criminals exploit an enterprise system.

Referring to **346,** Sleeper Double Agent silently captures a copy of a Sensitive File.

Referring to **348,** Captured file is pushed via encryption outside of the Enterprise Network to the rogue destination server. Such encryption (i.e. https) is allowed by policy, hence the transmission is not immediately blocked.

Referring to **350,** Standard logs are generated which are delivered for Real-time and Long-term analysis.

Referring to **352,** Log Aggregation pushes relevant data to Real-time and Long-term scans.

Referring to **354,** Real-time is inadequately prepared to perform a near instant recognition of the malicious activity to stop it before execution.

Referring to **356,** the Long-term Scan eventually recognizes the malicious behavior because of its advantage of having more time to analyze.

Referring to **358,** a computer belonging to the system of an arbitrary third party is used to transfer the Sensitive File to throw off the investigation and frame the arbitrary third party.

Referring to **360,** Thieves receive Sensitive File whilst maintaining a hidden presence via their Botnet. Proceed to use Sensitive File for illegal extortion and profit.

### Critical Thinking, Memory and Perception (CTMP) Algorithm

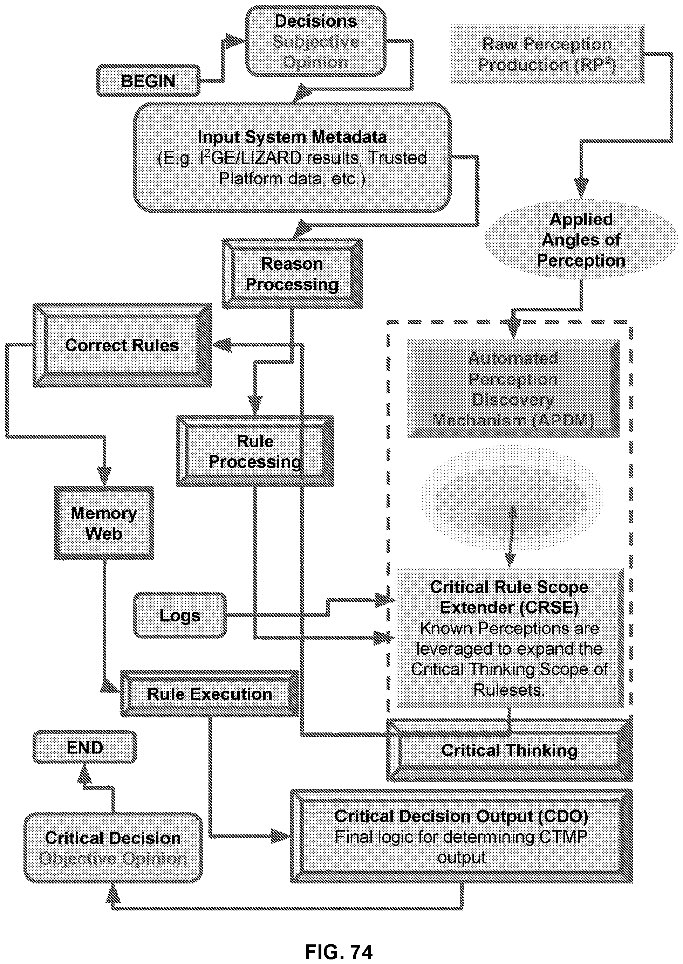

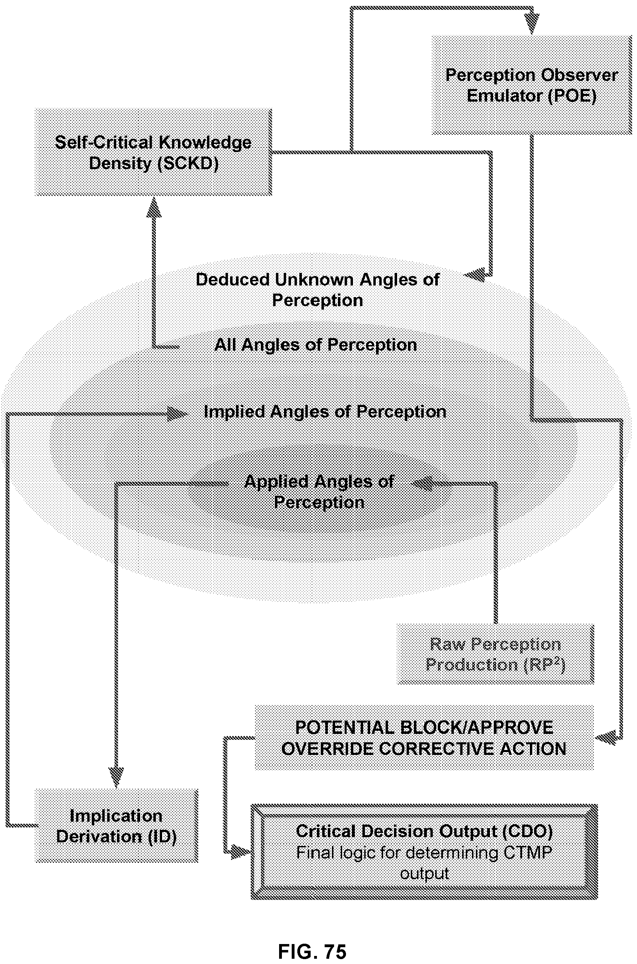

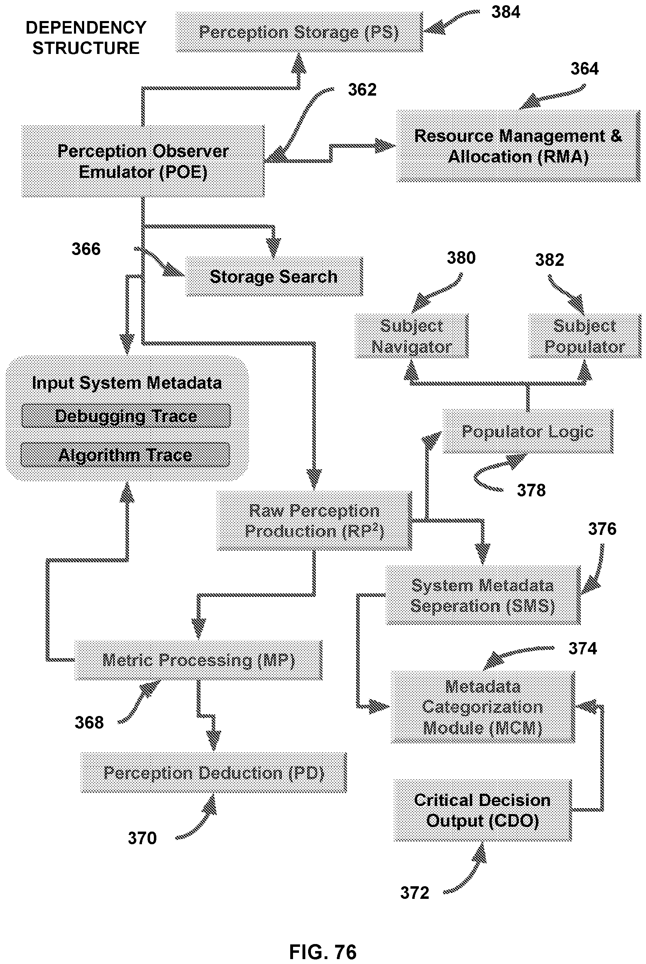

Figs. 74 - 75 display the functionality overview of CTMP. Fig. 76 shows the dependency structure of CTMP.

Referring to **362,** produces an emulation of the observer, and tests/compares all potential points of perception with such variations of observer emulations. Whilst the input are all the potential points of perception plus the enhanced data logs; the output is the resultant security decision produced of such enhanced logs according to the best, most relevant, and most cautious observer with such mixture of selected perceptions.

Referring to **364,** adjustable policy dictates the amount of perceptions that are leveraged to perform an observer emulation. The priority of perceptions chosen are selected according to weight in descending order. The policy can then dictate the manner of selecting a cut off, whether than be a percentage, fixed number, or a more complex algorithm of selection.

Referring to **366**, The CVF derived from the data enhanced logs is used as criteria in a database lookup of the Perception Storage (PS).

Referring to **368,** Metric Processing reverse engineers the variables from the Selected Pattern Matching Algorithm (SPMA) security response to 'salvage' perceptions from such algorithm's intelligence.

Referring to **370,** uses a part of the security response and its corresponding system metadata to replicate the original perception of the security response.

Referring to **372,** final logic for determining CTMP output

Referring to **374,** debugging and algorithm Trace are separated into distinct categories using traditional syntax based information categorization. Such categories can then be used to organize and produce distinct security response with a correlation to security risks and subjects.

Referring to **376,** Input System Metadata is separated into meaningful security cause-effect relationships.

Referring to **378,** Comprehensively assorts all the security subjects with relevant risks and responses.

Referring to **380,** Subject Navigator scrolls through all applicable subjects.

Referring to **382,** Subject Populator retrieves the appropriate Risk and Response correlated with the Subject.

Referring to **384,** perceptions are indexed and stored. Perceptions, in addition to their relevant weight, are stored with the Comparable Variable Format (CVF) as their index. This means the database is optimized to receive a CVF as the input query lookup, and the result will be an assortment of perceptions.

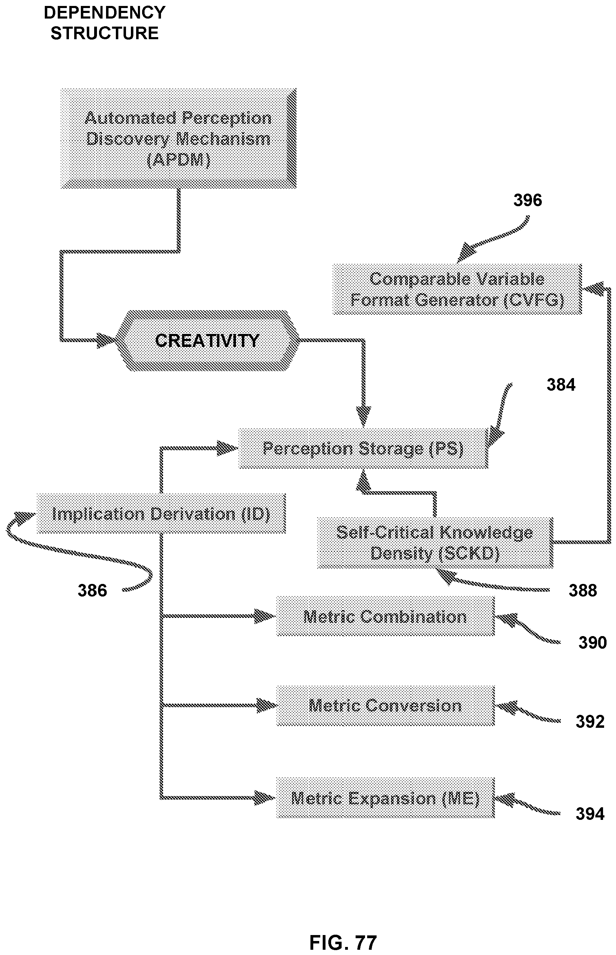

Fig. 77 shows the dependency structure of CTMP. Referring to 386, derives angles of perception of data that can be implicated from the current known angles of perceptions.

Referring to **388,** incoming raw logs represent known knowledge. This Module estimates the scope and type of potential unknown knowledge that is beyond the reach of the reportable logs. This way the subsequent critical thinking features of the CTMP can leverage the potential scope of all involved knowledge, known and unknown directly by the system.

Referring to **390,** angles of perception are separated into categories of metrics.

Referring to **392,** individual metrics are reversed back into whole angles of perception.

Referring to **394,** the metrics of multiple and varying angles of perception are stored categorically in individual databases. The upper bound is represented by the peak knowledge of each individual Metric DB. Upon enhancement and complexity enrichment, the metrics are returned to be converted back into angles of perception and to be leveraged for critical thinking.

Referring to **396,** stream of information is converted into Comparable Variable Format (CVF).

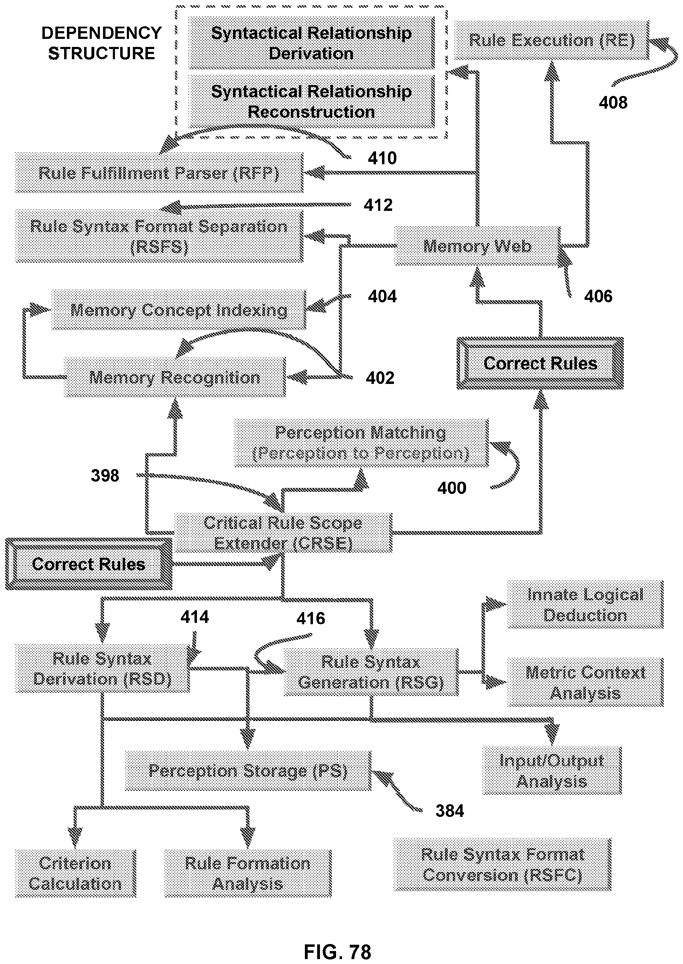

Fig. 78 shows the dependency structure of CTMP. Referring to 398, known perceptions are leveraged to expand the Critical Thinking Scope of Rulesets.

Referring to **400,** a Comparable Variable Format (CVF) is formed from the perception received from Rule Syntax Derivation. The newly formed CVF is used to lookup relevant Perceptions in the Perception Storage (PS) with similar indexes. The potential matches are returned to Rule Syntax Generation.

Referring to **402,** a chaotic field is formed from input data. Field scanning is performed to recognize known concepts.

Referring to **404,** the whole concepts are individually optimized into separate parts known as indexes. These indexes are used by the letter scanners to interact with the chaotic field.

Referring to **406,** the security incident logs are scanned for fulfillable rules. Any applicable and fulfillable rules are executed to produce security override decisions.

Referring to **408,** rules that have been confirmed as present and fulfilled as per the memory's scan of the chaotic field are executed to produce desired and relevant critical thinking decisions.

Referring to **410,** The (Rule Fulfillment Parser) RFP receives the individual parts of the rule with a tag of recognition. Each part is marked as either having been found, or not found in the chaotic field by Memory Recognition (MR). The RFP can then logically deduce which whole rules, the combination of all of their parts, have been sufficiently recognized in the chaotic field to merit Rule Execution (RE).

Referring to **412,** correct rules are separated and organized by type. Hence all the actions, properties, conditions, and objects are stacked separately. This enables the system to discern what parts have been found in the chaotic field, and what parts have not.

Referring to **414,** logical `black and white' rules are converted to metric based perceptions. The complex arrangement of multiple rules are converted into a single uniform perception that is expressed via multiple metrics of varying gradients.

Referring to **416,** Receives previously confirmed perceptions which are stored in Perception format. Engages with the perception's internal metric makeup. Such gradient-based measures of metrics are converted to binary and logical rulesets that emulates the input/output information flow of the original perception.

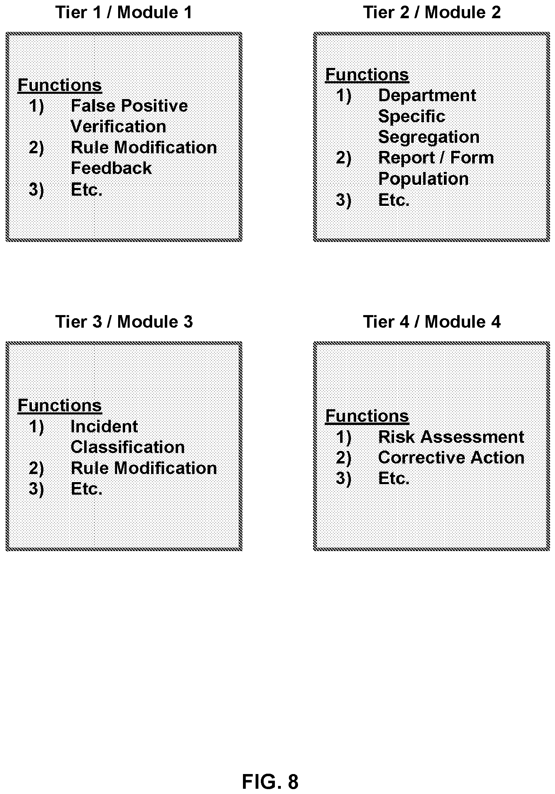

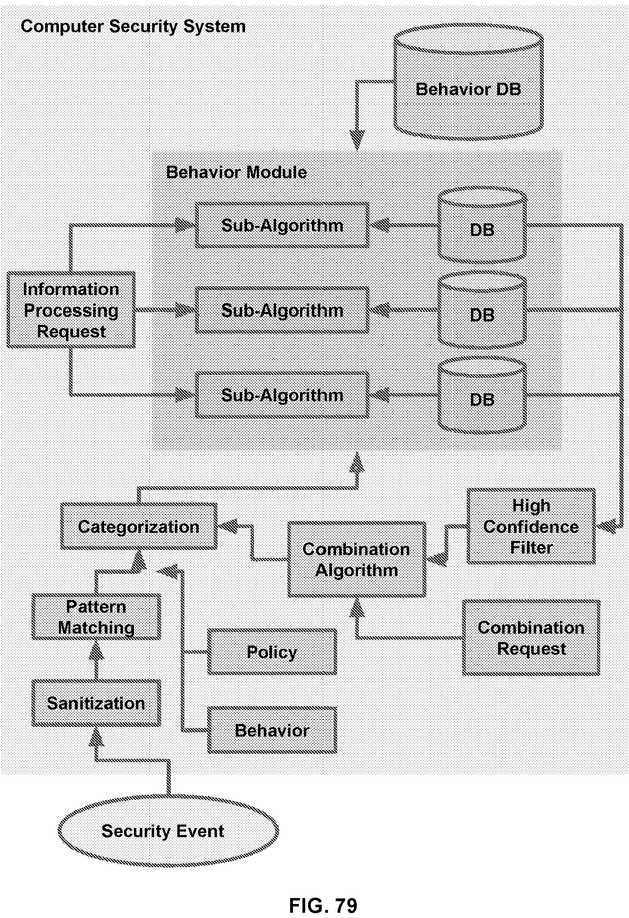

The present invention is explained again with regard to the claims. Referring to Figs. 1-11 and Fig. 79, a computer security system processing a security event comprising a behavior module that comprises a plurality of sub-algorithms, wherein each sub-algorithm corresponds to a predetermined category, which is related to a predetermined security issue; and a combination module that provides a security analysis based on the output of the behavior module.

The sub-algorithms are executed in parallel, and each of the sub-algorithms processes input and stores output. An information processing request is sent to at least one sub-algorithm, wherein each sub-algorithm processes data of the security event, wherein the result of each of sub-algorithms is stored in a database for the sub-algorithm.

The system further comprises a high confidence filter that filters results from the sub-algorithms that are above a pre-determined confidence level. A combination request is sent to the combination algorithm, wherein the combination algorithm combines two or more sub algorithms depending on the type of the combination request, wherein the combination algorithm selects result based on a predetermined criterion.

The system further comprises a categorization module that determines the category of the security event based on combination of policy and behavior, and a pattern matching module that filters out the security event based on behavior pattern of the security event, and wherein the categorization module that determines the category of the filtered event from the pattern matching module.

The behavior module is connected to a behavior database, wherein the behavior database stores metadata that comprise the plurality of categories. Each of the categories comprises a reference id, a first concept, a second concept, and an algorithm determined association index. The system further comprises a sanitation module that filters an incoming event based on a sanitation policy.

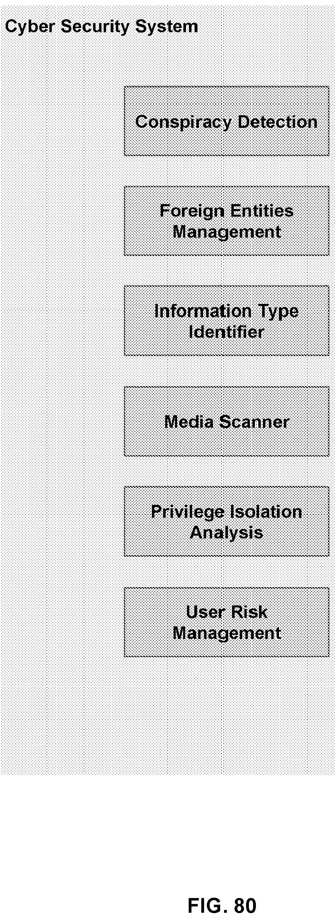

Referring to Figs. 12-18 and 80, a cyber security system comprises a conspiracy detection sub-algorithm, which checks background for multiple security events, and determines patterns and correlations between the security events; and an information type identifier sub-algorithm, which determines type of unknown data, and declares its confidence in the data type that it has chosen, and returns a failure flag if the confidence is lower than a predetermined level.

Referring to Fig. 12, in the conspiracy detection sub-algorithm, the security event is parsed by the information type identifier sub-algorithm, which derives relevant attributes of the security event, wherein the attributes are checked by external policy and behavior interpretation to see whether the event passes the threshold for being processed.

The derived event attributes for the security event are stored in a specific DB, wherein all combinations for the derived event attributes are made, wherein the combinations are selected by pre-determined allowance rule, wherein the selected combinations are queried against the specific DB for predetermined similarity factors.

The predetermined similarity factors include having the same SSN and time of day of occurrence, including the same IP LAN subnet range and personal phone number and personal address, including the same domain name in different email addresses, and including a domain name and the IP address it is supposed to point to, to fight against ghost domain names. The results checked by the conspiracy detection sub-algorithm are notified to a management console.

Referring to Fig. 13, the system further comprises a foreign entities management sub-algorithm, which upgrades or downgrades the severity of foreign threats based off of requests the foreign threats make to an isolated network of an enterprise, and receives third party information to augment its perception of foreign threats, and a user risk management sub-algorithm, which determines overall risk assessment for a user record based on predetermined risk factors.

In the foreign entities management sub-algorithm, a security event is parsed by the information type identifier sub-algorithm to derive network origin and user involved for the security event, wherein the network origin of the security event is checked against a security watch list, wherein if user info has been found in the security watch list, then the user is checked by the user risk assessment sub-algorithm. The check results are considered and aggregated based off of pre-determined thresholds which are influenced by external policy and behavior, wherein the aggregated results are stored in a specific database.

Referring to Fig. 14, in the information type identifier sub-algorithm, for the provided unknown data, bulk input is offered for parallelization purposes. The information type identifier sub-algorithm extracts attributes of the unknown data, including length, number, letter ratio and special characters. The extracted attributes are compared to DB data points, which are selected for comparison. Cache is checked first for comparisons. The information type identifier sub-algorithm processes the compared results for confidence levels. If the confidence level of the results is lower than a predetermined threshold, the results are cutoff, wherein the predetermined threshold can be dynamic. Pattern detection is performed to correlate type affinity with attribute makeup, wherein high confidence patterns are stored in the cache, wherein the DB does not contain calculated patterns but contains static correlations between type and attribute. The processed results are compiled to conform to API and the compiled results are output.

Referring to Fig. 15, the system further comprises a media scanner sub-algorithm, which scans given media, and checks for illegal information transfer and inconsistent/suspicious behavior for the expected composition of such media. In the media scanner sub-algorithm, a media parse is performed to highlight suspected points of information in the given media, wherein the suspected points may be hidden in metadata, or in the raw format of the media, wherein the data and metadata of the media are scanned.

The suspected points of information are processed by the Information Type Identifier sub-algorithm, wherein user identities thus processes are passed to the User Risk Management sub-algorithm, wherein all other information is passed to a generic parser. The generic parser interacts with a Risk Objects DB to find risky associations that are in the file. If a risky association is found, the media is blocked from being transferred, a risk object is created, and the User Risk Management sub-algorithm is been notified of a relevant user's involvement with the security event. Processed results are combined and parsed to produce a decision of whether to block or allow the media.

Referring to Fig. 16, the system further comprises a privilege isolation analysis sub-algorithm, which determines if a user or process is within their permitted privilege allocation, which is constantly invoked, and reports any confirmed privilege violations to a master process and a secondary process which double checks that the master process took action for the violations. In the privilege isolation analysis sub-algorithm, a user permission event is sent, a user ID token and requested location of access/modification is extracted by the information type identifier sub-algorithm and pushed to a thread manager. The thread manager comprises a location thread manager, which receives location information and invokes a location database for who is permitted to access/modify.

A location permission bank receives the location's permission requirements by Specific DB 2, and is queried by a thread that decides if certain locations should be blocked as a precaution due to a user security risk, wherein the threshold for the precaution level is determined via external policy and behavior. The thread manager comprises a user thread manager, which receives user information and invokes a user database for what locations are permitted to access/modify, and invokes the User Risk Management sub-algorithm to get risky locations that should be blocked for the user within a precautionary policy.

A user permission bank receives the user's permission attributes by Specific DB 1, and is queried by the location thread manager to see if the user is permitted to perform the requested action in this location. A permissions aggregator logically combines results by the location thread manager and the user thread manager, and outputs the combined result.

Referring to Fig. 17, in the user risk management sub-algorithm, the predetermined risk factors include prior policy violations, excessive usage, and suspicious operations enacted. A user identification token is input, and an overall risk assessment percentage with a plurality of linked objects that are of risk interest is output, wherein the objects can be accessed independently via other sub-algorithms for further analysis. A risk object that is related to the user is input, wherein the user's association with the risk object is recorded. A user ID token is provided to generate a risk assessment report or to deposit a risk object reference, wherein a user's risk history is built with the deposited risk object references.

If a risk object reference is provided, then deposit is made in the database for future reference. If no risk object reference deposit is made, and the thread manager requests a report to be made, wherein a relevant user ID is looked up in a specific database to assess the user's risk history. Risk rates are retrieved from a specific DB, which gives a risk rating for risk objects, wherein using the risk rates and the retrieved risk objects, a final aggregate report is produced and pushed to output, wherein a comprehensive principal risk index is also pushed to output, for identifying a user's immediate risk factor.

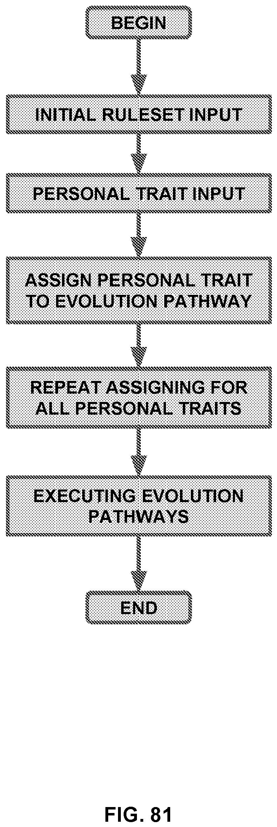

Referring to Figs. 19-21 and Fig. 81, the invention further provides a method for iterative intelligence growth comprising steps of receiving input of an initial ruleset; receiving input of a plurality of personality trait, wherein the personal trait defines reactionary characteristics that should be exercised upon security events; choosing a personal trait and assigning the personal trait to an evolution pathway; repeating the previous for other evolution pathways for all of the personality traits; and executing the evolution pathways, wherein each of the evolution pathways evolves a plurality of generations according to its given personality trait. The operation of each of the evolution pathways is virtually isolated from the operation of the other evolution pathways.

The personal traits comprise i) a realist trait that uses CPU time based on degree of correlation; ii) a unforgiving trait that uses CPU time based on whether there was a prior security incident for a given entity, which comprises an individual or a computer system; iii) an opportunistic trait that uses CPU time based on availability of a corrective action; or iv) a strict and precautious trait that uses CPU time based on little forgiveness or tolerance of assumption. The CPU time is measured in CPU cycles/second.

Referring to Fig. 20, a monitoring and interaction system injects security events from an artificial security threat (AST) system into the evolution pathways, and relays security responses associated with the security events from a security behavior cloud, wherein if any one of the evolution pathways reaches an indefinite state of being unable to solve the given security problem, the execution of the evolution pathway is abandoned, wherein the personality trait of the abandoned evolution pathway is modified, wherein the modified personality trait is assigned to another evolution pathway and the security event of the abandoned evolution pathway is injected to the another evolution pathway, and wherein the another evolution pathway is executed, wherein the monitoring and interaction system outputs the performance of the evolution pathways, and receives input for modifying the personal trait.

Referring to Fig. 21, a cross reference module analyzes a security system response for a given security event, decides whether a security system response is meaningful, pushes the security system response to a trait tagging module. The trait tagging module classifies the security system response according to personality types provided to the trait tagging module. A trait interaction module analyzes correlation among the personality traits, wherein the analysis result is passed to the security behavior cloud, wherein the security behavior cloud passes the analysis result to the monitoring and interaction system.

Referring to Figs. 22 - 36, the invention further provides a cyber threat intelligence identification, integration and analysis system comprising an intelligent selector that receives two parent forms, wherein the parent forms represent abstract constructs of data, and merges the two parent forms into a hybrid form; a mode module that defines the type of an algorithm in which the system is being used, wherein the intelligent selector decides parts to merge based on the type of the algorithm; and a static criteria module that receives input of customization data for how forms should be merged. The customization data comprises ranking prioritizations, desired ratios of data, and data to direct merging which is dependent on the type of algorithm defined by the mode module.

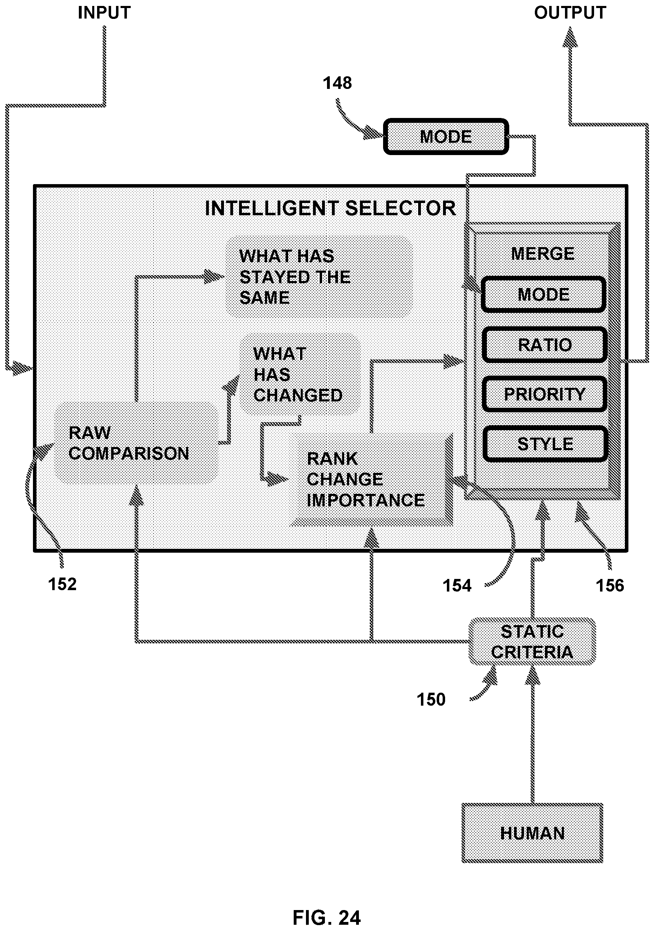

Referring to Fig. 24, the intelligent selector comprises a raw comparison module that performs raw comparison on the two parent forms based on the customization data provided by the static criteria module, wherein the raw comparison module outputs regarding changes and non-changes, wherein the intelligent selector ranks importance of the changes based on the customization data, wherein the changes and the non-changes are merged into a hybrid form based on the customization data of the static criteria and the type of the algorithm of the mode, wherein the merging comprises adjusting ratio distribution of data, importance of data, and relationship between data, wherein a ratio mode, a priority mode, and a style mode are preset in the system.

In the ratio mode, the amount of overlapping information is filtered through according to the ratio set by the Static Criteria, wherein if the ratio is set to large then a large amount of form data that has remained consistent will be merged into the hybrid form, wherein if the ratio is set to small then most of hybrid form will be constructed has a very different from its past iterations. In the priority mode, when both data sets compete to define a feature at the same place in the form, a prioritization process occurs to choose which features are made prominent and which are overlapped and hidden, wherein when only one trait can occupy in the hybrid form, a prioritization process occurs. In the style mode, the manner in which overlapping points are merged, wherein the Static Criteria and mode direct this module to prefer a certain merge over another.

Referring to Fig. 27, a trait makeup and indexed security Points of Interest (POI) are provided to query security events with their responses, wherein the POI's are stored in a security POI pool, and POI's are bridged with the trait index, wherein when a personality trait regarding a security issue is queried, relevant POI's are looked up in the POI pool and the relevant Event and Response storage are retrieved and returned, wherein in a POI interface module, personal traits are associated with POI's.

Referring to Fig. 28, the system further comprises a response parser, which comprises a cross reference module, in which that data describing a security event and a response to the security event are received; the security behavior module provides known POI, and input for a personality trait tagged to a security event is received; a trait tagging module that associates the security response with personal trait based on prescription of the personal trait and pattern correlation from past security behavior; and a trait interaction module that receives a trait makeup from the trait tagging module, and assesses its internal compatibility. The security event, response, trait are stored in the security behavior cloud.

A security ruleset is tested with an artificial exploit, wherein after the exploit is performed, result feedback module provides the result if the exploit worked and if it should be incorporated into the Exploit DB, wherein the information release module provides details to the creativity module for how the next exploit should look like, wherein information is merged between the information release module and the Exploit DB, wherein the exploit is performed as a batch in which all the evolutionary pathways get tested in parallel and simultaneously with the same exploit, wherein the creativity module produces a hybrid exploit that uses the strengths of prior exploits and avoids known weaknesses in exploits based on result by the information release module.

An oversight management module monitors developments in an exploit storage and usage, wherein exploits are produced/modified/removed by external inputs, wherein the exploits are stored along with known behavioral history that describes how the exploits performed in the past within certain conditions and exploit importance.

Referring to Fig. 31, the system further comprises a monitoring/interaction system, in which the creativity module produces the next generation for a pathway, wherein two input forms are compiled security behavior from the security behavior cloud, and variables from a security review module, wherein the resultant hybrid form is pushed to an iteration processor, wherein the iteration processor processes the hybrid form pushed from the creativity module, and assembles a new generation, and loads the new generation into the relevant evolutionary pathway, wherein the security review module receives report variables from the evolutionary pathway, and evaluates its security performance against the Artificial Security Threat (AST) system, outputs report for further review, and sends the report to the creativity module to iterate the next generation, wherein the security behavior cloud supplies relevant events and responses to the security review module, wherein the criteria is determined via a trait index query, wherein if a good performance evaluation is received, the security review module attempts to find a better exploit to break the exploit in the security behavior cloud, wherein the trait makeups are provided to the security behavior cloud and the security behavior cloud provides the trait makeups to the creativity module to guide how the generational ruleset should be composed.

Referring to Figs. 33 - 36, an automated growth guidance system intervenes between external control and the monitoring and interaction system, wherein a module type discerns what the desired module behavior is, and wherein forced feedback is a response by a module informing about its current condition every time it is given new instructions, wherein high level master variables are externally input to the static criteria, wherein the creativity module discerns a new desired result after being given the previous desired result and the actual result, wherein the actual result that comprises status and state of the controlled module is stored in the module tracking DB, wherein the module tracking DB is populated by the module and the creativity module, wherein the module tracking DB provides an input form to the creativity module which reflects the internally chosen growth pattern for the controlled module, wherein the creativity module pushes the new controls for the module to the module tracker and the module itself, wherein the modules are controlled in parallel, except that the module tracking operates in a single instance and is partitioned to deal with multiple modules simultaneously, wherein the feedback from the controlled module, which comprises information derived from actual module history, is stored in the realistic DB, wherein the theory DB contains theoretical controls for the module, which are provided by the creativity module, wherein if a control performs as expected then the same growth pattern is kept, and if a control performs odd, then alternate growth pattern is adopted.

Referring to Figs. 37-45, the system further comprises a malware predictive tracking algorithm, in which an existing malware is iterated to consider theoretical variances in makeup, wherein as the theoretical time progresses, the malware evolves interacting with the creativity module, wherein CATEGORY A represents confirmed malware threats with proven history of recognition and removal, CATEGORY B represents malware that the system knows exists but is unable to recognize nor remove with absolute confidence and CATEGORY C represents malware that is completely unknown to the system in every way possible, wherein the process starts from category A, wherein known malware is pushed to the creativity module to produce a hybrid form which includes potential variations that represent currently unknown malware, wherein then based on category B, a theoretical process represents the best estimate of what an unknown threat is like, wherein a process based on category C represents the actual threat that the system is unaware of and trying to predict, wherein a pattern is produced to represent the transition of a known and confirmed iteration, wherein the transition pattern is used to predict a currently unknown threat.

Referring to Figs. 57 - 66, the system further comprises a critical infrastructure protection & retribution through cloud & tiered information security (CIPR/CTIS) that comprises trusted platform security information synchronization service, wherein information flows between multiple security algorithms within a managed network & security services provider (MNSP), wherein all enterprise traffic within an enterprise intranet, extranet and internet are relayed to the MNSP cloud via VPN for realtime and retrospective security analysis, wherein in the retrospective security analysis, events and their security responses and traits are stored and indexed for future queries, conspiracy detection provides a routine background check for multiple security events and attempts to determine patterns and correlations, parallel evolutionary pathways are matured and selected, iterative generations adapt to the same AST batch, and the pathway with the best personality traits ends up resisting the security threats the most, wherein in the realtime security analysis, syntax module provides a framework for reading & writing computer code, purpose module uses syntax module to derive a purpose from code, & outputs such a purpose in its own complex purpose format, the enterprise network and database is cloned in a virtual environment, and sensitive data is replaced with mock (fake) data, signal mimicry provides a form of retribution used when the analytical conclusion of virtual obfuscation (protection) has been reached, wherein it checks that all the internal functions of a foreign code make sense, uses the syntax and purpose modules to reduce foreign code to a complex purpose format, detects code covertly embedded in data & transmission packets, wherein a mapped hierarchy of need & purpose is referenced to decide if foreign code fits in the overall objective of the system.

Referring to Figs. 67 - 72, the system further comprises a logically inferred zero-database a-priori realtime defense (LIZARD), in which every digital transfer within the enterprise system is relayed through an instance of LIZARD, wherein all outgoing/incoming information from outside the enterprise system are channeled via the LIZARD VPN and LIZARD cloud, wherein the iteration module (IM) uses the static core (SC) to syntactically modify the code base of dynamic shell (DS), wherein the modified version is stress tested in parallel with multiple and varying security scenarios by the artificial security threat (AST), wherein if LIZARD performs a low confidence decision, it relays relevant data to AST to improve future iterations of LIZARD, wherein AST creates a virtual testing environment with simulated security threats to enable the iteration process, wherein the static core of LIZARD derives logically necessary functions from initially simpler functions, converts arbitrary (generic) code which is understood directly by syntax module, and reduces code logic to simpler forms to produce a map of interconnected functions, wherein iteration expansion adds detail and complexity to evolve a simple goal into a complex purpose by referring to purpose associations, wherein a virtual obfuscation module confuses & restricts code by gradually & partially submerging them into a virtualized fake environment, wherein malware hypothetically bypasses the enterprise security system, LIZARD has a low confidence assessment of the intent/purpose of the incoming block of code, the questionable code is covertly allocated to an environment in which half of the data is intelligently mixed with mock (fake) data, the real data synchronizer intelligently selects data to be given to mixed environments & in what priority, and the mock data generator uses the real data synchronizer as a template for creating counterfeit & useless data.

Referring to Fig. 73, the system further comprises a clandestine machine intelligence & retribution through covert operations in cyberspace module, in which a sleeper double agent silently captures a copy of a sensitive file and the captured file is pushed outside of an enterprise network to a rogue destination server, wherein standard logs are generated which are delivered for real-time and long-term analysis, wherein real-time analysis performs a near instant recognition of the malicious activity to stop it before execution, and the long-term analysis recognizes the malicious behavior after more time to analyze.

Referring to Fig. 74 -78, the system further comprises a critical thinking, memory and perception algorithm that produces an emulation of the observer, and tests/compares all potential points of perception with such variations of observer emulations, wherein priority of perceptions chosen are selected according to weight in descending order, wherein the policy dictates the manner of selecting a cut off, wherein perceptions and relevant weight are stored with comparable variable format (CVF) as their index, wherein CVF derived from data enhanced logs is used as criteria in a database lookup of a perception storage, wherein a metric processing module reverse engineers the variables from selected pattern matching algorithm (SPMA) security response, wherein a part of the security response and its corresponding system metadata are used to replicate the original perception of the security response, wherein debugging and algorithm trace are separated into distinct categories using traditional syntax based information categorization, wherein the categories are used to organize and produce distinct security response with a correlation to security risks and subjects.

## Claims

1. A method for iterative intelligence growth comprising steps of:
a) receiving input of an initial ruleset;
b) receiving input of a plurality of personality trait, wherein the personal trait defines reactionary characteristics that should be exercised upon security events;
c) choosing a personal trait and assigning the personal trait to an evolution pathway;
d) repeating step c) for other evolution pathways for all of the personality traits; and
e) executing the evolution pathways, wherein each of the evolution pathways evolves a plurality of generations according to its given personality trait;
wherein the operation of each of the evolution pathways is virtually isolated from the operation of the other evolution pathways.

2. The method of claim 1, wherein the personal traits comprise:
i) a realist trait that uses CPU time based on degree of correlation;
ii) a unforgiving trait that uses CPU time based on whether there was a prior security incident for a given entity, which comprises an individual or a computer system;
iii) an opportunistic trait that uses CPU time based on availability of a corrective action; or
iv) a strict and precautious trait that uses CPU time based on little forgiveness or tolerance of assumption;
wherein the CPU time is measured in CPU cycles/second.

3. The method of claim 1, wherein a monitoring and interaction system injects security events from an artificial security threat (AST) system into the evolution pathways, and relays security responses associated with the security events from a security behavior cloud, wherein if any one of the evolution pathways reaches an indefinite state of being unable to solve the given security problem, the execution of the evolution pathway is abandoned, wherein the personality trait of the abandoned evolution pathway is modified, wherein the modified personality trait is assigned to another evolution pathway and the security event of the abandoned evolution pathway is injected to the another evolution pathway, and wherein the another evolution pathway is executed, wherein the monitoring and interaction system outputs the performance of the evolution pathways, and receives input for modifying the personal trait.

4. The method of claim 1, wherein a cross reference module analyzes a security system response for a given security event, decides whether a security system response is meaningful, pushes the security system response to a trait tagging module.

5. The method of claim 4, wherein the trait tagging module classifies the security system response according to personality types provided to the trait tagging module.

6. The method of claim 5, wherein a trait interaction module analyzes correlation among the personality traits, wherein the analysis result is passed to the security behavior cloud, wherein the security behavior cloud passes the analysis result to the monitoring and interaction system.

## Patentansprüche

1. Verfahren für iteratives Intelligenzwachstum, die folgenden Schritte umfassend:
a) Empfangen einer Eingabe eines ersten Regelwerks;
b) Empfangen einer Eingabe einer Vielzahl von Persönlichkeitseigenschaften, wobei die Persönlichkeitseigenschaften Reaktionsmerkmale definieren, die bei Sicherheitsereignissen trainiert werden sollten;
c) Auswählen einer Persönlichkeitseigenschaft und Zuordnen der Persönlichkeitseigenschaft zu einem Evolutionspfad;
d) Wiederholen von Schritt c) für andere Evolutionspfade für alle der Persönlichkeitseigenschaften; und
e) Ausführen der Evolutionspfade, wobei jeder der Evolutionspfade eine Vielzahl von Generationen gemäß der bestimmten Persönlichkeitseigenschaft entwickelt;
wobei der Vorgang jedes der Evolutionspfade von dem Vorgang der anderen Evolutionspfade nahezu isoliert ist.

2. Verfahren nach Anspruch 1, wobei die Persönlichkeitseigenschaften Folgendes umfassen:
i) eine realistische Eigenschaft, die CPU-Zeit auf Grundlage des Korrelationsgrades verwendet;
ii) eine nicht verzeihende Eigenschaft, die CPU-Zeit auf Grundlage dessen verwendet, ob ein vorheriger Sicherheitsvorfall für eine bestimmte Entität vorlag, die eine Person oder ein Computersystem umfasst;
iii) eine opportunistische Eigenschaft, die CPU-Zeit auf Grundlage einer Verfügbarkeit einer Korrekturmaßnahme verwendet; oder
iv) eine strenge oder vorsorgliche Eigenschaft, die CPU-Zeit auf Grundlage einer geringen Verzeihung oder Vermutungstoleranz verwendet;
wobei die CPU-Zeit in CPU-Zyklen/Sekunden gemessen wird.

3. Verfahren nach Anspruch 1, wobei ein Überwachungs- und Interaktionssystem Sicherheitsereignisse aus einem System künstlicher Sicherheitsbedrohungen (AST) in die Evolutionspfade einbringt und Sicherheitsreaktionen, die den Sicherheitsereignissen zugeordnet sind, aus einer Cloud für Sicherheitsverhalten übermittelt, wobei, wenn beliebige der Evolutionspfade einen unendlichen Zustand dafür erreichen, dass sie nicht in der Lage sind, das bestimmte Sicherheitsproblem zu lösen, die Ausführung des Evolutionspfades aufgegeben wird, wobei die Persönlichkeitseigenschaft des aufgegebenen Evolutionspfades modifiziert wird, wobei die modifizierte Persönlichkeitseigenschaft einem anderen Evolutionspfad zugeordnet wird und das Sicherheitsereignis des aufgegebenen Evolutionspfades in den anderen Evolutionspfad eingebracht wird, und wobei der andere Evolutionspfad ausgeführt wird, wobei das Überwachungs- und Interaktionssystem die Leistung der Evolutionspfade ausgibt und eine Eingabe zum Modifizieren der Persönlichkeitseigenschaft empfängt.

4. Verfahren nach Anspruch 1, wobei ein Querverweismodul eine Sicherheitssystemreaktion für ein bestimmtes Sicherheitsereignis analysiert, entscheidet, ob eine Sicherheitssystemreaktion bedeutungsvoll ist, die Sicherheitssystemreaktion in ein Eigenschaftenkennzeichnungsmodul überführt.

5. Verfahren nach Anspruch 4, wobei das Eigenschaftenkennzeichnungsmodul die Sicherheitssystemreaktion gemäß Persönlichkeitstypen, die dem Eigenschaftenkennzeichnungsmodul bereitgestellt werden, einstuft.

6. Verfahren nach Anspruch 5, wobei ein Eigenschafteninteraktionsmodul eine Korrelation unter den Persönlichkeitseigenschaften analysiert, wobei das Analyseergebnis an die Cloud für Sicherheitsverhalten übergeben wird, wobei die Cloud für Sicherheitsverhalten das Analyseergebnis an das Überwachungs- und Interaktionssystem übergibt.

## Revendications

1. Procédé de croissance itérative d'intelligence comprenant les étapes de :
a) réception d'une entrée d'un ensemble de règles initial ;
b) réception d'une entrée d'une pluralité de traits de personnalité, dans lequel le trait personnel définit des caractéristiques réactionnaires qui doivent être exercées lors d'événements de sécurité ;
c) choix d'un trait personnel et attribution du trait personnel à une voie d'évolution ;
d) répétition de l'étape c) pour d'autres voies d'évolution pour tous les traits de personnalité ; et
e) exécution des voies d'évolution, dans lequel chacune des voies d'évolution fait évoluer une pluralité de générations selon son trait de personnalité donné ;
dans lequel le fonctionnement de chacune des voies d'évolution est virtuellement isolé du fonctionnement des autres voies d'évolution.

2. Procédé selon la revendication 1, dans lequel les traits personnels comprennent :
i) un trait réaliste qui utilise le temps CPU en fonction du degré de corrélation ;
ii) un trait impitoyable qui utilise le temps CPU selon qu'il y a eu ou non un incident de sécurité antérieur pour une entité donnée, qui comprend un individu ou un système informatique ;
iii) un trait opportuniste qui utilise le temps CPU en fonction de la disponibilité d'une action corrective ; ou
iv) un trait strict et prudent qui utilise le temps CPU sur la base de peu de pardon ou de tolérance d'hypothèse ;
dans lequel le temps CPU est mesuré en cycles CPU/seconde.

3. Procédé selon la revendication 1, dans lequel un système de surveillance et d'interaction injecte des événements de sécurité à partir d'un système de menace de sécurité artificielle (AST) dans les voies d'évolution, et relaie les réponses de sécurité associées aux événements de sécurité à partir d'un nuage de comportement de sécurité, dans lequel si l'une quelconque des voies d'évolution atteint un état indéfini d'incapacité à résoudre le problème de sécurité donné, l'exécution de la voie d'évolution est abandonnée, dans lequel le trait de personnalité de la voie d'évolution abandonnée est modifié, dans lequel le trait de personnalité modifié est affecté à une autre voie d'évolution et l'événement de sécurité de la voie d'évolution abandonné est injecté dans l'autre voie d'évolution, et dans lequel l'autre voie d'évolution est exécutée, dans lequel le système de surveillance et d'interaction produit la performance des voies d'évolution, et reçoit une entrée pour modifier le trait personnel.

4. Procédé selon la revendication 1, dans lequel un module de références croisées analyse une réponse du système de sécurité pour un événement de sécurité donné, décide si une réponse du système de sécurité est significative, pousse la réponse du système de sécurité vers un module d'étiquetage de traits.

5. Procédé selon la revendication 4, dans lequel le module d'étiquetage de traits classe la réponse du système de sécurité selon les types de personnalité fournis au module d'étiquetage de traits.

6. Procédé selon la revendication 5, dans lequel un module d'interaction de traits analyse la corrélation entre les traits de personnalité, dans lequel le résultat d'analyse est transmis au nuage de comportement de sécurité, dans lequel le nuage de comportement de sécurité transmet le résultat d'analyse au système de surveillance et d'interaction.
